# EUROPEAN PATENT APPLICATION

(11) **EP 1 985 421 A2**
(43) Date of publication of application: **29.10.2008**
(21) Application number: 08008060.9
(22) Date of filing: 25.04.2008
(51) Int. Cl.: B26D 5/36, B26D 3/08

(54) **Tag label editing apparatus and tag label producing apparatus**

(30) Priority: 27.04.2007 JP 2007118853; 27.04.2007 JP 2007118854
(71) Applicant: Brother Kogyo Kabushiki Kaisha, Nagoya-shi, Aichi-ken 467-8561 (JP)
(72) Inventor: Moriyama, Satoru, Nagoya-shi Aichi-ken, 467-8561 (JP); Suzuki, Mikitoshi, Nagoya-shi Aichi-ken, 467-8561 (JP); Ikedo, Tatsuhiro, Nagoya-shi Aichi-ken, 467-8561 (JP); Osuka, Noriyuki, Nagoya-shi Aichi-ken, 467-8561 (JP); Yamaguchi, Koshiro, Nagoya-shi Aichi-ken, 467-8561 (JP)
(74) Representative: Materne, Jürgen

(57) **Abstract**

Apparatus (118) for producing an RFID label (T) by cutting at a predetermined full-cut position or partially cutting at a predetermined half-cutting position (HC2) in the thickness direction a base tape (101) wherein an RFID circuit element (To) comprising an IC circuit part (151) that stores information and a loop antenna (152) that transmits and receives information is disposed, wherein the Apparatus (118) determines based on the cartridge information of a tag cartridge (7) installed using a cartridge holder (6) a cuttable area (Sc) of the base tape (101) wherein at least one hill-cut position or half-cutting position can be set.

## Description

### TECHNICAL FIELD

The present invention relates to a tag label editing apparatus capable of editing print content when a tag label having an RFID circuit element comprising an IC circuit part configured to store information and a tag antenna configured to transmit and receive information is produced, and a tag label producing apparatus for producing tag labels.

### BACKGROUND ART

An RFID (Radio Frequency Identification) system that performs reading/writing between a small-sized RFID tag and a reader/writer (reading/writing apparatus) in a non-contact manner, for example, is known. For example, an RFID circuit element provided to a label-shaped RFID tag (RFID label) comprises an IC circuit part configured to store predetermined RFID tag information, and an antenna configured to transmit/receive information, connected to the IC circuit part. With such an arrangement, the reader/writer can access (read/write) the RFID tag information in the IC circuit part even if the RFID tag is soiled or arranged in a position where it cannot be seen. Such a technique has been put into practical use in a variety of fields such as asset management, office document control, breast pocket area nametags, and the like.

One such tag label producing apparatus configured to produce an RFID label having the above various usages is the apparatus described in JP, A, 2006-309557, for example. In this prior art, strip tag tape comprising built-in RIFD circuit elements at a predetermined interval is fed out from a tag tape roll and affixed to a print-receiving tape on the surface of which print information is printed by printing means (a thermal head), thereby forming tag tape with print. When this tag tape with print is transported on the feeding path, predetermined RFID tag information generated on the apparatus side is transmitted from the apparatus antenna to the antenna of the built-in RFID circuit element and serially written to the IC circuit part connected to the antenna. The label tape with print is then cut by a cutting means at a predetermined length, thereby producing RFID labels.

Furthermore, the cutting position cut by the cutting means is set by detection of a cutting mark provided per predetermined interval on the tag tape by detecting means (photo sensor).

### DISCLOSURE OF THE INVENTION

### Problem to be Solved by the Invention

In the above-described prior art, a cutting mark provided per predetermined interval on the tag tape is detected by the detecting means so as to set the cutting position. The tag tape is then cut at the preset certain interval (the disposed interval of the RFID circuit element, for example), thereby continually forming a tag tape of a certain length. Nevertheless, as application of the RFID tag continues to progress in a variety of fields as described above, the form of the RFID label to be produced continually becomes more and more diverse, resulting in the demand for the capability to change the length of the RFID label to be produced according to operator needs, rather than a fixed length.

In a case where the operator is permitted to arbitrarily set cutting positions during tag label production in accordance with such a demand, because a plurality of RFID circuit elements is disposed at a predetermined interval on the tag tape, the operator must set the cutting positions while taking care not to cut the RFID circuit elements so as to maintain product integrity. Thus, it cannot be said that such an arrangement is convenient for the operator.

Further, for example, in a case where a tag label having a label length shorter than the disposed interval of the RFID circuit element is produced, the tag label producing apparatus transports and feeds the tag tape to a predetermined position corresponding to the tag pitch when each tag label is produced so as to produce a margin section. While this margin section may also be used for an ordinary label not having an RFID circuit element by cutting the section at a desired length and printing desired printing thereto, such use of the margin section has not been considered in the above-described prior art. Thus, it cannot be said that such an arrangement is convenient for the operator.

It is therefore an object of the present invention to provide a tag label editing apparatus and tag label producing apparatus capable of improving operator convenience.

The present invention for achieving the above-described object is a tag label editing apparatus for producing a tag label by cutting at a predetermined cutting position or partially cutting at a predetermined half-cutting position in the thickness direction a tag tape wherein an RFID circuit element comprising an IC circuit part that stores information and a tag antenna that transmits and receives information is disposed so as to produce a tag label, the tag label editing apparatus comprising: tape attribute information acquisition means that acquires the tape attribute information of the tag tape provided in an RFID circuit element cartridge installed using a cartridge holder, and cutting/half-cutting area determining means that determines the cuttable/half-cuttable area of the tag tape wherein at least one cutting position or at least one half-cutting position can be set, based on the tape attribute information acquired by the tape attribute information acquisition means.

To produce a tag label, a tag tape comprising an RFID circuit element needs to be cut. At this time, for example, the cutting position is sometimes preferably set within an area having certain restrictions so as to avoid the RFID circuit element or perform cutting at a position a slight margin away from the position of the RFID circuit element, etc. Or, sometimes the tag tape is partially half cut in the thickness direction so as to make it easier to peel off the label main body of the tag label to be affixed to an object. In this case as well, similar to the above, the half-cutting position is sometimes preferably set in an area having a certain degree of restrictions. In the tag label editing apparatus of the invention of the present application, the cuttable/half-cuttable area (the area where a cutting position or half-cutting position can be set) is automatically determined according to the content of the tape attribute information, i.e., the tape width and the disposed interval of the RFID circuit element, etc. That is, the cuttable/half-cuttable area is automatically determined without the operator being particularly aware, thereby improving operator convenience.

### BRIEF DESCRIPTION OF THE DRAWINGS

FIG 1 is a system configuration diagram illustrating a label manufacturing system comprising the label producing apparatus of embodiment 1 of the present invention;
FIG 2 is a perspective view which shows the overall structure of the label producing apparatus;
FIG 3 is a perspective view which shows the structure of the internal modules within the label producing apparatus (with the loop antenna omitted);
FIG 4 is a plan view which shows the structure of the internal modules;
FIG 5 is an enlarged plan view schematically showing the detailed structure of a cartridge;
FIG 6 is a functional block diagram which shows the control system of the label producing apparatus;
FIG 7 is a functional block diagram which shows the functional configuration of an RFID circuit element for label production or information acquisition;
FIG 8 is a flowchart showing the control content executed by a control circuit of the PC when an RFID label is produced in the label manufacturing system;
FIG 9 is a diagram illustrating an example of a display executed on the PC in step S65 in a case where normal print mode is selected;
FIG 10 is a diagram illustrating an example of a display in a case where text is entered by the operator from the state shown in FIG 9;
FIG 11 is a diagram illustrating an example of a display in a case where the cutting position is edited by the operator;
FIG 12 is a diagram illustrating an example of a display executed in step S65 in a case where tag avoidance print mode is selected;
FIG 13 is a diagram illustrating an example of a display in a case where text is entered by the operator from the state shown in FIG 12;
FIG 14 is a diagram illustrating an example of a display executed in step S65 in a case where the cartridge loaded to the cartridge holder of the label producing apparatus is a regular cartridge not having an RFID circuit element;
FIG 15 is a diagram illustrating an example of a display in a case where text is entered by the operator from the state shown in FIG 14;
FIG 16 is a flowchart showing the control content executed by a control circuit of the label producing apparatus when an RFID label or regular label is produced;
FIG 17 is a flowchart illustrating in detail a procedure in step S200 shown in FIG 16;
FIG 18 is a flowchart illustrating in detail a procedure in step S400 shown in FIG 17;
FIG 19 is a flowchart illustrating in detail a procedure in step S300 shown in FIG 16;
FIG 20 is a top view and bottom view illustrating an example of the outer appearance of an RFID label formed after information has been written to (or read from) the RFID circuit element for label production and the tag label tape with print has been cut; FIG 20A is the top view, and FIG 20B is the bottom view;
FIG 21A is a diagram in which the cross-sectional view of the cross-section XXIA-XXIA' in FIG 20 is rotated 90°C in the counter-clockwise direction, and FIG 21B is a diagram in which the cross-sectional view of the cross-section XXIB-XXIB' in FIG 20 is rotated 90°C in the counter-clockwise direction;
FIG 22 is a flowchart showing the control content executed by a control circuit of the PC when an RFID label is produced in the label manufacturing system in a modification of a case where the display is switched when the cartridge is replaced;
FIG 23 is a diagram illustrating an example of a display in a case where the size of the text is reduced according to the reduction in size of the printable area;
FIG 24 is a diagram illustrating an example of a display in a case where the number of rows (or columns) is increased according to the number of text letters so as to dispose the entire text within the printable area without changing the text size;
FIG 25 is a diagram illustrating an example of a display in a case where there are two displayed labels;
FIG 26 is a diagram illustrating an example of a display in a case where there are two displayed labels;
FIG 27 is a plan view illustrating the detailed structure of the cartridge of a modification in a case where tape bonding is not performed;
FIG 28 is a plan view illustrating the detailed structure of the cartridge of a modification in a case where tape bonding is not performed;
FIG 29 is a flowchart showing the control content executed by a control circuit of the PC when an RFID label is produced in the label manufacturing system of embodiment 2 of the present invention;
FIG 30 is a diagram illustrating an example of a display in step S545 in a case where the cartridge loaded to the cartridge holder of the label producing apparatus is a tag cartridge;
FIG 31 is a diagram illustrating an example of a display in a case where text is entered by the operator from the state shown in FIG 30;
FIG 32 is a diagram illustrating an example of a display in a case where the cutting position is edited by the operator from the state shown in FIG 31;
FIG 33 is a diagram illustrating an example of a display in step S545 in a case where the cartridge loaded to the cartridge holder of the label producing apparatus is a regular cartridge;
FIG 34 is a diagram illustrating an example of a display in a case where text is entered by the operator from the state shown in FIG 33;
FIG 35 is a diagram illustrating an example of a display in a case where the cutting position is edited by the operator from the state shown in FIG 34;
FIG 36 is a top view and bottom view illustrating an example of the outer appearance of an RFID label formed after information has been written to (or read from) the RFID circuit element for label production and the label tape with print has been cut; FIG 36A is the top view, and FIG 36B is the bottom view;
FIG 37 is a diagram illustrating an example of a display executed on the display part in a case where there are two displayed labels;
FIG 38 is a diagram illustrating an example of a display executed on the display part in a case where there are two displayed labels;
FIG 39 is a flowchart showing the control content executed by a control circuit of the PC when an RFID label is produced in a modification of a case where the operator is informed when the cutting position is set outside the cuttable area;
FIG 40 is a flowchart showing the control content executed by a control circuit of the PC when an RFID label is produced in the label manufacturing system of embodiment 3 of the present invention;
FIG 41 is a diagram illustrating an example of a display executed in step S645 in a case where the cartridge loaded to the cartridge holder of the label producing apparatus is a tag cartridge;
FIG 42 is a diagram illustrating an example of a display in a case where text is entered by the operator from the state shown in FIG 41;
FIG 43 is a diagram illustrating an example of a display in a case where the rear half-cut position is set by the operator from the state shown in FIG 42;
FIG 44 is a diagram illustrating an example of a display executed in step S645 in a case where the cartridge loaded to the cartridge holder of the label producing apparatus is a regular cartridge;
FIG 45 is a diagram illustrating an example of a display in a case where text is entered by the operator from the state shown in FIG 44;
FIG 46 is a diagram illustrating an example of a display in a case where the rear half-cut position is set by the operator from the state shown in FIG 45;
FIG 47 is a top view and bottom view illustrating an example of the outer appearance of an RFID label formed after information has been written to (or read from) the RFID circuit element for label production and the label tape with print has been cut; FIG 47A is the top view, and FIG 47B is the bottom view;
FIG 48 is a flowchart showing the control content executed by a control circuit of the PC when an RFID label is produced in a modification of a case where overlap of the rear half-cut position and print is automatically avoided;
FIG 49 is a diagram illustrating an example of a display in a case where the print content and set rear half-cut position overlap;
FIG 50 is a diagram illustrating an example of a display in a case where the rear half-cut position is reset according to the print position in step S685 in a case where print priority mode has been set by the operator, and in a case where cutting priority mode has been set by the operator;
FIG. 51 is a diagram illustrating a display prior to text entry by the operator when normal print mode has been selected in the PC of embodiment 4 of the present invention;
FIG 52 is a diagram illustrating an example of a display in a case where text is entered by the operator from the state shown in FIG 51;
FIG 53 is a diagram illustrating a display prior to text entry by the operator when tag avoidance mode has been selected;
FIG 54 is a diagram illustrating an example of a display in a case where text is entered by the operator from the state shown in FIG 53;
FIG 55 is a diagram illustrating a display prior to text entry by the operator when a regular cartridge is loaded to the cartridge holder;
FIG 56 is a diagram illustrating an example of a display in a case where text is entered by the operator from the state shown in FIG 55;
FIG 57 is a flowchart illustrating the control content executed by the control circuit of the PC;
FIG 58 is a diagram illustrating a modification in which the margin distance is determined according to tape width;
FIG 59 is a diagram illustrating a modification in which the minimum value of the front and rear margin distance is determined by tape width only, and then subsequently corrected and reset in an increasing direction;
FIG 60 is a diagram illustrating a modification in which a rear half-cut line is established;
FIG 61 is a top view and bottom view illustrating an example of the outer appearance of a regular label that includes an encircling cutting line produced in first mode by a pre-cut cartridge, using the label editing apparatus of embodiment 5 of the present invention;
FIG 62 is a top view and bottom view illustrating an example of the outer appearance of a regular label produced in first mode (selected by operator intent) using a regular cartridge provided with a tape not having an encircling cutting line;
FIG 63 is a top view and bottom view illustrating an example of the outer appearance of a regular label produced in second mode (selected by operator intent) using a regular cartridge provided with a tape not having an encircling cutting line;
FIG 64 is a top view illustrating an example of the outer appearance in a case where a plurality of RFID labels is produced in batch form;
FIG 65 is a top view illustrating an example of the outer appearance in a case where a plurality of regular labels with encircling cutting lines is produced in batch form;
FIG 66 is a top view illustrating an example of the outer appearance in a case where a plurality of regular labels without encircling cutting lines is produced in batch form;
FIG 67 is a top view illustrating an example of the outer appearance in a case where a plurality of regular labels is produced in batch form;
FIG 68 is a flowchart showing the control content executed by a control circuit of the PC when an RFID label or regular label is produced using the label producing apparatus;
FIG 69 is a flowchart illustrating the control content executed by the control circuit of the label producing apparatus based on an editing operation via the PC;
FIG 70 is a top view illustrating an example of the outer appearance of the RFID label in a modification in which the rear half-cut line is omitted in the RFID label;
FIG 71 is a top view illustrating the outer appearance in a case where a plurality of RFID labels is continually produced in batch form;
FIG 72 is a flowchart illustrating the control procedure of the inspection processing executed by the control circuit provided in the label producing apparatus of embodiment 6 of the present invention during inspection execution;
FIG 73 is a flowchart illustrating in detail a procedure in step S3100 shown in FIG 72;
FIG 74 is a flowchart illustrating in detail a procedure in step S3200 shown in FIG 72;
FIG 75 is a flowchart illustrating in detail a procedure in step S3300 shown in FIG 72;
FIG 76 is a flowchart illustrating in detail a procedure in step S3400 shown in FIG 72;
FIG 77 is a diagram illustrating an example of a command table;
FIG 78 is an outer appearance diagram illustrating an example of an RFID tag comprising an RFID circuit element for information acquisition;
FIG 79 is a functional block diagram which shows the functional configuration of an RFID circuit element of an inspection RFID tag;
FIG 80 is a diagram illustrating a print example of a print item at the time "Print HELP" is executed, as an example of processing actually executed in the label producing apparatus by inspection processing execution;
FIG 81 is a diagram illustrating a print example of a print item at the time "Print medium information" is executed, as another example of processing actually executed in the label producing apparatus by inspection processing execution; and
FIG 82 is a diagram illustrating a command table that includes other examples of common commands.

### BEST MODE FOR CARRYING OUT THE INVENTION

The following describes embodiment 1 of the present invention with reference to accompanying drawings.

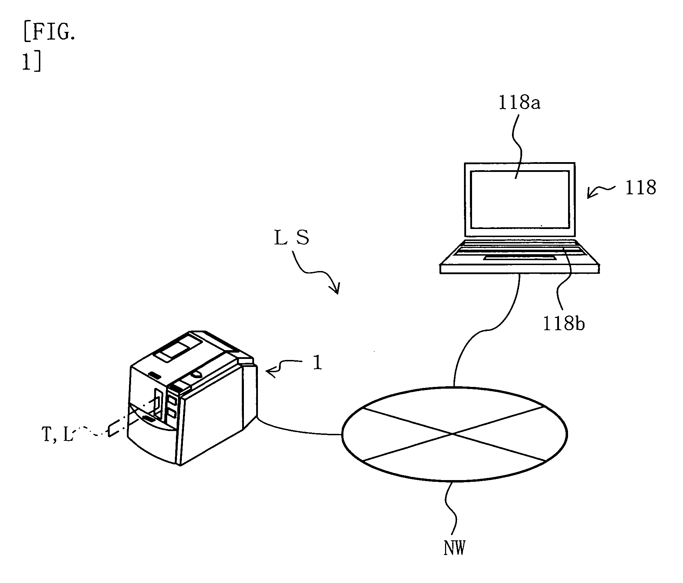

In the label manufacturing system LS shown in FIG 1, a label producing apparatus 1 of the present embodiment is connected to a PC 118 via a wired or wireless communication line NW. The PC 118 comprises a display part 118a such as a liquid crystal display, and an operation part 118b such as a keyboard and mouse, making it possible to edit the print content when producing a label (i.e., a label with print; that is, an RFID label T or regular label L) using the label producing apparatus 1.

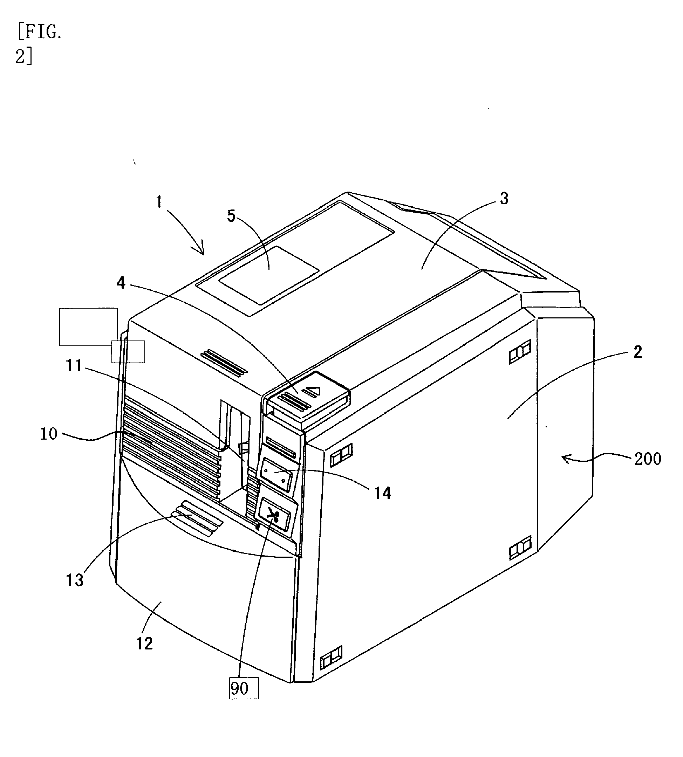

The label producing apparatus 1, as shown in FIG 2, produces an RFID label T with print using a base tape comprising an RFID circuit element To (hereinafter, suitably referred to as "RFID circuit element To for label production") in the apparatus, produces a regular label L using an regular base tape not comprising an RFID circuit element To, and reads (acquires) information from the RFID circuit element To (hereinafter suitably referred to as "RFID circuit element To for information acquisition") from outside the apparatus, based on the operation from the PC 118. The RFID information read function from outside this apparatus will be described in detail in embodiment 6 described later.

The label producing apparatus 1 comprises an apparatus main body 2 having a housing 200 of a substantially six-sided (substantially cubical) shape, and an opening/closing lid 3 provided on the upper surface of the apparatus main body 2 so as to freely open and close (or detach).

The housing 200 of the apparatus main body 2 comprises a front wall 10, which is positioned at the front of the apparatus (the left front side in FIG 2) and comprises a label discharging exit 11 configured to discharge an RFID label T (described later) produced within the apparatus main body 2, and a front lid 12 with a rotationally supported bottom edge that is provided below the label discharging exit 11 of the front wall 10.

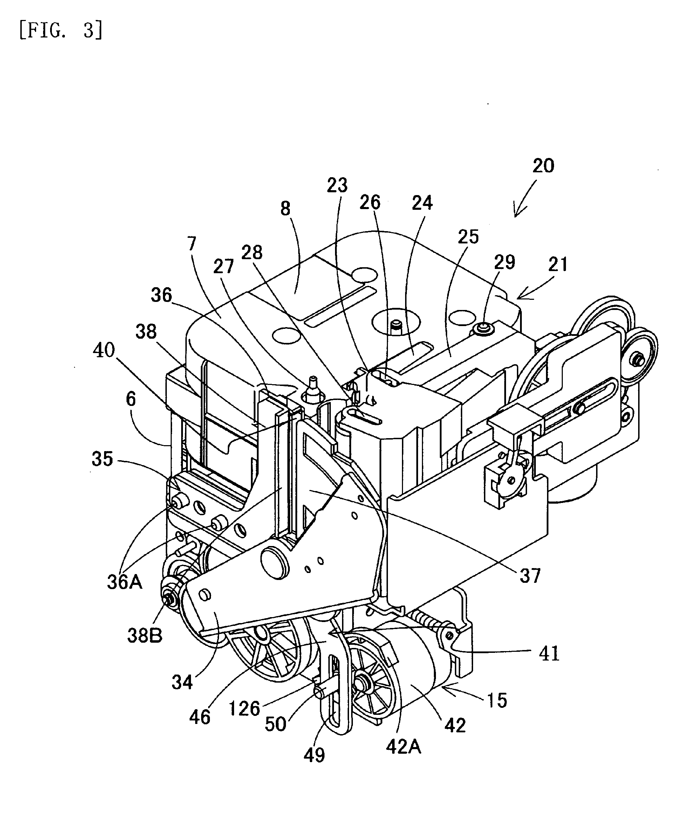

The front lid 12 comprises a pressing part 13, which is designed to release the front lid 12 forward when pressed upward. Further, on one edge of the front wall 10 is provided a power key 14 that turns the power source of the label producing apparatus 1 on and off. Below this power key 14 is provided a cutter driving key 90 configured to drive a cutting mechanism 15 (refer to FIG 3 described later) disposed within the apparatus main body 2 based on a manual operation performed by the operator.

The opening/closing lid 3 is rotatably supported by a shaft at the edge of the right rear side of FIG 2 of the apparatus main body 2, and is always biased in the release direction via a biasing member of a spring, etc. Then, the opening/closing lid 3 and apparatus main body 2 are unlocked by the pressing of an opening/closing button 4 disposed adjacent to the opening/closing lid 3 on the upper surface of the apparatus main body 2, and released by the action of the biasing member. Furthermore, in the center side area of the opening/closing lid 3 is provided an inspection window 5 covered by a transparent cover.

As shown in FIG 3, an internal module 20 is located in the interior of the label producing apparatus 1. The internal module 20 generally comprises a cartridge holder 6 configured to house a cartridge 7, a printing mechanism 21 comprising a print head (thermal head) 23, the cutting mechanism 15 comprising a fixed blade 40 and a movable blade 41, and a half-cutting module 35, which comprises a half-cutter 34 and is positioned downstream in the tape feeding direction from the fixed blade 40 and the movable blade 41.

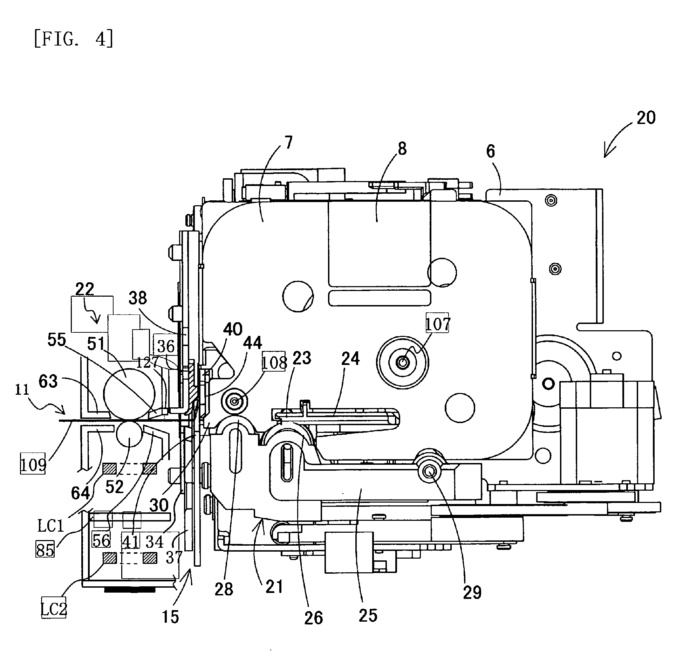

On the upper surface of the cartridge 7 is provided a tape identifying display part 8 configured to display the tape width, tape color, etc., of the base tape 101 built within the cartridge 7, for example. On the cartridge holder 6, a roller holder 25 is rotatably pivoted by a support shaft 29 and is designed so as to be switchable to a print position (contact position; refer to FIG 4 described later) or to a release position (break away position) by a switching mechanism. On this roller holder 25 are rotatably provided a platen roller 26 and a tape pressure roller 28. When the roller holder 25 switches to the print position, the platen roller 26 and the tape pressure roller 28 press against the print head 23 and a feeding roller 27.

The print head 23 comprises a great number of heating elements, and is installed on a head installation part 24 established on the cartridge holder 6.

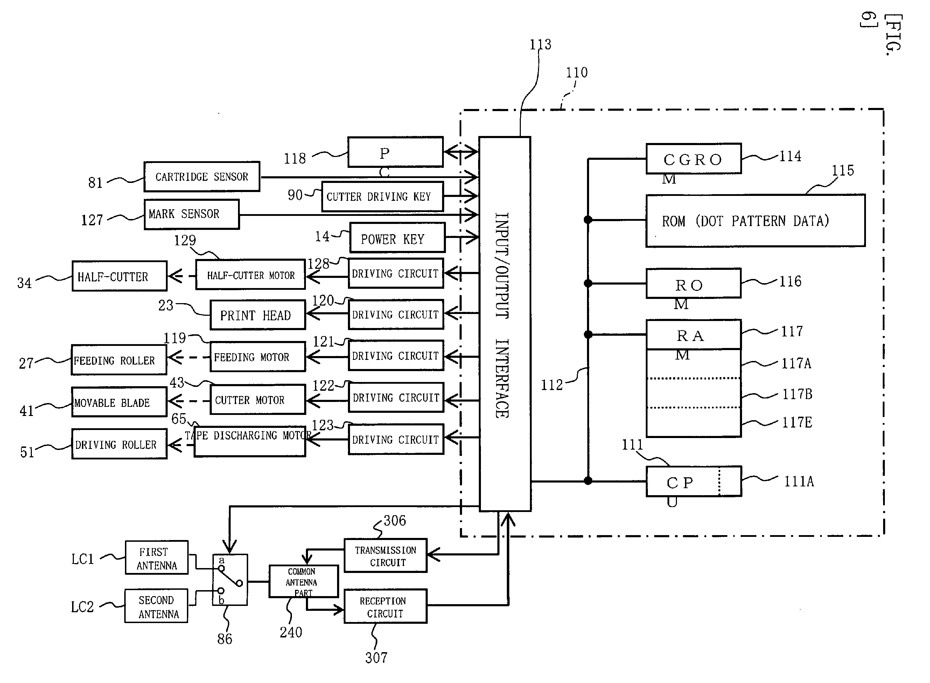

The cutting mechanism 15 comprises the fixed blade 40 and the movable blade 41 constructed using a metal material. The driving power of a cutter motor 43 (refer to FIG. 6 described later) is transmitted to a handle part 46 of the movable blade 41 via a cutter helical gear 42, a boss 50, and a long hole 49, causing the movable blade to rotate and perform cutting with the fixed blade 40. The switching status is detected by a micro switch 126 configured to switch based on the action of a cam 42A for the cutter helical gear.

The half-cutting module 35 is disposed opposite a receiving tray 38 and the half-cutter 34, and a first guide part 36 and a second guide part 37 are installed on a side plate 44 (refer to FIG 4 described later) by a guide fixing part 36A. The half-cutter 34 is rotated by a rotating force of a half-cutter motor 129 (refer to FIG. 6 described later) around a predetermined rotating support point (not shown). On the edge of the receiving tray 38 is formed a receiving surface 38B.

As shown in FIG 4, the cartridge holder 6 houses the cartridge 7 so that the orientation of the width direction of a label tape 109 with print discharged from a tape discharging part 30 of the cartridge 7 and further discharged from the discharging exit 11 is set in the vertical direction.

On the internal module 20 are provided a label discharging mechanism 22, a loop antenna LC1 for label production, and a loop antenna LC2 for information acquisition.

The loop antenna LC1 for label production comprises a communicable area on the inner side of the housing 200, and is configured to receive and transmit information from and to an RFID circuit element To for label production provided in the label tape 109 with print. The loop antenna LC2 for information acquisition comprises a communicable area on the outer side of the housing 200, and is configured to transmit and receive information from and to an RFID circuit element To for information acquisition positioned outside the housing 200. Then, between the loop antenna LC1 for label production and the loop antenna LC2 for information acquisition is provided a metal shield member 85, for example, configured to block magnetic flux produced from these loop antennas LC 1 and LC2.

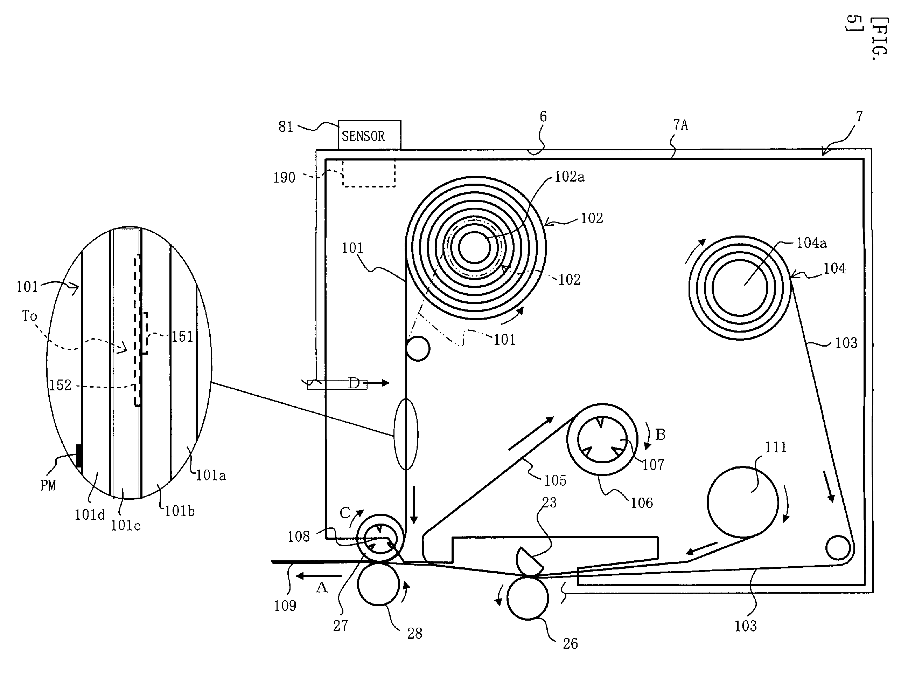

The label discharging mechanism 22 discharges the label tape 109 with print (in other words, the RFID label T; hereinafter the same) cut by the cutting mechanism 15 from the label discharging exit 11 (refer to FIG 2). That is, the label discharging mechanism 22 comprises a driving roller 51 configured to rotate by the driving power of a tape discharging motor 123 (refer to FIG 6 described later), a pressure roller 52 disposed opposite the driving roller 51 across from the label tape 109 with print, and a mark sensor 127 configured to detect an identification mark PM; refer to FIG 5 described later) provided on the label tape 109 with print. At this time, on the inside of the label discharging exit 11 are provided first guide walls 55 and 56 and second guide walls 63 and 64 configured to guide the label tape 109 with print to the label discharging exit 11 and the loop antenna LC1 for label production. The first guide walls 55 and 56 and the second guide walls 63 and 64 are each formed into an integrated unit and disposed so that they are separated at predetermined intervals at the discharging location of the label tape 109 with print (RFID label T) cut by the fixed blade 40 and the movable blade 41.

Furthermore, a feeding roller driving shaft 108 and a ribbon take-up roller driving shaft 107 provide feeding driving power to the label tape 109 with print and an ink ribbon 105 (described later), and are rotationally driven in coordination.

As shown in FIG 5, the cartridge 7 comprises a housing 7A, a first roll 102 (actually spiral in shape, but simply shown in a concentric shape in the figure), around which the strip base tape 101 is wound, and which is disposed within the housing 7A, a second roll 104 (actually spiral in shape, but simply shown in a concentric shape in the figure), around which a transparent cover film 103 is wound, with approximately the same width as that of the base tape 101, a ribbon supply side roll 211 configured to supply the ink ribbon 105 (heat transfer ribbon, which is not required in a case of employing a thermal tape), a ribbon take-up roller 106 configured to rewind the ribbon 105 after the printing, and the feeding roller 27 rotatably supported near the tape discharging part 30 of the cartridge 7. Furthermore, the base tape 101 constitutes the tag tape.

The feeding roller 27 is configured to affix the base tape 101 and the cover film 103 to each other by applying pressure and transport the label tape 109 with print thus formed in the direction of the arrow A in FIG 5 (i.e. functioning as a pressure roller as well).

The first roll 102 stores, in a manner such that it is wound around a reel member 102a, the base tape 101, which has a structure in which a plurality of RFID circuit elements To for label production are serially formed at a predetermined interval (fixed pitch) along the longitudinal direction. In this example, the base tape 101 has a four-layer structure (refer to the partially enlarged view in FIG 5) comprising an adhesive layer 101a formed of a suitable adhesive material, a colored base film 101b formed of PET (polyethylene terephthalate) or the like, an adhesive layer 101 c formed of a suitable adhesive material, and a separation sheet (separation material) 101d. The four layers of the base tape 101 are layered in that order from the side rolled to the inside (the right side in FIG 5) to the side corresponding to the opposite side (the left side in FIG 5).

A loop antenna 152 configured to transmit/receive information and constructed in a loop coil shape is provided on the back side of the base film 101b (on the left side in FIG 5) in an integrated manner in this example, and an IC circuit part 151 configured to store information is formed so that it is connected to the loop antenna 152, thereby constructing an RFID circuit element To.

The adhesive layer 101a is formed on the front of the base film 101 b (on the right side in FIG 5) for affixing the cover film 103 thereon at a later time. The separation sheet 101d is also affixed to the back surface (on the left side in FIG 5) of the base film 101b by the adhesive layer 101c for wrapping the RFID circuit element To for label production therein.

Note that the separation sheet 101d is peeled off when the RFID label T is affixed as a finished label-shaped product to a predetermined article or the like, thereby affixing the RFID label T to the article or the like by the adhesive layer 101c. A predetermined identification mark (a black identification mark in this example; a hole punched in the base tape 101 by laser processing, etc., or a hole finished using a Thompson mold is also possible) PM for feeding control is provided in advance in a predetermined location (a location farther forward than the front end of the loop antenna 152 on the forward direction side of the feeding direction in this example) corresponding to each RFID circuit element To for label production on the front surface of the separation sheet 101d. Note that the identification mark PM may be provided on the cover film 103 (on a thermal tape 101' or a base tape 101" in the modification described later), and detected using the same sensor as the mark sensor 127 so as to achieve the same feeding control, positioning control, cutting control, printing control, etc.

The second roll 104 has the cover film 103 wound around a reel member 104a. The cover film 103 fed out from the second roll 104 is pressed against the ribbon 105 driven by the ribbon supply side roll 211 and the ribbon take-up roller 106, which are disposed inward from the back side of the cover film 103 (i.e., the side of the cover film 103 which is affixed to the base tape 101), by the print head 23, such that the ribbon 105 is brought into close contact with the back side of the cover film 103.

The ribbon take-up roller 106 and the feeding roller 27 are rotationally driven in coordination by a driving power of a feeding motor 119 (refer to FIG 3 and FIG 6 described later), which is a pulse motor, for example, provided on the outside of each cartridge, that is transmitted to the ribbon take-up roller driving shaft 107 and the tape feeding roller driving shaft 108 via a gear mechanism (not shown). The print head 23 is disposed upstream in the feeding direction of the cover film 103 from the feeding roller 27.

In the configuration described above, the base tape 101 fed out from the first roll 102 is supplied to the feeding roller 27. The cover film 103 fed out from the second roll 104, in turn, is pressed against the ink ribbon 105 driven by the ribbon supply side roll 211 and the ribbon take-up roller 106, which are disposed inward from the back side of the cover film 103 (i.e., the side of the cover film 103 which is affixed to the base tape 101), by the print head 23, such that the ink ribbon 105 is brought into close contact with the back side of the cover film 103.

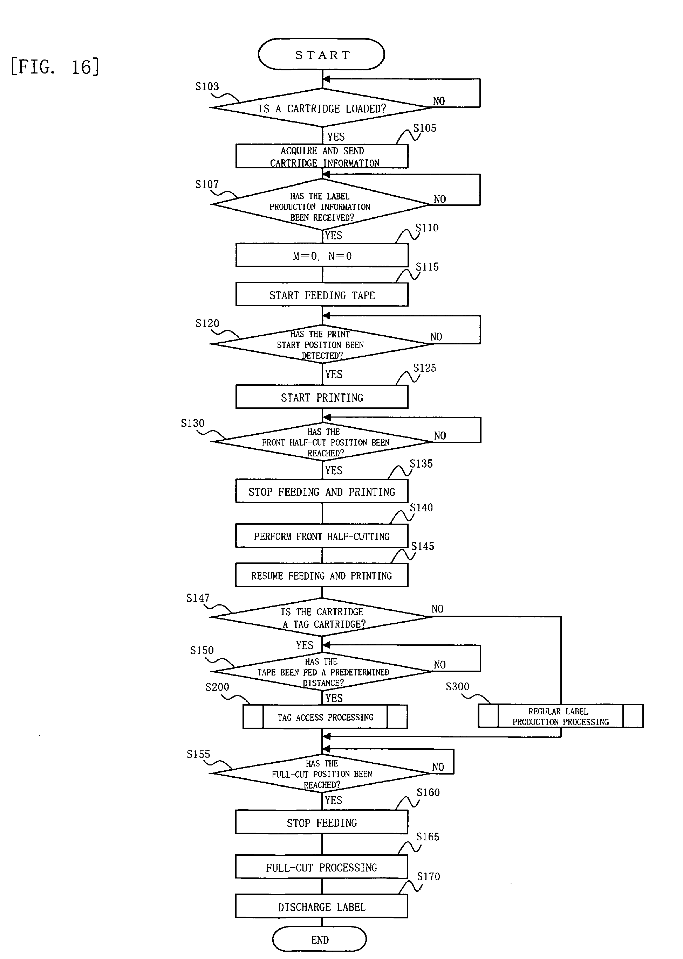

Then, when the cartridge 7 is loaded to the cartridge holder 6, and the roll holder 25 is moved from the release position to the print position, the cover film 103 and the ink ribbon 105 are sandwiched between the print head 23 and the platen roller 26, while the base tape 101 and the cover film 103 are sandwiched between the feeding roller 27 and the pressure roller 28. Subsequently, the ribbon take-up roller 106 and the feeding roller 27 are synchronously rotationally driven along the directions denoted by the arrow B and the arrow C, respectively, in FIG 5 by the driving force provided from the feeding motor 119. Furthermore, the tape feeding roller driving shaft 108, the pressure roller 28, and the platen roller 26 are connected to one another by a gear mechanism (not shown). With such an arrangement, upon driving the tape feeding roller driving shaft 108, the feeding roller 27, the pressure roller 28, and the platen roller 26 rotate, thereby feeding out the base tape 101 from the first roll 102 to the feeding roller 27 as described above. On the other hand, the cover film 103 is fed out from the second roll 104, and a plurality of heating elements of the print head 23 are powered by a print-head driving circuit 120 (refer to FIG 6 described later). As a result, printing is performed, thereby forming the print R (refer to FIG 16 described later), which corresponds to the RFID circuit element To for label production on the base tape 101 that is to be bonded, on the back side of the cover film 103. Then, the base tape 101 and the printed cover film 103 are affixed to each other by the feeding roller 27 and the pressure roller 28 so as to form a single tape, thereby forming the label tape 109 with print, which is then transported to outside the cartridge 7 by the tape discharging part 30 (refer to FIG 4). Subsequently, the ribbon take-up roller driving shaft 107 is driven to take up the ink ribbon 105, which has been used to print the print on the cover film 103, onto the ribbon take-up roller 106.

The housing 7A of the cartridge 7 comprises a detected part 190 (an identifier of a bumpy shape, for example), and a cartridge sensor 81 is provided at the location corresponding to the detected part 190 of the cartridge holder 6. This cartridge sensor 81 detects the loaded state of the cartridge 7 and the cartridge information (tape attribute information) related to the type of cartridge 7. The detection signal of the cartridge sensor 81 is inputted to a control circuit 110 (refer to FIG 6 described later), thereby enabling the control circuit 110 to acquire the loaded state of the cartridge 7 and the cartridge information. The cartridge information includes information such as whether or not the cartridge 7 has an RFID circuit element To and, if so, the disposed interval (hereinafter suitably referred to as "tag pitch") of the RFID circuit element To within the base tape 101, its disposed location, and the tape width of the base tape 101 (cover film 103).

The detection sensor 81 used is, for example, a sensor that performs mechanical detection such as a mechanical switch, a sensor that performs optical detection, or a sensor that performs magnetic detection. Note that a cartridge RFID circuit element may be provided in the housing 7A of the cartridge 7, and the RFID tag information may be read via wireless communication using a detection sensor comprising a reader function.

Then, after the information of the label tape 109 with print bonded and produced as described above is read and written to the RFID circuit element To for label production by the loop antenna LC 1 for label production, the label tape 109 with print is cut by the cutting mechanism 15 either automatically or by operating the cutter driving key 90 (refer to FIG 2), thereby forming the RFID label T. This RFID label T is subsequently discharged from the label discharging exit 11 (refer to FIG 2 and FIG 4) by the label discharging mechanism 22.

Note that while the above described in detail the structure of the tag cartridge (RFID circuit element cartridge) for producing an RFID label T comprising an RFID circuit element To, the same structure as that of the tag cartridge, excluding the point that the base tape does not comprise an RFID circuit element To, is used for the structure of a regular cartridge for producing a regular label L not comprising an RFID circuit element To. The following describes a case where a regular label is produced using a regular cartridge, using the same reference numerals as those for each part of the tag cartridge. Note that with the regular cartridge the identification mark PM of the base tape, cover film, etc., may be omitted. In such a case, the same feeding control, positioning control, cutting control, printing control, etc., may be performed using as a reference at the start of label production the full-cut position (or the resultant position after the tape has been fed a distance of a predetermined margin from the full-cut position) used at the time of the previous label production. In such a case, the amount of tape used is economized to the extent the feeding process performed when the identification mark PM is used as a reference (the process of feeding the tape until the next identification mark PM is detected at the start of label production) is not carried out.

A control system of the label producing apparatus 1 of the present embodiment is shown in FIG 6. Note that the arrow shown in the figure denotes an example of signal flow, but the signal flow direction is not limited thereto.

In FIG 6, the control circuit 110 is disposed on a control board (not shown) of the label producing apparatus 1.

On the control circuit 110 are provided a CPU 111 configured to control each device, an input/output interface 113 connected to the CPU 111 via a data bus 112, a CG ROM 114, ROMs 115 and 116, and a RAM 117.

The ROM 116 stores a print-head driving control program configured to read print buffer data in accordance with an operation input signal from the PC 118 so as to drive the print head 23, the feeding motor 119, and the tape discharging motor 65; a cutting driving control program configured to drive the cutter motor 43 so as to cut the label tape 109 with print; a tape discharging program configured to drive the tape discharging motor 65 so as to forcibly discharge the cut label tape 109 with print (i.e., the RFID label T) from the label discharging exit 11; a transmission program configured to generate and output to a transmission circuit access information such as an inquiry signal or write signal for the RFID circuit element To for label production or for information acquisition; a reception program configured to process response signals and the like inputted from a reception circuit; and various other programs required for controlling of the label producing apparatus 1. The CPU 111 performs various operations based on each such program stored in the ROM 116.

The RAM 117 is provided with a text memory 117A, a print buffer 117B, a parameter storage area 117E, etc. The text memory 117A stores text data inputted from the PC 118. The print buffer 117B stores a plurality of dot patterns for printing letters and symbols as well as the number of applied pulses, i.e., the amount of energy for forming each dot, as dot pattern data, and the print head 23 performs dot printing according to the dot pattern data stored in the print buffer 117B. The parameter storage area 117E stores information such as various operation data and the (previously described) read (acquired) tag identification information (tag ID) of the RFID circuit element To for information acquisition.

The input/output interface 113 connects to the PC 118, the print-head driving circuit 120 configured to drive the print head 23, a feeding motor driving circuit 121 configured to drive the feeding motor 119, a cutter motor driving circuit 122 configured to drive the cutter motor 43, a half-cutter motor driving circuit 128 configured to drive the half-cutter motor 129, the tape discharging motor driving circuit 123 configured to drive the tape discharging motor 65, a transmission circuit 306 configured to generate a carrier wave for accessing (reading from and writing to) the RFID circuit element To for label production or information acquisition via the loop antennas LC1 and LC2 and modulate the carrier wave based on the control signal inputted from the control circuit 110 so as to output an interrogation wave, a reception circuit 307 configured to demodulate the response wave received from the RFID circuit element To for label production or information acquisition via loop antennas LC1 and LC2 and output the demodulated response wave to the control circuit 110, the mark sensor 127 configured to detect the identification mark PM, the cartridge sensor 81 configured to detect the loaded state of the cartridge 7, and the cutter driving key 90.

The transmission circuit 306 and the reception circuit 307 are connected to the loop antennas LC 1 and LC2 via a common antenna device 240 and a switching circuit 86. The switching circuit 86 performs switching based on a control signal from the control circuit 110 so as to connect the common antenna device 240 to the loop antenna LC 1 for label production or the loop antenna LC2 for information acquisition. Specifically, the control circuit 110 controls the switching circuit 86 so as to connect the common antenna device 240 and the loop antenna LC1 for label production when an RFID label T is produced, and to connect the common antenna device 240 and the loop antenna LC2 for information acquisition when information is read from an external RFID circuit element To for information acquisition.

In such a control system with the control circuit 110 at its core, when character data and the like are inputted via the PC 118, the text (text data) is successively stored in the text memory 117A, the print head 23 is driven via the driving circuit 120 and each heating element is selectively exothermically driven according to the print dots of one line so as to print the dot pattern data stored in the print buffer 117B, while the feeding motor 119 synchronously controls the feeding of the tape via the driving circuit 121. The transmission circuit 306 controls the modulation of the carrier wave based on a control signal from the control circuit 110 and outputs an interrogation wave, and the reception circuit 307 processes the demodulated signal based on a control signal from the control circuit 110.

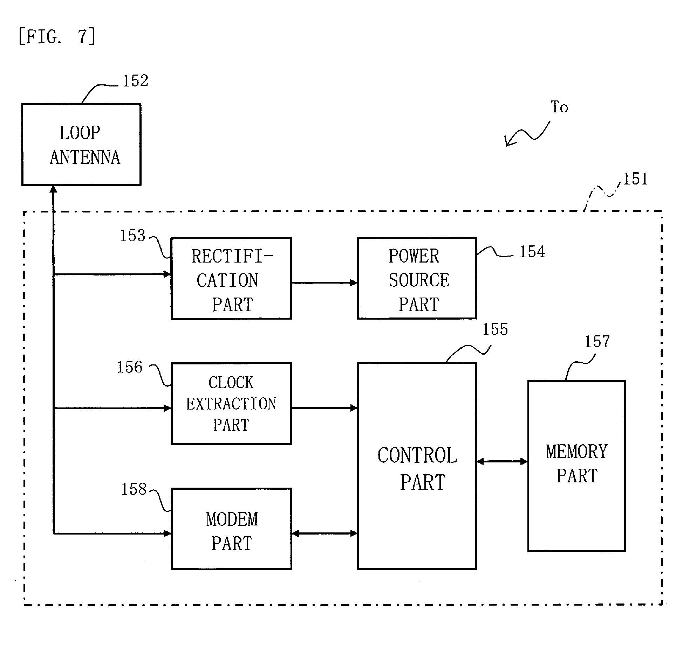

A functional configuration of the RFID circuit element To for label production or information acquisition is shown in FIG 7. Note that the arrow shown in the figure denotes an example of signal flow, but the signal flow direction is not limited thereto.

In FIG 7, the RFID circuit element To for label production or information acquisition comprises the loop antenna 152 configured to transmit/receive signals in a non-contact manner by magnetic induction with the loop antennas LC1 and LC2 of the label producing apparatus 1, and the IC circuit part 151 connected to the loop antenna 152.

The IC circuit part 151 comprises a rectification part 153 configured to rectify the interrogation wave received via the loop antenna 152, a power source part 154 configured to store the energy of the interrogation wave thus rectified by the rectification part 153 as a driving power source, a clock extraction part 156 configured to extract a clock signal from the interrogation wave thus received from the loop antenna 152 and supply the clock signal thus extracted to a control part 155, a memory part 157 configured to store a predetermined information signal, a modem part 158 connected to the loop antenna 152, and the control part 155 for controlling the operation of the RFID circuit element To via the rectification part 153, the clock extraction part 156, the modem part 158, etc.

The modem part 158 demodulates the communication signal from the loop antennas LC1 and LC2 of the label producing apparatus 1, which has been received via the loop antenna 152, and modulates, reflects, and returns as a response wave the interrogation wave received via the loop antenna 152 based on a response signal from the control part 155.

The control part 155 executes basic control, such as interpreting a received signal demodulated by the modem part 158, generating a response signal based on the information signal stored in the memory part 157, and returning the response signal from the modem part 158.

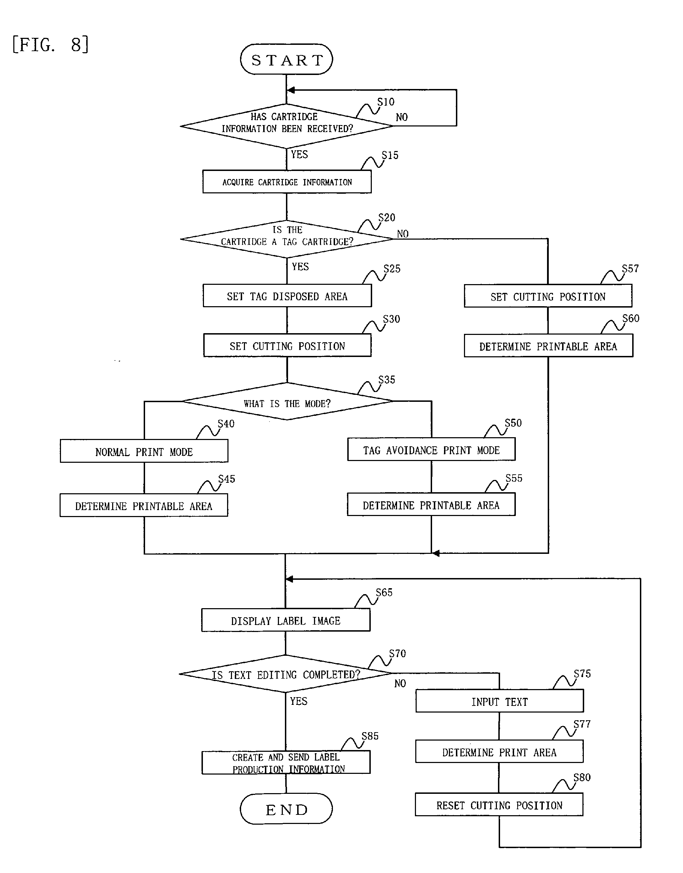

In order to carry out the above controls, the control procedure shown in FIG. 8 is executed by a control circuit 130 (not shown) of the PC 118. Note that the control circuit 130 starts this flow when, for example, the operator enters a suitable operation that instructs the system to start label editing.

First, in step S 10, a decision is made as to whether or not cartridge information detected by the cartridge sensor 81 of the label producing apparatus 1 and acquired by the control circuit 110 has been received via the communication line NW from the (control circuit 110 of the) label producing apparatus 1. This step is repeated until the information is received and, once the information has been received, the decision is made that the condition is satisfied and the flow proceeds to the next step S 15.

In step S15, the cartridge information related to the type of the cartridge 7 loaded to the cartridge holder 6 of the label producing apparatus 1 is acquired based on the signal received from the label producing apparatus 1 in the step S10. Note that the cartridge information includes, as described above, information such as whether or not the loaded cartridge 7 has an RFID circuit element To and, if so, the disposed interval of the RFID circuit element To within the base tape 101, its disposed location, and the tape width of the base tape 101 (cover film 103).

In the next step S20, the decision is made as to whether the cartridge 7 loaded to the cartridge holder 6 of the label producing apparatus 1 is a tag cartridge for producing an RFID label T having an RFID circuit element To, or a regular cartridge for producing a regular label not having an RFID circuit element To. In a case where the cartridge is a tag cartridge, the decision is made that the condition is satisfied and the flow proceeds to the next step S25.

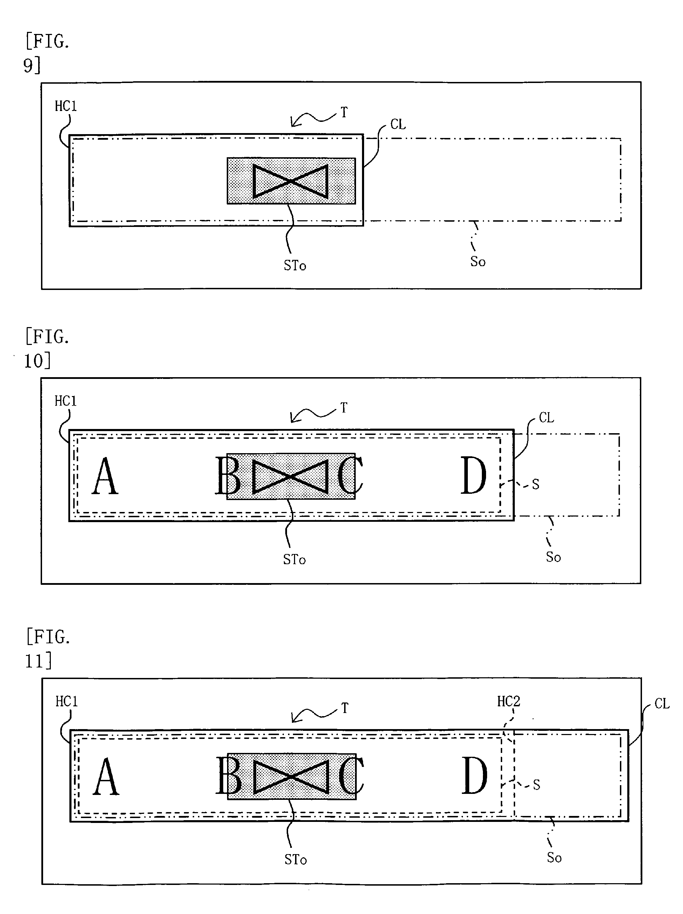

In step S25, the disposed area STo (refer to FIG 9, etc., described later) of the RFID circuit element To within the base tape 101 is set based on the disposed position information of the RFID circuit element To in the cartridge information acquired in the step S 15.

In the next step S30, the cutting position is set. Here, the cutting position refers to the position of the front half-cut line HC1 (hereinafter suitably referred to as "front half-cut position"; refer to FIG 9, etc., described later), and the position of the cutting line CL (hereinafter suitably referred to as "full-cut position"; refer to FIG 9, etc., described later). The half-cut position is different from the full-cut position, and is predetermined as a certain position from the front end of the label tape 109 with print (in other words, the full-cut position of the cutting line CL at the time of the previous label production, or a corresponding reference position; hereinafter the same) according to the type of the cartridge 7 (whether or not the cartridge is a tag cartridge, the tape width, etc.), regardless of print content. Thus, the corresponding front half-cut position is set based on the cartridge information acquired in the step S15. The full-cut position is a variable distance away from the half-cut position, within a range from a minimum value (hereinafter suitably referred to as "minimum full-cut position") to a maximum value (hereinafter suitably referred to as "maximum full-cut position") according to print content, and here is initially set to the minimum full-cut position where the distance is the minimum value. This minimum full-cut position is uniquely determined according to the type of the cartridge 7, and is set at the rear end of the disposed area STo of the RFID circuit element To (specifically, a position a predetermined margin away from that end; for example, about 53.5mm from the front end of the label tape 109 with print; the position of the cutting line CL in FIG 9 described later), based on the disposed position information of the RFID circuit element To in the cartridge information acquired in the step S15. The above-described maximum full-cut position is also uniquely determined according to the cartridge 7, and is positioned away from the front end of the label tape 109 with print by a distance equivalent to the tag pitch (in other words, the distance between the cutting line CL and the cutting line CL; the length of one RFID label T) in the cartridge information acquired in the step S 15.

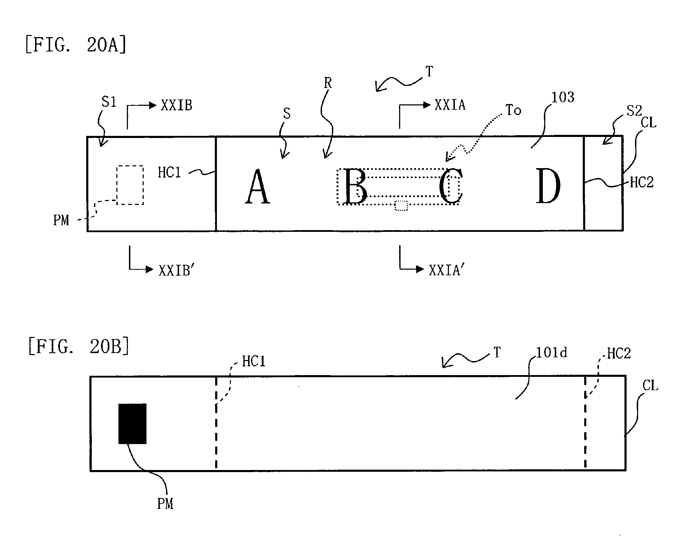

The above-described front half-cut line HC1 is the half-cutting area (i.e., half-cut position, hereinafter the same) formed by rotating the half-cutter 34 so as to cut the cover film 103, the adhesive layer 101a, the base film 101b, and the adhesive layer 101c of the label tape 109 with print, while still retaining the separation sheet 101d (refer to FIG 20 described later). With this arrangement, the section other than the separation sheet 101d (the cover film 103, the adhesive layer 101a, the base film 101b, and the adhesive layer 101c) of the section on the cutting line CL side from the front half-cut line HC1 (i.e., the label main body with print, including the print area S; the section from the front half-cut line HC1 to the rear half-cut line HC2 when a rear half-cut line HC2 also exists) is peeled away from the separation sheet 101 d. Then, the operator affixes the peeled-away section to the object to which the section is to be affixed.

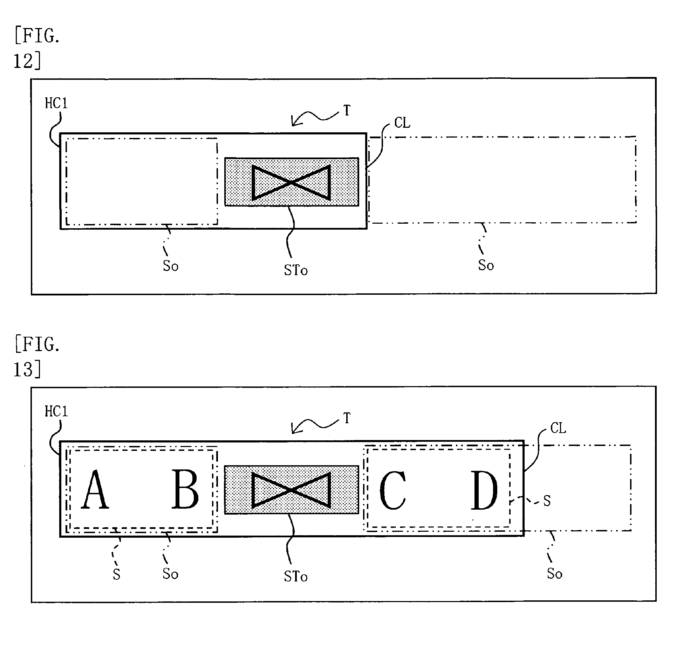

In the next step S35, the decision is made as to whether the operator selected normal print mode, which determines the printable area So regardless of the disposed position of the RFID circuit element To, or tag avoidance print mode, which determines the printable area So so that the area does not overlap with the disposed area STo of the RFID circuit element To in the label thickness direction, based on the signal inputted from the operation part 118b. In a case where the operator selects normal print mode, the mode transitions to normal print mode in step S40 and, in the next step S45, the printable area So is determined so that the area falls between the front half-cut position and the maximum full-cut position, based on the cartridge information (tag pitch, tape width, etc.) acquired in the step S15 and the front half-cut position set in the step S30, regardless of the disposed position STo of the RFID circuit element To (refer to FIG 9, etc., described later). On the other hand, in a case where the operator selects tag avoidance print mode, the mode transitions to tag avoidance print mode in step S50 and, in the next step S55, the printable area So is determined so that the area falls between the front half-cut position and the maximum full-cut position and does not overlap with the tag disposed area STo in the label thickness direction, based on the cartridge information (tag pitch, tape width, etc.), the front half-cut position set in the step S30, and the tag disposed area STo set in the step S25 (refer to FIG 12, etc., described later). Then, the flow proceeds to the next step S65.

In the previous step S20, in a case where the cartridge 7 loaded to the cartridge holder 6 of the label producing apparatus 1 is a regular cartridge, the decision is made that the condition is not satisfied, and the flow proceeds to step S57.

In step S57, the cutting position is set. Here, similar to the step S30, the cutting position refers to the front half-cut position and the full-cut position. As previously described, the front half-cut position is set to a certain position from the front end of the label tape 109 with print based on the cartridge information acquired in the step S 15. The full-cut position varies within a range from the minimum full-cut position to the maximum full-cut position according to print content as previously described, and here is initially set so that the previously described distance is equivalent to the predetermined minimum value (for example, about 4mm from the front end of the label tape 109 with print). The distance to the maximum full-cut position in this case does not have a specific upper limit (i.e., has an undefined length), but an upper limit may be established according to the functional restrictions of the label producing apparatus 1, for example (1000mm or less from the front end of the label tape 109 with print, for example).

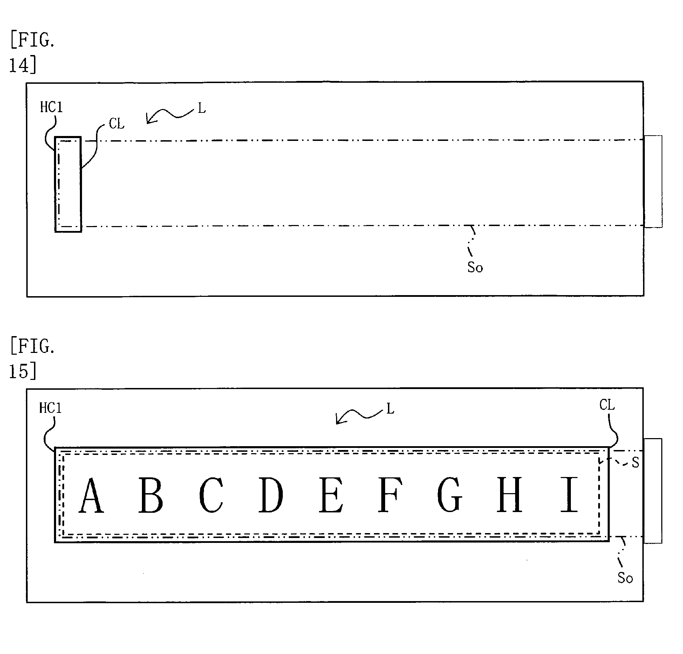

In the next step S60, the printable area So is determined so that the area falls within the tape width, using the front half-cut position as one end, based on the cartridge information (tape width, etc.) and the front half-cut position set in the step S57 (refer to FIG 14, etc., described later). Thus, the length in the tape longitudinal direction of the printable area So in this case is undefined. Note that in a case where an upper limit of the distance to the full-cut position is established due to functional restrictions, etc., of the label producing apparatus 1, for example, as described above, a corresponding maximum value of the length in the tape longitudinal direction of the printable area So may be set. Then, the flow proceeds to the next step S65.

In step S65, a display signal is outputted to the display part 118a and an image of the RFID label T (or regular label L) is displayed (refer to FIG 9 to FIG 15 described later). This display includes the tag disposed area STo set in the step S25, the front half-cut line HC1 position and the cutting line CL (minimum full-cut position) that set the positions in the step S30, and (in a case where text is entered in step S75 described later) the entered text and reset cutting position (here, full-cut position) . Here, the printable area determined in the step S45, step S55, or step S60 is not displayed (note, however, display is possible). In a case where the loaded cartridge 7 is a regular cartridge, the tag disposed area is not displayed (refer to FIG 14, etc., described later).

In step S70, the decision is made as to whether or not text editing by the operator has been completed, according to whether or not the operation signal of the label production start instruction has been inputted from the operation part 118b, for example. In a case where text entry has not been completed, the decision is made that the condition is not satisfied, and the flow proceeds to step S75.

In step S75, the text information entered via the operation part 118b by the operator is inputted.

In the next step S77, the print area S corresponding to the text information inputted in the step S75 is determined so that the area falls within the printable area determined in the previous step S45, step S55, and step S60 (refer to FIG 10, FIG 13, FIG 15, etc., described later).

In the next step S80, the cutting position is reset based on the print area S determined in the step S77. Here, the cutting position refers to the minimum full-cut position set in the step S30 or step S57. This full-cut position is reset in a case where the rear end position of the print area S determined in the step S77 based on the text information input of the step S75 extends beyond the minimum full-cut position set above. That is, in a case where an RFID label T is produced using a tag cartridge, because the minimum full-cut position is set to the rear end of the disposed area STo of the RFID circuit element To as described above, the full-cut position is not reset until the rear end position of the print area S reaches the minimum full-cut position as a result of text input, and is then reset according to that rear end position (according to the addition of a distance of a predetermined margin to the rear end position). On the other hand, in a case where a regular label L is produced using a regular cartridge, because the minimum full-cut position is set near the tape front end (for example, about 4mm from the front end of the label tape 109 with print) as described above, the full-cut position is reset according to the rear end position of the print area S when text is inputted. Then, the flow returns to the previous step S65.

In the step S70, in a case where text entry is completed, the decision is made that the condition is satisfied and the flow proceeds to the next step S85. In step S85, label production information, including setting information such as the front half-cut position and the full-cut position set in the above step, print data based on text information entered by the operator, and communication information (write data) of the RFID circuit element To for label production in a case where an RFID label T is to be produced, is created. The created label production information is then sent to the control circuit 110 of the label producing apparatus 1 via the communication line NW With the above, the flow ends.

The present invention is not limited to the procedure indicated in the above flow. Steps may add or removed or the order of the steps may be changed without departing from the spirit and scope of the present invention. For example, after the label image is displayed on the display part 118a in step S65, the operator may edit the full-cut position or the half-cut position via the operation part 118b (i.e., the full-cut position may be changed or a rear half-cut position may be inserted by operator input). In this case, the full-cut position may be changed within the range from the minimum full-cut position to the maximum full-cut position, and a rear half-cut position may be inserted within the range from the minimum full-cut position to the maximum full-cut position (refer to FIG 11 described later). Furthermore, while the operator is editing text, i.e., while the cycle of the step S65 to step S80 is repeated, the steps of step S35 to step S55 may be added to enable mode switching during text editing. With this arrangement, the operator can edit the text while comparing the label images of each mode.

An example of a display executed on the display part 118a of the PC 118 in the step S65 in a case where normal print mode is selected is shown in FIG 9. FIG 9 shows the display prior to text entry by the operator.

In FIG 9, the image of the RFID label T to be produced, including the front half-cut line HC1, the cutting line CL (minimum full-cut position) set to minimize distance, and the disposed area STo of the RFID circuit element To, is shown on the display part 118a. Here, as previously described, the printable area So is determined so that the area falls between the front half-cut position and the maximum full-cut position, regardless of the disposed position of the RFID circuit element To, but is not displayed on the display part 118a (although display is possible).

While only the rear end side (right side in the figure) from the front half-cut position of the RFID label T to be produced is displayed and the front end side (the left side in the figure) is not displayed here, the front end side from the front half-cut position may be displayed as well (the same holds true for FIG 10 to FIG 15 described later).

An example of a display executed on the display part 118a of the PC 118 in a case where text (here, letters "ABCD") is entered by the operator from the state of FIG 9 is shown in FIG 10.

In FIG. 10, the image of the RIFD label T to be produced, including the front half-cut line HC1, the reset cutting line CL, the disposed area STo of the RFID circuit element To, and the text data (print image) disposed within the print area S, is displayed on the display part 118a. As shown in this figure, the print area S is determined according to the content of the entered text so that the area falls within the determined printable area So. Then, when the position of the rear end of the print area S extends beyond the minimum full-cut position (the position of the cutting line CL shown in FIG 9), the full-cut position is reset according to that rear end position and the cutting line CL is displayed in the new position. As a result, the cutting line CL moves to the rear end side (the right side in the figure) in accordance with text input. The RFID label T shown in FIG 10 is produced in normal print mode, and is therefore displayed with the print image and disposed area STo overlapping.

An example of a display executed on the display part 118a of the PC 118 in a case where the operator has edited the above-described cutting position, is shown in FIG 11. Here, the cutting line CL is changed from the state shown in FIG 10 to the maximum full-cut position, and a rear half-cut line HC2 is inserted in its place (at a position corresponding to the cutting line CL of FIG 10).

An example of a display executed on the display part 118a of the PC 118 in the step S65 in a case where tag avoidance print mode is selected, is shown in FIG. 12. FIG 12 shows the display prior to text entry by the operator.

In FIG 12, the image of the RFID label T to be produced, including the front half-cut line HC1, the cutting line CL (minimum full-cut position) set to minimize distance, and the disposed area STo of the RFID circuit element To, is shown on the display part 118a. That is, this display is the same as that shown in the previously described FIG 9. Here, as previously described, the printable area So is determined so that the area falls between the front half-cut position and the maximum full-cut position and does not overlap with the disposed area of the RFID circuit element To.

An example of a display executed on the display part 118a of the PC 118 in a case where text (here, letters "ABCD") is entered by the operator from the state of FIG 12, is shown in FIG 13.

In FIG 13, the image of the RIFD label T to be produced, including the front half-cut line HC1, the cutting line CL in a reset position, the disposed area STo of the RFID circuit element To, and the print area S of the text data (print image), is displayed on the display part 118a. As shown in this figure, the print area S is determined according to the inputted text so that the area falls within the determined printable area So. Then, when the position of the rear end of that print area S extends beyond the minimum full-cut position (the position of the cutting line CL shown in FIG 12), the full-cut position is reset according to that rear end position and the cutting line CL is displayed in the new position. As a result, the cutting line CL moves to the rear end side (the right side in the figure) in accordance with text entry. The RFID label T shown in FIG 13 is produced in tag avoidance print mode, and thus the printable area So is determined (on both the left and right sides) so that the area does not overlap with the tag disposed area STo. Thus, as a result of the print area S being determined so that the area falls within the printable area So, the display is executed in such a manner that the print image and tag disposed area STo do not overlap.

While the printable area So is disposed on both the left and right sides of the tag disposed area STo in the example illustrated here, the present invention is not limited thereto and the printable area So may be disposed above and below the tag disposed area STo.

An example of a display executed on the display part 118a of the PC 118 in the step S65 in a case where the cartridge 7 loaded to the cartridge holder 6 of the label producing apparatus 1 is a regular cartridge not having an RFID circuit element To, is shown in FIG 14.

In FIG 14, the image of the regular label L to be produced, including the front half-cut line HC 1 and the cutting line CL (minimum full-cut position) set to a position that minimizes distance, is displayed on the display part 118a. Here, as previously described, the printable area So is determined so that it falls within the tape width and has an undefined length, with the front half-cut position serving as one end.

An example of a display executed on the display part 118a of the PC 118 in a case where text (here, letters "ABCDEFGHI") is entered by the operator from the state of FIG 14 is shown in FIG 15.

In FIG 15, the image of the regular label L to be produced, including the half-cut line HC1, the cutting line CL in a reset position, and the print area S that includes the text data (print image), is displayed. As shown in this figure, the print area S is determined according to the content of the entered text so that the area falls within the determined printable area So. Then, the full-cut position is reset according to the position of the rear end of that print area S, and the cutting line CL is displayed in the new position. As a result, the cutting line CL moves to the rear end side (the right side in the figure) in accordance with text entry.

The control content shown in FIG 16 is executed by the control circuit 110 of the label producing apparatus 1 when an RFID label T is produced in the label manufacturing system LS. The control circuit 110 starts the flow when, for example, the operator enters a suitable operation that instructs the system to start tag label editing on the PC 118, and that instruction signal is inputted from the PC 118. The following is an example of the production of an RFID label T in a case where the operator performs the editing shown in the previously described FIG 11 on the PC 118.

First, in step S103, the decision is made as to whether or not the cartridge 7 is loaded to the cartridge holder 6, based on a detection signal from the cartridge sensor 81. This step is repeated until the cartridge 7 is loaded and, once the cartridge 7 is loaded, the decision is made that the condition is satisfied and the flow proceeds to the next step S105.

In step S105, the cartridge information related to the loaded cartridge 7 is acquired based on the detection signal from the cartridge sensor 81, and the acquired cartridge information is transmitted to the PC 118 via the communication line NW.

In the next step S107, the decision is made as to whether or not the label production information has been received from the PC 118 via the communication line NW. This label production information, as described above, includes setting information such as the front and rear half-cut positions and full-cut position, print data based on text information entered by the operator, and communication information (write data) of the RFID circuit element To for label production in a case where an RFID label T is to be produced. This step is repeated until the information is received and, once the information is received, the decision is made that the condition is satisfied and the flow proceeds to the next step S110.

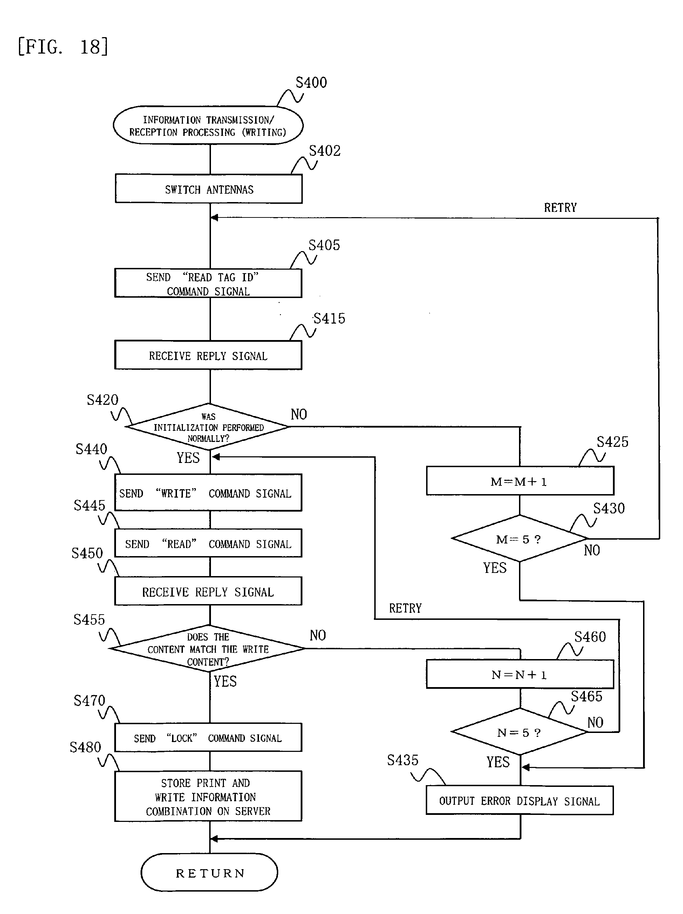

Next, in step S110, in a case where there is no response from the RFID circuit element To for label production when communication is performed from the loop antenna LC1 for label production to the RFID circuit element To for label production, variables M and N for counting the number of communication retries (the access retry count) are initialized to 0 (refer to FIG 18 described later).

Subsequently, the flow proceeds to step S 115, wherein a control signal is outputted to the feeding motor driving circuit 121 via the input/output interface 113, and the feeding roller 27 and the ribbon take-up roller 106 are rotationally driven by the driving force of the feeding motor 119. Furthermore, a control signal is outputted to the tape discharging motor 65 via the tape discharging motor driving circuit 123, and the driving roller 51 is rotationally driven. With this arrangement, the base tape 101 is fed out from the first roll 102 and supplied to the feeding roller 27, the cover film 103 is fed out from the second roll 104, and the base tape 101 and the cover film 103 are affixed to each other by the feeding roller 27 and the sub-roller 109 so as to form a single tape, thereby forming the label tape 109 with print, which is then transported.

Next, in step S120, the decision is made as to whether or not the identifier PM of the base tape 101 has been detected (in other words, whether or not the cover film 103 has reached the print start position of the print head 23), based on the detection signal of the mark detection sensor 127 inputted via the input/output interface 113. This step is repeated until the identifier PM is detected and, once the identifier PM is detected, the decision is made that the condition is satisfied, and the flow proceeds to the next step S125.

In step S125, a control signal is outputted to the print-head driving circuit 120 via the input/output interface 113 so as to supply power to the print head 23 and start the printing of the label print R such as letters, symbols, barcodes, or the like, corresponding to the print data in the label production information received in step S107 in the above-described printable area S of the cover film 103.

Subsequently, in step S 130, the decision is made as to whether or not the label tape 109 with print has been fed to the previously set front half-cut position (in other words, whether or not the label tape 109 with print has reached the position where the half-cutter 34 of the half-cutting module 35 is in front of the front half-cut line HC1). This decision may be made by detecting, for example, the transported distance after the identifier PM of the base tape 101 has been detected in the step S120, using a predetermined known method (by counting, for example, the number of pulses outputted by the feeding motor driving circuit 121 configured to drive the feeding motor 119, which is a pulse motor).

This step is repeated until the label tape 109 with print reaches the front half-cut position and, once the label tape 109 with print reaches the front half-cut position, the decision is made that the condition has been satisfied in step S130, and the flow proceeds to the next step 13 5.

In step S135, a control signal is outputted to the feeding motor driving circuit 121 and the tape discharging motor driving circuit 123 via the input/output interface 113 so as to stop the driving of the feeding motor 119 and the tape discharging motor 65, thereby stopping the rotation of the feeding roller 27, the ribbon take-up roller 106, and the driving roller 51. With this arrangement, in the process wherein the label tape 109 with print fed out from the cartridge 7 is moved in the discharging direction, the feeding of the base tape 101 from the first roll 102, the feeding of the cover film 103 from the second roll 104, and the transport of the label tape 109 with print are stopped with the half-cutter 34 of the half-cutting module 35 in front of the front half-cut position in the label production information received in step S107. At this time, a control signal is also outputted to the print-head driving circuit 120 via the input/output interface 113 so as to stop the power supply to the print head 23, thereby stopping the printing of the above-described label print R.

Next, in step S140, a control signal is outputted to the half-cutter motor driving circuit 128 via the input/output interface 113 so as to drive the half-cutter motor 129 and rotate the half-cutter 34, thereby cutting the cover film 103, the adhesive layer 101a, the base film 101b, and the adhesive layer 101c of the label tape 109 with print and perform the front half-cutting which forms the front half-cut line HC1.

Then, the flow proceeds to step S145 and, similar to the step S115, the feeding roller 27, the ribbon take-up roller 106, and the driving roller 51 are rotationally driven so as to resume the transport of the label tape 109 with print, and, similar to step S125, power is supplied to the print head 23 so as to resume the printing of the label print R.

In the next step S147, the decision is made as to whether or not the cartridge 7 loaded to the cartridge holder 6 is a tag cartridge having an RFID circuit element To or a regular cartridge not having an RFID circuit element To, based on the cartridge information acquired in the step S 105. In a case where the cartridge is a tag cartridge, the decision is made that the condition is satisfied, and the flow proceeds to the next step S150.

In step S 150, the decision is made as to whether or not the transported label tape 109 with print has been transported a predetermined distance (for example, a transport distance long enough for a corresponding RFID circuit element To for label production, to which the printed cover film 103 has been bonded, to reach the loop antenna LC1 for label production). The transport distance decision at this time, similar to the step S130, may also be made by counting the pulse count outputted to the feeding motor driving circuit 121 configured to drive the feeding motor 119, which is a pulse motor.

This step is repeated until the label tape 109 with print has been transported the predetermined distance and, once the label tape 109 with print has been transported the predetermined distance, the decision is made that the condition is satisfied in step S 150, and the flow proceeds to the next step S200.

In the next step S200, tag access processing is performed. That is, once the label tape 109 with print has been transported to the communication position of the RFID circuit element To for label production (to the position where the RFID circuit element To for label production is in front of the loop antenna LC1 for label production), transportation and printing are stopped and information transmission/reception is performed. Subsequently, transport and printing is resumed, printing is completed, the label tape 109 with print is further transported, and transportation is stopped at the rear half-cut position so as to form the rear half-cut line CH2 (refer to FIG 20 described later).

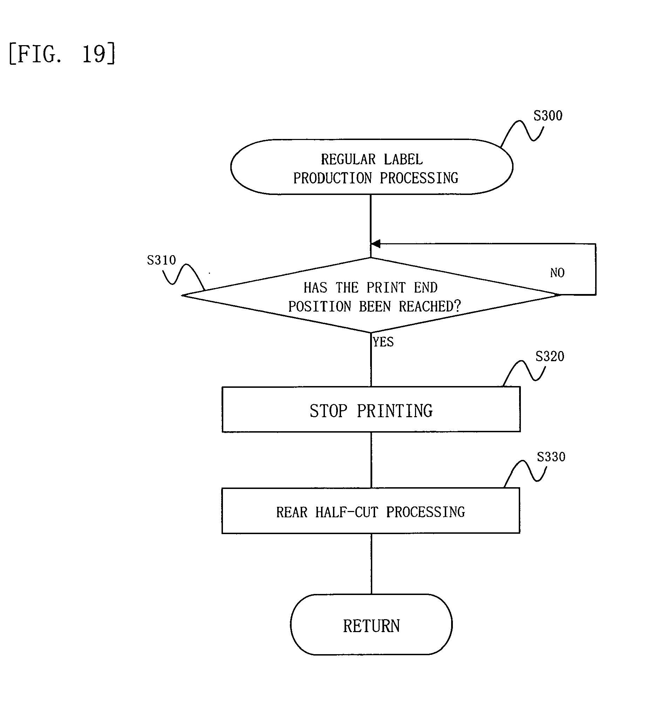

When step S200 is completed as described above, the flow proceeds to step S 155 (at this moment, the transport of the label tape 109 with print is resumed in step S200). In the step S 147, in a case where the cartridge is a regular cartridge not having an RFID circuit element To, the decision is made that the condition is not satisfied and the flow proceeds to step S300, where printing is completed at the print end position and regular label production processing for forming the rear half-cut line HC2 is performed (for details, refer to FIG 19 described later), and the flow proceeds to the next step S155.

In step S 155, the decision is made as to whether or not the label tape 109 with print has been transported to the above-described full-cut position. In other words, the decision is made as to whether or not the full-cut position of the label tape 109 with print indicated in the label production information received in step S107 has reached the position in front of the movable blade 41 of the cutting mechanism 15 (the current transport position of the label tape 109 with print is recognized based on the detection result of the identification mark PM, and the full-cut position is calculated accordingly). This decision may also be made by detecting, for example, the transported distance after the identifier PM of the base tape 101 has been detected in the step S120, using a predetermined known method (by counting, for example, the number of pulses outputted by the feeding motor driving circuit 121 configured to drive the feeding motor 119, which is a pulse motor) as described above. Until the full-cut position is reached, the decision is made that the condition is not satisfied and this step is repeated. Once the position has been reached, the decision is made that the condition is satisfied, and the flow proceeds to the next step S160.

In step S160, similar to the step S135, the rotation of the feeding roller 27, the ribbon take-up roller 106, and the driving roller 51 is stopped, thereby stopping the transport of the label tape 109 with print. With this arrangement, the feeding of the base tape 101 from the first roll 102, the feeding of the cover film 103 from the second roll 104, and the transport of label tape 109 with print are stopped with the movable blade 41 of the cutting mechanism 15 in front of the full-cut position.

Subsequently, in step S165, a control signal is outputted to the cutter motor driving circuit 122 so as to drive the cutter motor 43 and rotate the movable blade 41 of the cutting mechanism 15, thereby performing the full cutting process wherein the cover film 103, the adhesive layer 101a, the base film 101b, the adhesive layer 101c, and the separation sheet 101d of the label tape 109 with print are all cut to form the cutting line. Thus, a label-shaped RFID label T, which includes the RFID circuit element To for label production to which the RFID tag information has been written, and on which predetermined printing has been performed correspondingly thereto, (or a regular label L on which predetermined printing has been performed) is formed by cutting the label tape 109 with print using the cutting mechanism 15.

Subsequently, the flow proceeds to step S 170 where a control signal is outputted to the tape discharging motor driving circuit 123 via the input/output interface 113 so as to drive the tape discharging motor 65 again, thereby rotating the driving roller 51. As a result, the driving roller 51 begins transport once again. Accordingly, the RFID label T or regular label L thus formed in the shape of a label in the step S 165 is transported toward the label discharging exit 11 and discharged to outside the apparatus from the label discharging exit 11, and the flow ends.

The present invention is not limited to the procedure indicated in the above flow. Steps may add or removed or the order of the steps may be changed without departing from the spirit and scope of the present invention.

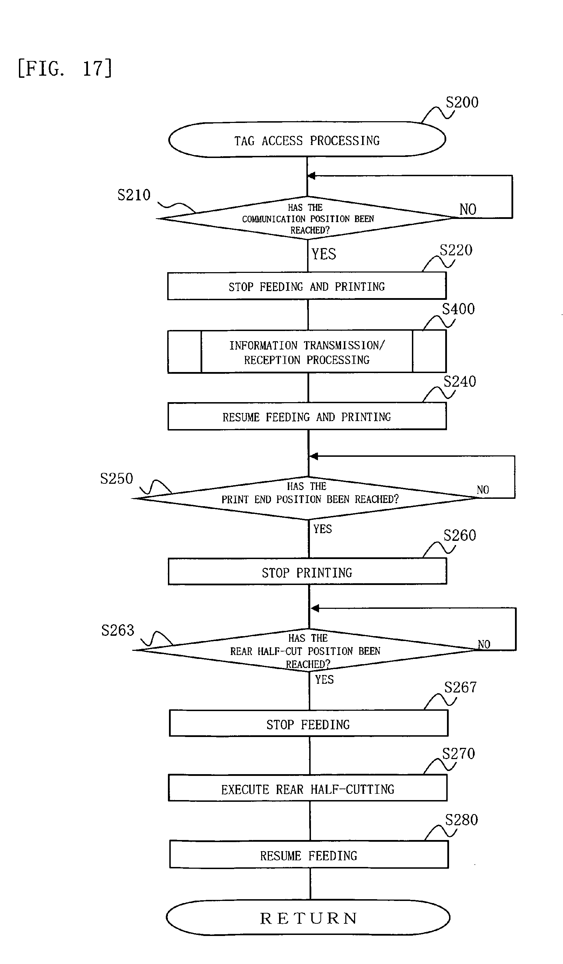

A detailed procedure of the step S200 is shown in FIG 17.

In FIG 17, first, in step S210, the decision is made as to whether or not the label tape 109 with print has been transported to the position of communication with the loop antenna LC1 for label production. The decision at this time as well, similar to the step S130 of the FIG 16, may be made by detecting, for example, the transported distance after the identifier PM of the base tape 101 has been detected in the step S120, using a predetermined known method.

This step is repeated until the label tape 109 with print reaches the communication position and, once the label tape 109 with print has reached the communication position, the decision is made that the condition has been satisfied in step S210, and the flow proceeds to the next step S220.

In step S220, similar to the step S135, the rotation of the feeding roller 27, the ribbon take-up roller 106, and the driving roller 51 is stopped, thereby stopping the transport of the label tape 109 with print with the loop antenna LC1 for label production substantially in front of the RFID circuit element To for label production. Also, the power supply to the print head 23 is stopped so as to stop (pause) the printing of the label print R.

Next, in step S400, information transmission/reception is performed via wireless communication between the loop antenna LC 1 for label production and the RFID circuit element To for label production so as to perform information transmission/reception processing which writes the tag write information of the label production information received in the step S107 of FIG 16 to the IC circuit part 151 of the RFID circuit element To for label production (or which reads information stored in advance in the IC circuit part 151; for details, refer to FIG 18 described later).

Subsequently, the flow proceeds to step S240 and, similar to the step S 145 of FIG 16, the feeding roller 27, the ribbon take-up roller 106, the driving roller 51 are rotationally driven so as to resume the transport of the label tape 109 with print, and power is supplied to the print head 23 so as to resume the printing of the label print R.

Next, the flow proceeds to step S250 where the decision is made as to whether or not the label tape 109 with print has been transported to the print end position (included in the label production information received in step S107). The decision at this time as well, similar to the above, may be made by detecting, for example, the transported distance after the identifier PM has been detected in the step S120, using a predetermined known method. Until the print end position is reached, the decision is made that the condition is not satisfied and this step is repeated. Once the print end position has been reached, the decision is made that the condition is satisfied, and the flow proceeds to the next step S260.

In step S260, similar to step S135 of FIG 16, the power supply to the print head 23 is stopped, thereby stopping the printing of the label print R. As a result, the printing of the label print R in the print area S is completed.

In the next step S263, the decision is made as to whether or not the label tape 109 with print has been transported to the previously described rear half-cut position (in other words, whether or not the label tape 109 with print has reached the position where the half-cutter 34 of the half-cutting module 35 is in front of the rear half-cut line HC2). The decision at this time as well, similar to the above, may be made by detecting, for example, the transported distance after the identifier PM has been detected in the step S120, using a predetermined known method. Until the rear half-cut position is reached, the decision is made that the condition is not satisfied and this step is repeated. Once the position has been reached, the decision is made that the condition is satisfied, and the flow proceeds to the next step S267.

In step S267, similar to the previously described step S220, etc., a control signal is outputted to the feeding motor driving circuit 121 and the tape discharging motor driving circuit 123 via the input/output interface 113 so as to stop the driving of the feeding motor 119 and the tape discharging motor 65, thereby stopping the rotation of the feeding roller 27, the ribbon take-up roller 106, and the driving roller 51. With this arrangement, the feeding of the base tape 101 from the first roll 102, the feeding of the cover film 103 from the second roll 104, and the transport of label tape 109 with print are stopped with the half-cutter 34 of the half-cutting module 35 in front of the rear half-cut position HC2.

Next, the flow proceeds to step S270 where a control signal is outputted to the half-cutter motor driving circuit 128 so as to rotate the half-cutter 34, thereby cutting the cover film 103, the adhesive layer 101 a, the base film 101b, and the adhesive layer 101 c of the label tape 109 with print so as to perform the rear half-cutting which forms the rear half-cut line HC2.

Then, the flow proceeds to step S280 where, similar to the step S240, the feeding roller 27, the ribbon take-up roller 106, and the driving roller 51 are rotationally driven, thereby resuming the transport of the label tape 109 with print. With the above, the routine ends.

The present invention is not limited to the procedure indicated in the above flow. Steps may add or removed or the order of the steps may be changed without departing from the spirit and scope of the present invention.

A detailed procedure of the step S400 is shown in FIG 18. In this example, of the above-described information writing and information reading, information writing will be described as an example.

In FIG 18, first in step S402, a switching control circuit is outputted to the switching circuit 86 so as to connect the common antenna device 240 and the loop antenna LC 1 for label production.

Subsequently, the flow proceeds to step S405 where a control signal is outputted to the transmission circuit 306 via the input/output interface 113, and an interrogation wave subjected to predetermined modulation is transmitted as an inquiry signal (a "Read tag ID" command signal in this example) for acquiring the ID information stored in the RFID circuit element To for label production to the RFID circuit element To for label production subject to writing via the loop antenna LC1 for label production. As a result, the memory part 157 of the RFID circuit element To for label production is initialized.

Subsequently, in step S415, a reply signal (including tag ID) sent from the RFID circuit element To for label production subject to writing is received via the loop antenna LC1 for label production in response to the "Read tag ID" command signal, and incorporated via the reception circuit 307 and the input/output interface 113.

Next, in step S420, a decision is made as to whether or not the tag ID of the RFID circuit element To for label production has been normally read, based on the received reply signal.

In a case where the decision is made that the condition is not satisfied, the flow proceeds to step S425 where M is incremented by one. Then, in step S430, the decision is made as to whether or not M is equal to five. In a case where M is less than or equal to four, the decision is made that the condition is not satisfied and the flow returns to step S405 and the same procedure is repeated. In a case where M equals five, the flow proceeds to step S435 where an error display signal is outputted to the PC 118 via the input/output interface 113 so as to display the corresponding writing failure (error). Subsequently, the routine ends. With such an arrangement, a maximum of five retries are performed even if initialization fails.

In a case where the decision is made that the condition is satisfied in step S420, the flow proceeds to step S440 where a control signal is outputted to the transmission circuit 306, the tag ID read in step S415 is specified so as to send desired data as a signal to be written to the memory part 157 (a "Write" command signal in this example) to the RFID circuit element To for label production, to which information writing is to be performed via the loop antenna LC 1 for label production, and the information is written.

Subsequently, in step S445, a control signal is outputted to the transmission circuit 306 and the tag ID read in step S415 is specified so as to send an interrogation wave to which predetermined modulation has been performed as a signal (a "Read" command signal in this example) for reading data recorded in the memory part 157 of the tag to the RFID circuit element To for label production, to which information writing is to be performed via the loop antenna LC1 for label production, thereby prompting a reply. Then, in step S450, a reply signal sent from the RFID circuit element To for label production, to which writing is to be performed in response to the "Read" command signal is received via the loop antenna LC1 for label production, and incorporated via the reception circuit 307.

Next, in step S455, the information stored within the memory part 157 of the RFID circuit element To for label production is checked based on the received reply signal, and the decision is made as to whether or not the transmitted predetermined information has been normally stored in the memory part 157, using a known error detecting code (CRC code; Cyclic Redundancy Check, etc).

In a case where the decision is made that the condition is not satisfied, the flow proceeds to step S460 where N is incremented by one. Then, in step S465, the decision is made as to whether or not N is equal to five. In a case where the decision is made that N is less than or equal to 4, the decision is made that the condition is not satisfied, the flow returns to step S440, and the same procedure is repeated. In a case where N equals five, the flow proceeds to step S435 where a corresponding writing failure (error) is similarly displayed on the PC 118, and the routine ends. With such an arrangement, a maximum of five retries are performed even if information writing fails.

In a case where the decision is made that the condition is satisfied in step S455, the flow proceeds to step S470 where a control signal is outputted to the transmission circuit 306, the tag ID read in step S415 is specified so as to send an interrogation wave to which predetermined modulation has been performed as a signal (a "Lock" command signal in this example) for prohibiting the replacement of data recorded in the memory part 157 of the tag to the RFID circuit element To for label production, to which information writing is to be performed via the loop antenna LC1 for label production, and the writing of new information to the RFID circuit element To for label production is prohibited. As a result, the writing of RFID tag information to the RFID circuit element To for label production, to which writing is to be performed, is completed.

Subsequently, the flow proceeds to step S480 where the combination of information written to the RFID circuit element To for label production in the step S440 and the corresponding print information of the label print R to be printed in the print area S by the print head 23 is outputted via the input/output interface 113 and the communication line NW and stored in the PC 118 (or in an information server or route server not shown). This stored data is referably stored and maintained on the display part 118a of the PC 118 as necessary. With the above, the routine ends.

The present invention is not limited to the procedure indicated in the above flow. Steps may add or removed or the order of the steps may be changed without departing from the spirit and scope of the present invention.

A detailed procedure of the step S300 is shown in FIG 19.

In the flow shown in FIG 19, first in step S310, a decision is made as to whether or not the cover film 103 has been bonded to the base tape 101 not having an RFID circuit element To and the generated label tape 109 with print has been transported to the print end position (included in the label production information received in the step S107). The decision at this time as well, similar to the above, may be made by detecting, for example, the transported distance after the identifier PM has been detected in the step S120, using a predetermined known method. Until the print end position is reached, the decision is made that the condition is not satisfied and this step is repeated. Once the position has been reached, the decision is made that the condition is satisfied, and the flow proceeds to the next step S320.

In step S320, the power supply to the print head 23 is stopped so as to stop the printing of the label print R. As a result, the printing of the label print R in the printable area S is completed.

Subsequently, the flow proceeds to step S330 where, similar to the step S270, the rear half-cut processing for forming the rear half-cut line HC2 by the half-cutter 34 after transport to the predetermined rear half-cut position is performed. With the above, the routine ends.

The present invention is not limited to the procedure indicated in the above flow. Steps may add or removed or the order of the steps may be changed without departing from the spirit and scope of the present invention.

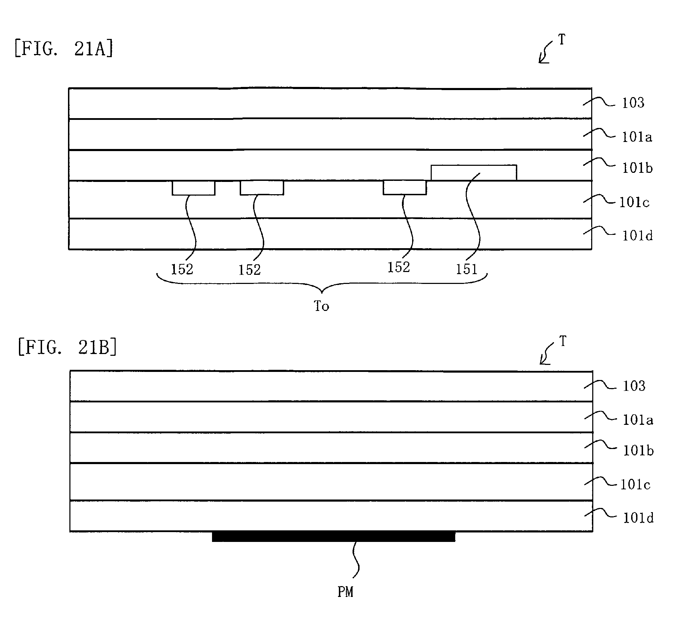

An example of the outer appearance and the cross-sectional view of the RFID label T which includes an RFID circuit element To for label production to which information writing (or reading) has been performed and a label tape 109 with print that has been cut based on such control as described above, is shown in FIGS. 20 and 21. Here, as described above, the figures show the RFID label T produced when a tag cartridge is loaded to the cartridge holder 6 in the label producing apparatus 1, normal print mode (refer to step S40 in FIG 8) is selected, and the print and cutting position shown in FIG 11 are edited.

In these FIGS. 20 and 21, the RFID label T has a five-layer structure in which the cover film 103 is added to the four-layer structure illustrated in FIG 5. The five layers are comprised of the cover film 103, the adhesive layer 101a, the base film 101b, the adhesive layer 101c, and the separation sheet 101d, which are laminated from the cover film 103 (upper side in FIG 21) to the opposite side (lower side in FIG 21). Then, the RFID circuit element To for label production that includes the loop antenna 152 provided on the back side of the base film 101b as previously described is provided within the base film 101b and the adhesive layer 101c, and the label print R (the letters "ABCD" in this example) corresponding to the stored information, etc., of the RFID circuit element To for label production is printed within the print area S on the back side of the cover film 103.

On the cover film 103, the adhesive layer 101a, the base film 101b, and the adhesive layer 101c are formed the half-cut lines HC (two lines in this example: the front half-cut line HC1 and the rear half-cut line HC2) substantially along the tape width direction by the half-cutter 34 as previously described. On the cover film 103, the label print R is printed in the area between these half-cut lines HC 1 and HC2, and the front end area S 1 and the rear end area S2 are respectively formed on either side in the tape longitudinal direction from this area with the half-cut lines HC 1 and HC2 therebetween.

In the above-described embodiment 1, the print content of the cover film 103 to be bonded to the base tape 101 comprising the RFID circuit element To can be edited using the PC 118 during tag label production. At this time, the printable area So of the cover film 103 is determined using the PC 118. Then, according to the determination result, the disposed area STo of the RFID circuit element To is displayed on the display part 118a in addition to the print image of the RIFD label T to be produced.

As a result, the positional relationship between the print area and RFID circuit element area of the RFID label T to be produced is visually easy-to-understand. Thus, the operator can adjust the positional relationship between these two areas to a desired form according to personal preference and intent, thereby improving operator convenience.

Further, particularly in the present embodiment, the image of the cutting line CL of the cutting mechanism 15 of the RFID label T to be produced is displayed on the display part 118a of the PC 118. This display of the cutting position image makes it easier for the operator to visually understand the positional relationship between the print area and RFID circuit element area of the RFID label T to be produced as well as the positional relationship between these areas and the cutting position. As a result, the convenience of the operator is further improved.

Further, particularly in the present embodiment, the print content (text data) of the print head 23 of the RFID label T to be produced and the cutting position (cutting line CL) of the cutting mechanism 15 are editable using the operation part 118b of the PC 118, and the image corresponding to the edited operation performed using the operation part 118b is displayed on the display part 118a. With this arrangement, when the print content or cutting position is edited using the operation part 118b, the corresponding image is displayed on the display part 118b. This makes it easier for the operator to visually understand the form of the RFID label T to be produced.

Further, particularly in the present embodiment, the configuration enables the operator to select and enter either tag avoidance print mode, which determines the printable area So so that the area does not overlap in the label thickness direction with the disposed position of the RFID circuit element To, or normal print mode. With this arrangement, the operator may select tag avoidance print mode in a case where the aesthetic quality of the RFID label T is to be emphasized, such as when avoidance of the print surface or nearby bumps and indentations is preferred, or when prevention of thin print spots is desired. Or, the operator may select normal print mode in a case where there is no such preference or where printing is preferably performed based on a desired layout with respect to the entire label, regardless of the existence of the RFID circuit element To. In this manner, the present embodiment enables creative functional usage according to operator intent and needs, thereby further improving operator convenience.

Further, particularly in the present embodiment, cartridge information is acquired based on a detection signal from the cartridge sensor 81, and a label image is displayed on the display part 118a of the PC 118 based on this cartridge information. With this arrangement, the length of the print area S, etc., can be changed according to the content of the cartridge information, that is, the RFID circuit element To status, tape width, RFID circuit element To disposed interval, etc., as in the above embodiment. Furthermore, the image display range, the size of the print, the layout of the print, etc., can also be changed according to the content of the cartridge information. In this manner, an image display corresponding to the type of the cartridge 7 loaded to the cartridge holder 6 is executed, thereby further improving operator convenience.

Further, particularly in the present embodiment, the printable area So is determined according to the value of the disposed interval (fixed pitch) of the RFID circuit element To disposed at a predetermined fixed pitch in the base tape 101, and the width of the base tape 101 (cover film 103), which are included in the acquired cartridge information, by the PC 118. That is, in a case where tag label production is to be performed by loading the cartridge 7 in which the RFID circuit element To is disposed at a predetermined fixed pitch in the base tape 101, the length (maximum length) of the RFID label T is restricted by the fixed pitch. Thus, the printable area So is determined according to the width of the base tape 101 (cover film 103) as well as the fixed pitch, thereby enabling suitable image display by the display part 118a.

Further, particularly in the present embodiment, the tag cartridge comprising the base tape 101 with an RFID circuit element To or a regular cartridge comprising only the base tape 101 without an RFID circuit element To is selectably loadable to the cartridge holder 6 of the label producing apparatus 1. Then, in a case where a regular cartridge not having an RFID circuit element To is loaded to the cartridge holder 6, the printable area So is determined according to the width of the cover film 103 by the PC 118. With this arrangement, the restriction of the length (maximum length) of the label can be eliminated in a case where tag labels are produced upon loading a tag cartridge. Thus, the printable area So is determined according to the tape width of the cover film 103, thereby enabling suitable image display by the display part 118a.

Further, particularly in the present embodiment, the label producing apparatus 1 comprises the cartridge holder 6 which enables selectable loading and removal of a tag cartridge or a regular cartridge, and the cartridge sensor 81 configured to detect the type of the cartridge 7 loaded to the cartridge holder 6. With such an arrangement, the display part 118a of the PC 118 displays the disposed position of the RFID circuit element To according to the cartridge type detected by the cartridge sensor 81 as well as the print image, etc.

Note that various modifications may be made according to the present embodiment without departing from the spirit and scope of the present invention, in addition to the above-described embodiment. Description will be made below regarding such modifications.

### (1-1) In a case where the display switches when the cartridge is replaced

In this modification, the display of the display part 118a of the PC 118 automatically switches to a display corresponding to a newly loaded cartridge 7 in a case where the cartridge 7 is replaced in the label producing apparatus 1 while the print content of the RFID label T is being edited on the PC 118.

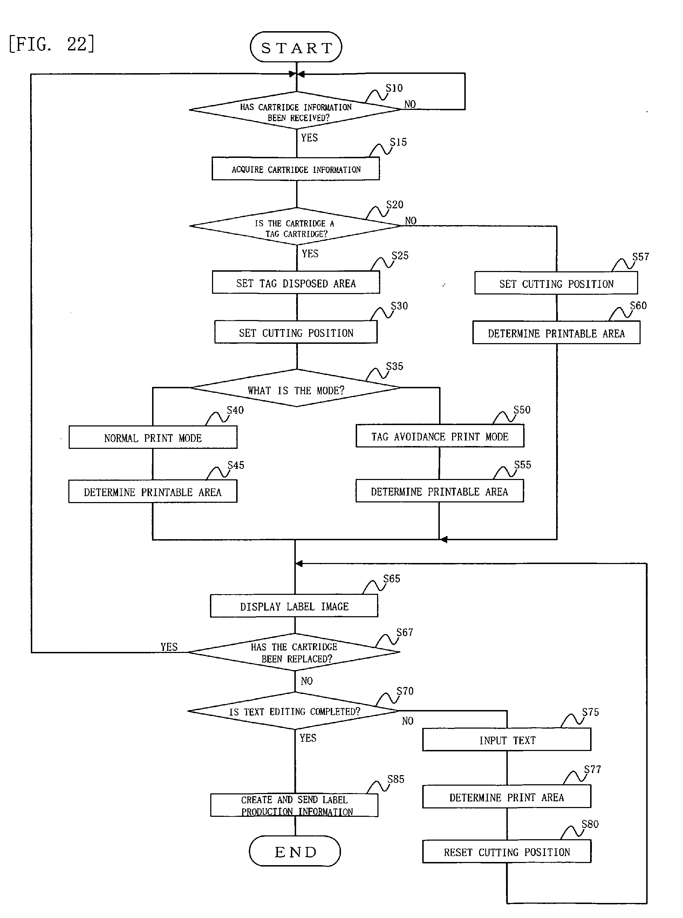

The control content shown in FIG 22 is executed by a control circuit 130' (not shown) of the PC 118 when an RFID label T is produced using the label manufacturing system of the present modification, and corresponds to the aforementioned FIG 8. Note that, in FIG 22, the same steps as those in FIG 8 are denoted by the same reference numerals, and descriptions thereof will be omitted.

The difference between the flow shown in FIG 22 and that shown in FIG 8 is the addition of step S67 between step S65 and step S70. That is, while the control circuit 130' repeats step S65 to step S80, thereby enabling the operator to edit the text while displaying an image of the RFID label T (or regular label L), including the tag disposed area STo and print image, on the display part 118a of the PC 118, in a case where the cartridge loaded to the cartridge holder 6 of the label producing apparatus 1 is replaced, the cartridge sensor 81 of the label producing apparatus 1 detects replacement, and the control circuit 110 sends the detection signal to the control circuit 130' of the PC 118 via the communication line NW. As a result, the decision is made that the condition of step S67 is satisfied, and the flow returns to the previous step S10. Subsequently, the procedure starting from step S10 is repeated once again. The steps other than those described above are the same as those of the previously described FIG 8.

The present invention is not limited to the procedure indicated in the above flow. Steps may added or removed or the order of the steps may be changed without departing from the spirit and scope of the present invention. For example, step S67 may be moved to a different position within the cycle of step S65 to step S80. Or, for example, rather than waiting for the operator to select a mode in step S35 after cartridge replacement, the system may automatically select a preset mode and execute display. With this arrangement, screen switching is promptly performed at the time of cartridge replacement.

According to the above modification, first when the tag cartridge 7 (or regular cartridge 7) is loaded to the cartridge holder 6, the control circuit 130' of the PC 118 determines the printable area So based on the cartridge information acquired by the cartridge sensor 81, thereby displaying the corresponding image on the display part 118a. Subsequently, when the loaded cartridge 7 is removed while the operator is editing print data (entering text) and a different cartridge is loaded to the cartridge holder 6, the cartridge information of the newly loaded cartridge 7 is acquired so as to determine the printable area So based on that information and switch the image display of the display part 118a to a display corresponding to the newly loaded cartridge 7. In this manner, even when the operator replaces the cartridge 7 with an image displayed on the display part 118a, a suitable image corresponding to that replacement is reliably displayed. As a result, the convenience of the operator is further improved.

Particularly, in a case where the operator first loads a regular cartridge to the cartridge holder 6 and, with the corresponding image (of undefined length; refer to FIG 15, for example) displayed on the display part 118a, replaces the cartridge with a tag cartridge, an image that corresponds to that replacement and includes the disposed area STo of the RFID circuit element To (refer to FIG 10 or FIG 13, for example) is reliably displayed. As a result, the operator convenience is further improved.

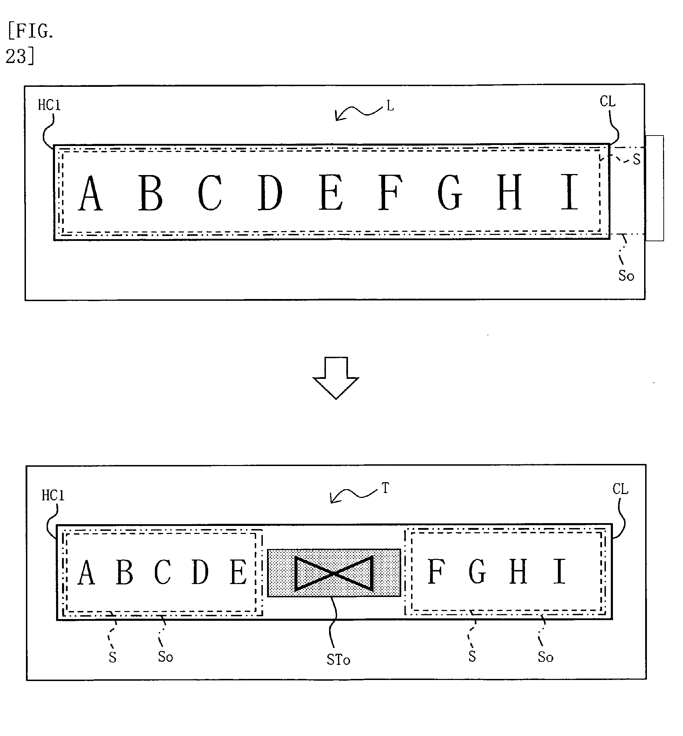

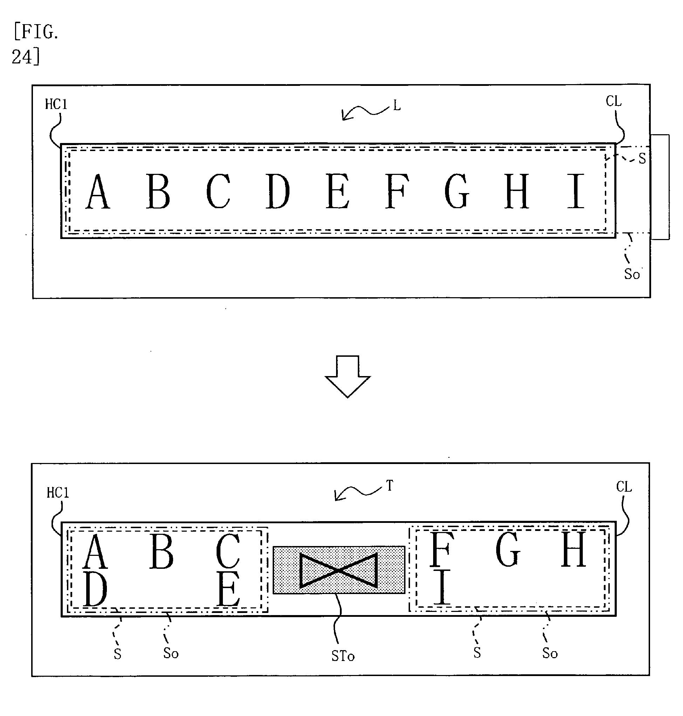

When a regular cartridge is replaced with a tag cartridge in this manner, the RFID label T has a defined length as described above, sometimes resulting in a reduction in size of the printable area So (particularly in a case where image display is performed in tag avoidance print mode). Thus, the size of the text may be reduced according to the reduction of the size of the printable area So as shown in FIG 23, for example. Furthermore, as shown in FIG 24, the number of lines (or rows) may be increased according to the number of text characters without changing the size of the text so that the entire text is disposed within the printable area So. Such control may be performed when changing the mode during the text editing (from normal print mode to tag avoidance print mode). Further, in a case where the size of the printable area So conversely increases (for example, in a case where a regular cartridge is replaced with a tag cartridge or tag avoidance print mode is changed to normal print mode during tag cartridge loading), the size of the text may be conversely increased or the number of lines (or rows) may be conversely decreased.

### (1-2) In a case where a plurality of tag label images are displayed

While the above embodiment 1 has been described in connection with an illustrative scenario in which the image of a single RFID label T (or regular label L) to be produced is displayed on the display part 118a of the PC 118, the present invention is not limited thereto, and the images of a plurality of RFID labels T may be displayed in combination.

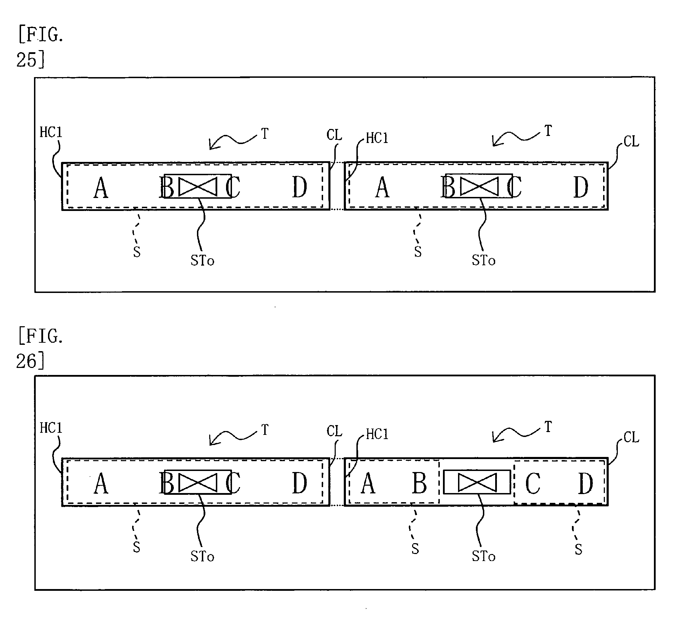

An example of a display executed on the display part 118a of the PC 118 in a case where there are two displayed labels is shown in FIG 25 and FIG 26. As shown in these figures, the image displays of the two RFID labels T are displayed in combination on the display part 118a, thereby enabling the operator to edit the print content of the two tag labels together. In this case, the operator may be allowed to set the print modes of the two tag labels to the same mode or to different modes. An example of a display in a case where both tag labels are set to the same print mode (here, normal print mode) is shown in FIG 25, and an example of a display in a case where the tag labels are set to different print modes (here, normal print mode and tag avoidance print mode) is shown in FIG 26. Note that while the number of RFID labels T displayed here is two, a greater number of labels may be displayed. Further, while two RFID labels T are displayed with a slight distance therebetween, the labels may be displayed close to each other, or the second RFID label T may be displayed with a margin at the front end side (left side in the figure) of the front half-cut line HC1.

### (1-3) Self-contained tag-label apparatus

While the above embodiment 1 comprises the PC 118 as the tag label editing apparatus separate from the label producing apparatus 1, the present invention is not limited thereto, and the editing function of the PC 118 described above may be provided in the label producing apparatus 1 (in a so-called stand-alone format). In this case, the label producing apparatus 1 comprises a display part; not shown) of a liquid crystal screen, etc., configured to execute the various displays, and an operation part; not shown) of keys and buttons, etc., for operator entry by the operator, wherein the control circuit 110 executes the control content (refer to FIG 8, etc., previously described) to be performed by the control circuit 130 of the PC 118.

According to the present modification, an editing apparatus separate from the label producing apparatus 1 such as the PC 118 of the above embodiment is not required, thereby making it easy for the operator to hand-carry the entire label manufacturing system LS and thus further improving operator convenience.

### (1-4) In a case where tape bonding is not performed

While the above embodiment 1 has been described in connection with an illustrative scenario in which printing is performed on the cover film 103 that is separate from the base tape 101 containing the RFID circuit element To, and the two are bonded to each other so as to form a so-called laminated type label, the present invention is not limited thereto. That is, the present embodiment may also be applied to a case where a so-called non-laminated type label where printing is directly performed on a cover film that is provided on the tag tape (or regular tape) is formed.

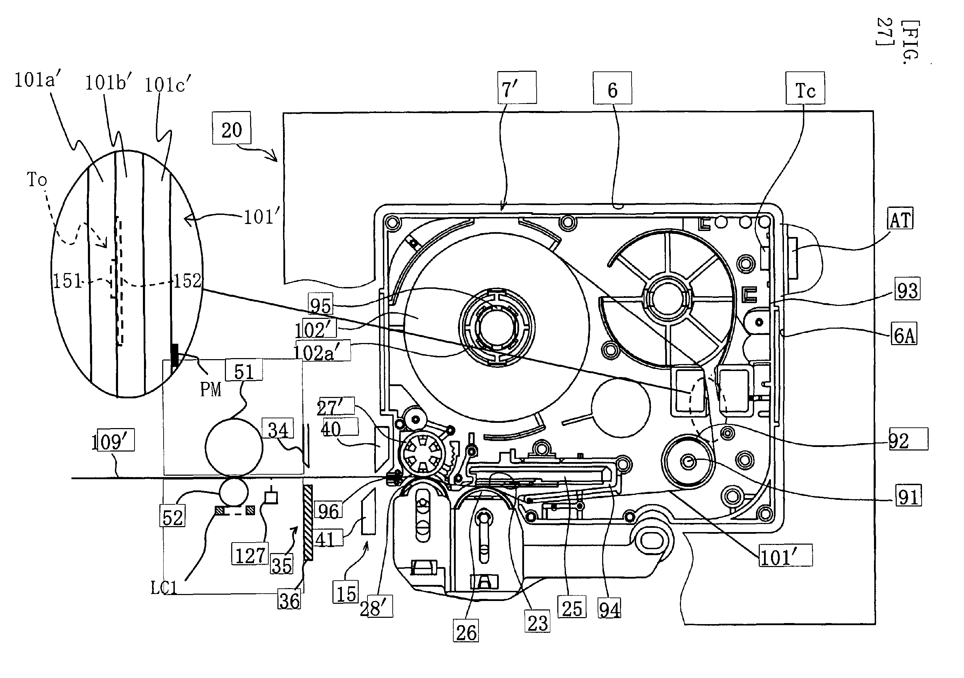

The structure of a cartridge 7' of the present modification is shown in FIG. 27 (corresponds to the aforementioned FIG 5). Note that the parts identical to those in FIG 5 are denoted using the same reference numerals, and descriptions thereof will be suitably omitted.

In FIG 27, the cartridge 7' comprises a first roll 102', around which a thermal tape 101' is wound, and a feeding roller 27' configured to feed the thermal tape 101' to the outside of the cartridge 7'.

The first roll 102' stores, in a manner such that it is wound around a reel member 102a', the strip transparent thermal tape 101', which has a structure in which a plurality of the RFID circuit elements To are serially formed along the longitudinal direction. The reel member 102a' is rotationally inserted and housed in a boss 95 established on the bottom of the cartridge 7'.

The thermal tape 101' wound around the first roll 102' has a three-layer structure in this example (refer to the partially enlarged view of FIG 27), comprising a cover film 101a' formed of PET (polyethylene terephthalate) or the like having a thermal recording layer on the surface, an adhesive layer 101 b' formed of a suitable adhesive material, and a separation sheet 101c'. The three layers of the thermal tape 101' are layered in that order from the side rolled to the inside to the side corresponding to the opposite side.

The loop antenna 152 configured to transmit/receive information and constructed in a loop coil shape is provided on the back side of the cover film 101a' in an integrated manner in this example, and the IC circuit part 151 is formed so that it is connected to the loop antenna 152, thereby forming an RFID circuit element To. The separation sheet 101c' is affixed to the cover film 101a' by the adhesive layer 101b' on the back side of the cover film 101a'. A predetermined identifier (a black identifier in this example; may be a hole that passes through the thermal tape 101' formed by laser processing, etc., similar to the above) PM for feeding control is established in a predetermined position (a position farther forward than the front head of the antenna 152 on the forward side of the feeding direction in this example) corresponding to each RFID circuit element To on the front side of the separation sheet 101c', similar to the separation sheet 101d.

When the cartridge 7' is loaded to the cartridge holder 6 and the roller holder 25 is moved to the contact position from a distant location, the thermal tape 101' is brought between the print head 23 and the platen roller 26, and then between the feeding roller 27' and a sub-roller 28'. Then, the feeding roller 27', the sub-roller 28', and the platen roller 26 are synchronously rotated so as to feed out the thermal tape 101' from the first roll 102'.

The fed thermal tape 101' is supplied to the print head 23 on the downstream side of the feeding direction from an opening part 94 while guided to a substantially cylindrical shaped reel 92 rotatably inserted in a reel boss 91 established on the cartridge bottom. Power is supplied to the plurality of heating elements from the print-head driving circuit 120 (refer to FIG 6), causing the print head 23 to print the label print R on the front side of the cover film 101a' of the thermal tap 101' so as to form a label tape 109' with print, which is subsequently discharged to outside the cartridge 7' from a discharging exit 96.

After the label tape 109' with print has been discharged to outside the cartridge 7', the IC circuit part 151 is accessed (subjected to information reading/writing) via the loop antenna LC 1. The subsequent transport by the driving roller 51 and cutting by the cutting mechanism 15 may be sufficiently performed using the same methods as those of embodiment 1, and descriptions thereof will be omitted.

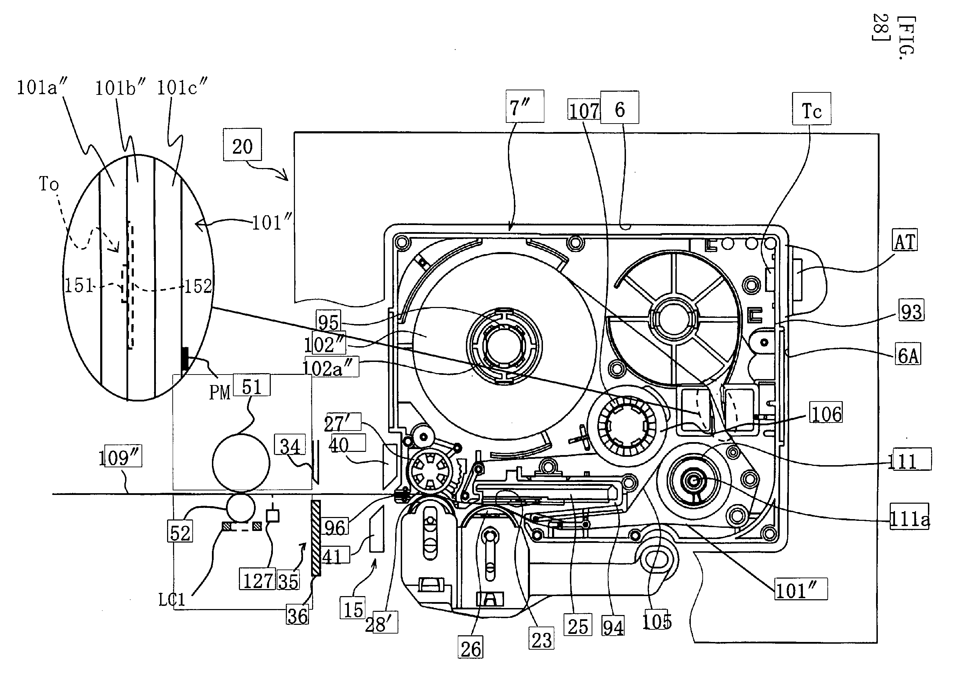

The half-cutting module 35 differs from that corresponding to the so-called laminated type described in FIG 3, etc. That is, the configuration described in FIG 3, etc., has the receptacle 36 on the side of the print head 23, and the half-cutter 34 on the side of the platen roller 26. This is a configuration for performing half-cutting from the side opposite the side corresponding to the separation sheet of the tape to be produced. Nevertheless, in a case where thermal tape is used as in the present modification (and, similarly, in a case where ink ribbon is used with a type in which laminating is not performed, which is described later using FIG 28), the separation sheet is on the side opposite that of the laminated type. Thus, since sections other than the separation sheet are subjected to half-cutting, the layout of the receptacle 36 and the half-cutter 34 is opposite the above. That is, the half-cutter 34 is located on the side of the print head 23, and the receptacle 36 is located on the side of the platen roller 26.

In this example, to make the cartridge information related to the cartridge 7' automatically detectable on the apparatus side, the cartridge RFID circuit element Tc in which information related to the cartridge 7' is stored is established on the wall surface 93 on the outer periphery of the cartridge 7. Further, an antenna AT configured to transmit/receive signals via non-contact wireless communication with the RFID circuit element Tc is provided on a side-wall part 6A opposite the RFID circuit element Tc of the cartridge holder 6.

In the present modification, the same effect as that of the above embodiment 1 is achieved, as well as the effects described below. That is, the base tape having an RFID circuit element To sometimes exhibits a difference in tape thickness between the disposed area of the RFID circuit element To and the other areas, forming bumps and indentations on the tape front surface. At this time, while the bumps and indentations do not have much effect in the above embodiment 1 since the embodiment comprises a design wherein printing is performed on a cover film separate from the base tape comprising the RFID circuit element To and the two are bonded to each other, in a case where printing is performed directly on a thermal tape having an RFID circuit element To as in the present embodiment, the unique problem of the thermal tape being readily susceptible to printing defects such as thin spots arises due to the bumps and indentations on the tape front surface caused by the thickness of the RFID circuit element To. Here, printing may be performed so as to avoid the disposed area of the RFID circuit element To by using the aforementioned tag avoidance print mode, thereby avoiding the above-described print defects such as thin spots and resolving the above problem that may occur when the cover film and base tape are not bonded to each other. As a result, an aesthetically pleasing RFID label T without thin print spots, etc., is formed.

While in the configuration of the above modification printing is performed by using thermal tape as the tag tape, particularly by simply the heat generated by the print head 23 and not ink ribbon, etc., the present invention is not limited thereto, and printing may be performed using ordinary ink ribbon as in the case of the above embodiment 1.

The structure of a cartridge 7" of such a modification is shown in FIG 28 (corresponds to the above FIG 27 and the aforementioned FIG 5). Note that the parts identical to those in FIG 27 and FIG 5 are denoted using the same reference numerals, and descriptions thereof will be suitably omitted.

In FIG 28, the cartridge 7" of the present modification comprises a first roll 102", around which a base tape 101" is wound.

The first roll 102" stores, in a manner such that it is wound around a reel member 102a", the strip transparent base tape 101", which has a structure in which a plurality of the RFID circuit elements To are serially formed along the longitudinal direction.

The base tape 101" wound around the first roll 102" has a three-layer structure in this example (refer to the partially enlarged view of FIG 28), comprising a colored base film 101a" formed of PET (polyethylene terephthalate) or the like, an adhesive layer 101b" formed of a suitable adhesive material, and a separation sheet 101c". The three layers of the base tape 101" are layered in that order from the side rolled to the inside to the side corresponding to the opposite side.

The loop antenna 152 configured to transmit/receive information and constructed in a loop coil shape is provided on the back side of the base film 101a" in an integrated manner in this example, and the IC circuit part 151 is formed so that it is connected to the loop antenna 152, thereby forming an RFID circuit element To. The separation sheet 101c" is affixed to the base film 101a" by the adhesive layer 101b" on the back side of the base film 101a". A predetermined identifier (a black identifier in this example; may be a hole that passes through the base tape 101" formed by laser processing, etc., similar to the above) PM is established in a predetermined position (a position farther forward than the front end of the antenna 152 on the forward side in the feeding direction in this example) corresponding to each RFID circuit element To on the front side of the separation sheet 101 c", similar to the above.

When the cartridge 7" is loaded to the cartridge holder 6 and the roller holder 25 is moved to the contact position from a distant location, the base tape 101" and the ink ribbon 105 are brought between the print head 23 and the platen roller 26, and then between the feeding roller 27' and the sub-roller 28'. Then, the feeding roller 27', the sub-roller 28', and the platen roller 26 are synchronously rotated so as to feed out the base tape 101" from the first roll 102".

Meanwhile, at this time, the print-head driving circuit 120 (refer to FIG 6) supplies power to the plurality of heating elements of the print head 23 so as to print the label print R corresponding to the stored information of the RFID circuit element To on the front surface of the base film 101a" of the base tape 101", thereby forming a label tape 109" with print, which is then discharged to outside the cartridge 7".

After the label tape 109" with print has been discharged to outside the cartridge 7", the IC circuit part 151 is accessed (subjected to information reading/writing) via the loop antenna LC 1. The subsequent transport by the driving roller 51 and cutting by the cutting mechanism 15 may be sufficiently performed using the same methods as those of embodiment 1, and descriptions thereof will be omitted. Further, the half-cutting module 35 is the same as that of the modification of the above-described FIG 27.

In the present modification as well, the same effect as that of the above FIG 27 is achieved.

### (1-5) Other

While in the above the loop antenna LC2 for information acquisition is provided on the side surface of the apparatus main body 2, and information is read from the RFID circuit element To for information acquisition positioned on the outside of the apparatus main body 2 (the housing 200) on the side surface of the apparatus main body 2, the present invention is not limited thereto. That is, the loop antenna LC2 for information acquisition may be provided on the front surface or top surface of the apparatus main body 2, and information may be read from the RFID circuit element To for information acquisition positioned on the outside of the apparatus main body 2 (the housing 200) on the front surface or top surface of the apparatus main body 2. Furthermore, rather than providing the loop antenna LC 1 for label production and the loop antenna LC2 for information acquisition separately, the design may be constructed so that the two are provided as a common loop antenna.

Further, while the above described a case where RFID tag information is sent to the RFID circuit element To for label production and written to the IC circuit part 151 so as to form an RFID label T, the present invention is not limited thereto. That is, the present embodiment can also be applied to a case where an RFID label T is produced by reading RFID tag information from a read-only RFID circuit element To for label production in which predetermined RFID tag information is stored in advance in a non-erasable manner, and printing print corresponding to the RFID tag information thus read. In this case as well, the same effect as that above is achieved.

Further, while the above has been described in connection with an illustrative scenario in which the label tape 109 with print that had accessed (performed reading/writing with) the RFID circuit element To for label production is cut by the cutting mechanism 15 so as to form the RFID label T, the present invention is not limited thereto. That is, in a case where a label mount (a so-called die cut label) separated in advance to a predetermined size corresponding to the label is continuously disposed on the tape fed out from the roll, the present embodiment may also be applied to a case where the label is not cut using the cutting mechanism 15 but rather the label mount (a label mount containing the accessed RFID circuit element To for label production on which corresponding printing has been performed) only is peeled from the tape after the tape has been discharged from the label discharging exit 11 so as to form the RFID label T.

Other than those is previously described, approaches according to the embodiment 1 and modifications may be utilized in combination as appropriate.

Note that various modifications which are not described in particular can be made according to the present embodiment without departing from the spirit and scope of the present invention.

Furthermore, while in the above-described embodiment 1 the editing of the cutting position (the changing of the cutting position by operator input) was not described in detail, the operator needs to take care that the RFID circuit element T will not be cut when performing such an operation, in order to maintain the integrity of the RFID label T. Here, the settable area of the cutting position according to the disposed position of the RFID circuit element To, etc., may be displayed so as to enable the operator to edit the cutting position within the range of that area, thereby improving operator convenience. This will now be described in detail in embodiment 2.

The following describes embodiment 2 of the present invention with reference to accompanying drawings.

The configurations of the label manufacturing system LS of the present embodiment and the PC 118 and label producing apparatus 1 thereof are the same as those of the above embodiment 1, and detailed descriptions thereof will be omitted.

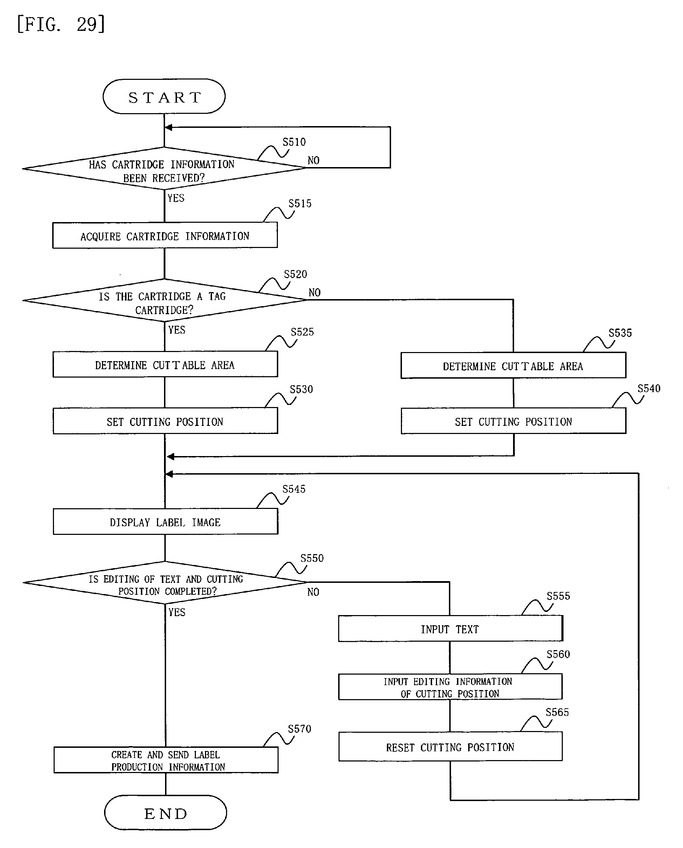

The content shown in FIG 29 is executed by a control circuit 130A (not shown) of the PC 118 when the RFID label T is produced using the label manufacturing system LS of the present embodiment. Note that the control circuit 130A starts this flow when, for example, the operator enters a suitable operation that instructs the system to start tag label editing.

In FIG 29, Step S510 to step S520 are the same as step S10 to step S20 of the aforementioned FIG 8. In these steps, the decision is made as to whether or not the cartridge information detected by the cartridge sensor 81 of the label producing apparatus 1 and acquired by the control circuit 110 has been received via the communication line NW from the (control circuit 110 of the) label producing apparatus 1 and, if so, the cartridge information related to the type of the cartridge 7 loaded to the cartridge holder 6 of the label producing apparatus 1 is acquired based on the received signal. The cartridge information, as described above, includes information such as whether or not the loaded cartridge 7 has an RFID circuit element To and, if so, the disposed interval (tag pitch) of the RFID circuit element To within the base tape 101, its disposed location, and the tape width of the base tape 101 (cover film 103). Then, the decision is made as to whether or not the cartridge 7 loaded to the cartridge holder 6 of the label producing apparatus 1 is a tag cartridge having an RFID circuit element To or a regular cartridge not having an RFID circuit element To, based on the acquired cartridge information. In a case where the cartridge is a tag cartridge and the decision is made that the condition is satisfied, the flow proceeds to the next step S525.

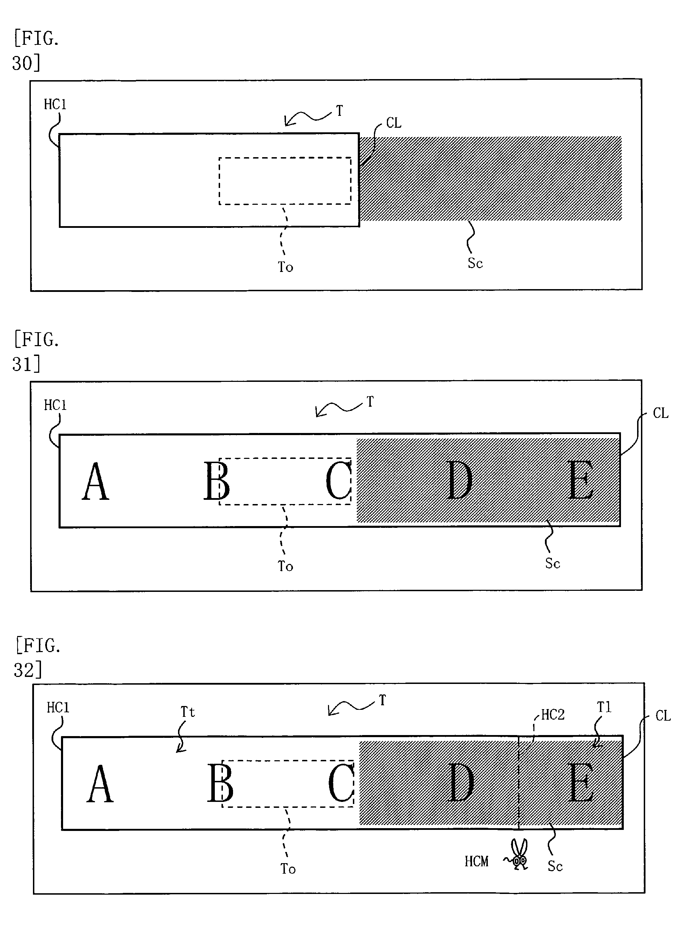

In step S525, the cuttable area Sc, which is the settable area of the full-cut position and half-cut position, is determined based on the disposed position information of the RFID circuit element To in the cartridge information acquired in the step S515, so that the cuttable area Sc does not overlap in the label thickness direction with that disposed position. Specifically, the area from the rear end of the RFID circuit element To (specifically, a position that is a predetermined margin away from that rear end) to the maximum full-cut position set based on the disposed interval information of the RFID circuit element To in the acquired cartridge information is set as the cuttable area Sc (refer to FIG 30 described later).

In the next step S530, the cutting position is set. Here, the cutting position refers to the front half-cut position and the full-cut position. The front half-cut position is different from the full-cut position, and is predetermined to be a certain position from the front end of the label tape 109 with print according to the type of the cartridge 7 (whether or not the cartridge is a tag cartridge, the tape width, etc.), regardless of the print content. Thus, the corresponding front half-cut position is set based on the cartridge information acquired in the step S515. The full-cut position varies within the range from the minimum full-cut position to the maximum full-cut position, according to print content. Here, however, the initial value of the full-cut position is set to the minimum full-cut position. The minimum full-cut position is uniquely determined according to the type of the cartridge 7, and is set at the rear end of the disposed position of the RFID circuit element To (specifically, a position a predetermined margin upstream from that end; for example, a position on the rear end side about 53.5mm from the front half-cut position; the position of the cutting line CL in FIG 30 described later), based on the disposed position information of the RFID circuit element To in the cartridge information acquired in the step S515. The above-described maximum full-cut position is also uniquely determined according to the type of the cartridge 7, and is located on the rear end side, away from the front end of the label tape 109 with print by a distance equivalent to simply the tag pitch (in other words, the distance between the cutting line CL and the cutting line CL; the length of one RFID label T) in the cartridge information acquired in the step S515. Thus, the front end and rear end positions of the cuttable area Sc determined in the step S525 correspond to the minimum and maximum full-cut positions.

In the step S520, in a case where the cartridge 7 loaded to the cartridge holder 6 of the label producing apparatus 1 is a regular cartridge, the decision is made that the condition is not satisfied, and the flow proceeds to the next step S535.

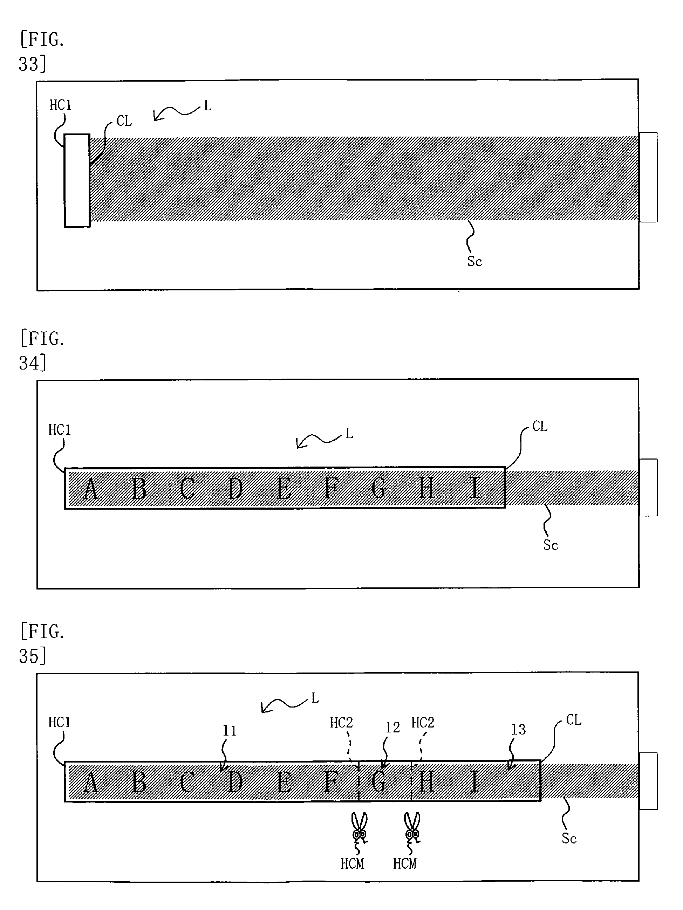

In step S535, the cuttable area Sc is determined. Specifically, the cuttable area Sc is set to an undefined length from a predetermined front end position (a position on the rear end side, 4mm from the front half-cut position, which is the same as the minimum full-cut position described later, for example) toward the rear end side (refer to FIG 33 described later). The maximum value in the tape longitudinal direction of the cuttable area Sc may be limited by the mechanical restrictions of the label producing apparatus 1, for example (to 1000mm or less from the front end of the label tape 109 with print, for example).

In the next step S540, the cutting position is set. Here, similar to the step S530, the cutting position refers to the front half-cut position and the full-cut position. As previously described, the front half-cut position is set to a certain position from the front end of the label tape 109 with print based on the cartridge information acquired in the step S515. While the full-cut position varies within a range from the minimum full-cut position to the maximum full-cut position according to print content, here the initial value is once again set to the predetermined minimum full-cut position (a position on the rear end side, 4mm from the front half-cut position, for example). The full-cut position in this case does not particularly have an upper limit (i.e., it is undefined), but is restricted accordingly in a case where an upper limit is set for the cuttable area SC as described above.

In the next step S545, a display signal is outputted to the display part 118a so as to display an image of the RFID label T (or regular label L), including the cuttable area Sc set in the step S525 and step S535, the front half-cut position (the corresponding front half-cut line HC1) and the minimum full-cut position (the corresponding cutting line CL) set in the step S530 and step S540, the entered text (in a case where text entry and cutting position editing is performed in step S555 and step S560 described later), and the reset cutting position (rear half-cut position and full-cut position) (refer to FIG 30 to FIG 35, etc., described later).

In step S550, the decision is made as to whether or not the operator has completed text editing and cutting position editing (full-cut position changes and/or rear half-cut position insertion, etc.) according to whether or not the operation signal of the label production start instruction has been inputted from the operation part 118b, for example. In a case where editing is not completed, the decision is made that the condition is not satisfied, and the flow proceeds to step S555.

In step S555, the text information entered via the operation part 118b by the operator is inputted.

In the next step S560, the editing information entered via the operation part 118b by the operator is inputted. Here, the cutting position refers to the rear half-cut position and the full-cut position, and the operator changes (moves) the full-cut position and edits the settings of (inserts, removes, etc.) the rear half-cut position or full-cut position using the operation part 118b (by dragging the object with the mouse or entering numbers using the keyboard, for example).

In the next step S565, the cutting position is reset based on the text information inputted in the step S555 and the editing information of the cutting position inputted in the step S560. Here, the cutting position once again refers to the rear half-cut position and the full-cut position. That is, first the full-cut position is reset according to the print end position calculated based on the text information inputted in the step S555, and then the full-cut position is further reset based on editing information in a case where the full-cut position is edited in the step S560. Further, in step S560, in a case where a rear half-cut position is inserted, etc., the rear half-cut position is set. Furthermore, in the step S560, in a case where the operator enters an operation that changes the position of the rear half-cut line HC2 (or cutting line CL) to outside the range of the cuttable area Sc, resetting is not performed. Then, the flow returns to the previous step S545.

Furthermore, in the step S550, in a case where text entry and cutting position editing are completed, the decision is made that the condition is satisfied and the flow proceeds to the next step S570. In this step S570, the label production information, including setting information such as the front and rear half-cut positions and full-cut position set in the above step, print data based on text information entered by the operator, and communication data (write data) of the RFID circuit element To for label production in a case where an RFID label T is to be produced, is created. The created label production information is then sent to the control circuit 110 of the label producing apparatus 1 via the communication line NW. With the above, the flow ends.

The present invention is not limited to the procedure indicated in the above flow. Steps may added or removed or the order of the steps may be changed without departing from the spirit and scope of the present invention. For example, the order of step S525 and step 530, step 535 and step 540, or step S55 and step 560 may be reversed.

An example of a display executed on the display part 118a of the PC 118 in the step S545 in a case where the cartridge 7 loaded to the cartridge holder 6 of the label producing apparatus 1 is a tag cartridge, is shown in FIG 30. FIG 30 shows the display prior to text entry by the operator.

In FIG 30, the image of the RFID label T to be produced, including the front half-cut line HC1, the cutting line CL set to the minimum full-cut position, and the cuttable area Sc, is displayed on the display part 118a. Here, the cuttable area Sc is determined to be on the rear end side of the disposed position of the RFID circuit element To so that the area does not overlap with the disposed position of the RFID circuit element To in the label thickness direction, as previously described.

While here the disposed position of the RFID circuit element To is not displayed on the display part 118a, the disposed area may be displayed in the same manner as the above embodiment 1. The aforementioned printable area So may also be displayed in the same manner as embodiment 1. Furthermore, while only the rear end side (right side in the figure) from the front half-cut position of the RFID label T to be produced is displayed and the front end side (the left side in the figure) is not displayed, the front end side from the front half-cut position may also be displayed (the same holds true for FIG. 31 to FIG 35, etc., described later).

An example of a display executed on the display part 118a of the PC 118 in a case where text (here, letters "ABCDE") is entered by the operator from the state of FIG 30, is shown in FIG 31.

In FIG 31, the image of the RIFD label T to be produced, including the front half-cut line HC1, the cutting line CL with the full-cut position reset by text input, the cuttable area Sc, and the text data (print image) disposed within the print area S, is displayed on the display part 118a. As described above, when the position of the rear end of the print area S (not shown here) determined according to the content of the entered text extends beyond the minimum full-cut position (the position of the cutting line CL in FIG 30), the full-cut position is reset according to that rear end position and the cutting line CL is displayed in the new position. As a result, the cutting line CL moves to the rear end side (the right side in the figure) in accordance with text input. Here, the cutting line is moved to the maximum full-cut position (the rear end of the cuttable area Sc).

An example of a display executed on the display part 118a of the PC 118 in a case where the cutting position is edited (here, a rear half-cut position is inserted) by the operator from the state of FIG 31, is shown in FIG 32.

As shown in FIG 32, the rear half-cut position is inserted within the cuttable area Sc, thereby displaying at that position a half-cut mark HCM for making the rear half-cut line HC2 and subsequent half-cut positions easy to understand. As a result, a single RFID label T comprising a tag label part Tt applicable as an RFID label that has an RFID circuit element To and on which label print (the letters "ABCD" in this example) is printed, and a regular label part T1 applicable as a regular label on which label print (the letter "E" in this example) is printed, that is positioned on the rear end side (right side in the figure) of the rear half-cut line HC2, is formed. In the event the operator enters an operation that changes the position of the rear half-cut line HC2 (or the cutting line CL) to outside the range of the cuttable area Sc when editing the cutting position, the setting itself is neither applied nor displayed. While the example shown here inserts a rear half-cut line HC2, a cutting line CL may also be inserted.

An example of a display executed on the display part 118a of the PC 118 in the step S545 in a case where the cartridge 7 loaded to the cartridge holder 6 of the label producing apparatus 1 is a regular cartridge, is shown in FIG 33. FIG 33 shows the display prior to text entry by the operator.

In FIG 33, the image of the regular label L to be produced, including the front half-cut line HC1, the cutting line CL set to the minimum full-cut position, and the cuttable area Sc, is displayed on the display part 118a. Here, the cuttable area Sc is set to an undefined length from the front end position (a position on the rear end side, 4mm from the front half-cut position, for example) toward the rear end side, as described above.

An example of a display executed on the display part 118a of the PC 118 in a case where text (here, letters "ABCDEFGHI") is entered by the operator from the state of FIG 33, is shown in FIG 34.

In FIG 34, the image of the regular label L to be produced, including the front half-cut line HC1, the cutting line CL with the full-cut position reset by text input, the cuttable area Sc, and the text data (print image) disposed within the print area S, is displayed on the display part 118a. At this time, the full-cut position is reset according to the position of the rear end of the print area S (not shown) based on text input, and the cutting line CL is displayed in the new position. As a result, the cutting line CL moves to the rear end side (the right side in the figure) in accordance with text input.

An example of a display executed on the display part 118a of the PC 118 in a case where the cutting position is edited (here, a rear half-cut position is inserted in two locations and the full-cut position is changed) by the operator from the state of FIG 34, is shown in FIG 35.

As shown in FIG 35, the rear half-cut position is inserted in a plurality of locations (two locations in this case) within the cuttable area Sc, thereby displaying at these positions a half-cut mark HCM for making the rear half-cut line HC2 and the subsequent half-cut positions easy to understand. As a result, a single regular label comprising three regular label parts 11, 12, and 13, i.e., the regular label part 11 applicable as a regular label on which label print (the letters "ABCDEF" in this example) is printed, the regular label part 12 applicable as a regular label on which label print (the letter "G" in this example) is printed, and a regular label part 13 applicable as a regular label on which label print (the letters "HI" in this example) is printed, is formed. Furthermore, here the full-cut position has been changed farther toward the rear end side (the right side in the figure) than the position shown in FIG 34, and the position of the cutting line CL has been moved toward the rear end side. As a result, the third regular label part 13 is formed with a larger margin after print end.

Furthermore, though not described above, an inserted rear half-cut line HC2 may also be removed during cutting position editing. At that time, in the event the operator enters an operation that disposes the rear half-cut position on the rear end side (that is, outside the label) of the full-cut position, the setting itself is neither applied nor displayed. While the above illustrates an example in which a rear half-cut line HC2 is inserted, a cutting line CL may also be inserted.

The control content executed by the control circuit 110 of the label producing apparatus 1 when an RFID label T is produced using the label manufacturing system LS of the present embodiment is the same as that of the above embodiment 1, and a description thereof will be omitted.

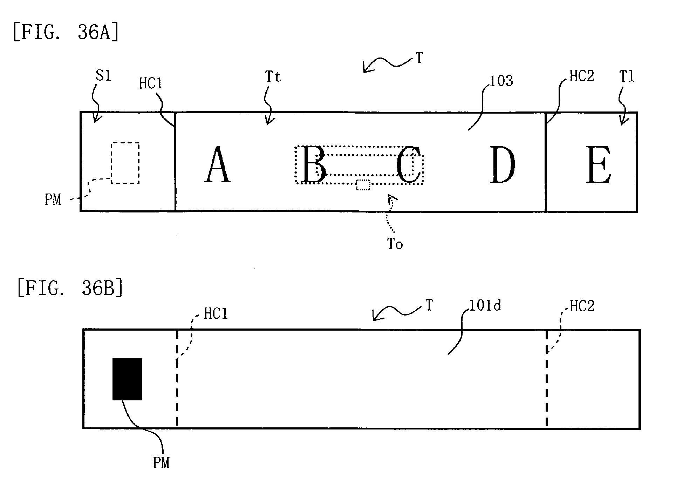

An example of the outer appearance of the RFID label T which includes an RFID circuit element To for label production to which information writing (or reading) has been performed and a label tape 109 with print that has been cut based on such control as described above, is shown in FIG 36. Here, the figure shows the label produced when a tag cartridge is loaded to the cartridge holder 6 of the label producing apparatus 1 and the cutting position and print shown in the aforementioned FIG 32 is edited.

In FIG 36, the RFID label T comprises a front end area S1 positioned on the front end side (left side in the figure) from the front half-cut line HC1, a tag label part Tt applicable as an RFID tag label that has an RFID circuit element To and on which label print (the letters "ABCD" in this example) is printed, that is positioned between the front half-cut line HC1 and the rear half-cut line HC2, and a regular label part T1 applicable as a regular label on which label print (the letter "E" in this example) is printed, that is positioned on the rear end side (right side in the figure) of the rear half-cut line HC2. The front end area S 1, the tag label part Tt, and the regular label part T1 are separated by the front half-cut line HC1 and the rear half-cut line HC2, while still retaining the separation sheet 101 d. As a result, the tag label part Tt is applicable as an RFID label when peeled from the separation sheet 101d, and the regular label part T1 is applicable as a regular label when peeled from the separation sheet 101d.

In the above-described embodiment 2, the base tape 101 comprising the RFID circuit element To needs to be cut in order to form the RFID label T. At this time, for example, the cutting position is sometimes preferably set within an area having certain restrictions so as to avoid the RFID circuit element To or perform cutting at a position a slight margin away from the position of the RFID circuit element To, etc. Or, sometimes the label tape 109 with print is partially half cut in the thickness direction so as to make it easier to peel off the label main body of the RFID label T to be affixed to an object. In this case as well, similar to the above, the half-cut position is sometimes preferably set in an area having a certain degree of restrictions. The PC 118 of the present embodiment determines a cuttable area Sc which makes it possible to set a cutting position (half-cut position and full-cut position) in at least one location on the base tape 101. At that time, the PC 118 acquires the cartridge information of the cartridge 7 and determines the cuttable area Sc according to that cartridge information. As a result, the cuttable area Sc is automatically determined according to the content of the cartridge information, i.e., the tape width, the disposed interval of the RFID circuit element To, and the like. That is, the cuttable area Sc is automatically determined without the operator being particularly aware, thereby improving operator convenience.

Further, particularly in the present embodiment, a plurality of cutting positions (in this case, rear half-cut positions) can be set within the cuttable area Sc during cutting position editing. With this arrangement, a tag label part Tt applicable as a tag label and a regular label part T1 applicable as a regular label not comprising an RFID circuit element can be formed in an RFID label T to be produced, thereby improving label production flexibility.

Further, particularly in the present embodiment, the PC 118 determines the cuttable area Sc according to the disposed interval (tag pitch) information of the RFID circuit element To included in the acquired cartridge information, so that the area falls within the value of that one pitch (that is, the length of one RFID label T). With this arrangement, even in a case where a plurality of base tape (tag tape) types having different disposed pitches of the RFID circuit element To is to be used by replacing the tag cartridge, the PC 118 determines a suitable cuttable area Sc for each base tape type. Further, even in a case where one base tape type is to be used using one cartridge type, the PC 118 determines the cuttable area Sc at a length corresponding to one disposed pitch (for producing an RFID label T comprising a single RFID circuit element To). As a result, operator convenience is further improved.

Further, particularly in the present embodiment, the PC 118 determines the cuttable area Sc so that the area does not overlap in the label width direction with the disposed position of the RFID circuit element To. With this arrangement, the operator can set a full-cut position or rear half-cut position that avoids the RFID circuit element To within the cuttable area Sc, without being particularly aware of the disposed position of the RFID circuit element To.

Further, particularly in the present embodiment, the image of the cuttable area Sc of the RFID label T or regular label L to be produced is displayed on the display part 118a of the PC 118. As a result, the operator is visually notified of the positional relationship by which the cuttable area Sc was determined in the RFID label T or regular label L to be produced. This makes it possible for the operator to easily set the full-cut position or rear half-cut position according to personal preference and intent in that cuttable area Sc.

Further, particularly in the present embodiment, the PC 118 determines the cuttable area Sc so as to produce an RFID label T that includes one RFID circuit element To, and displays the image of the RFm label T at a length corresponding to one fixed pitch, which includes the cuttable area Sc, on the display part 118a. With this arrangement, the image of the RFID label T at a length corresponding to one pitch is automatically displayed, thereby enabling the operator to set the full-cut position or rear half-cut position without being particularly aware of the break between each label and thus further improving operator convenience.

Further, particularly in the present embodiment, the full-cut position or rear half-cut position of the FID label T or regular label L to be produced can be set using the operation part 118b of the PC 118 and, according to this setting operation using the operation part 118b, the full-cut position or rear half-cut position is set within the cuttable area Sc. Then, the image of the full-cut position (cutting line CL) or rear half-cut position (rear half-cut line HC2) set above is displayed on the display part 118a. With this arrangement, the operator can set within the cuttable area Sc a full-cut position or rear half-cut position that corresponds to personal preference and intent using the operation part 118b. Further, the operator can recognize visually the full-cut position or rear half-cut position clearly at that time on the display part 118a.

Further, particularly in the present embodiment, in a case where the operator attempts to set the full-cut position or rear half-cut position outside the cuttable area Sc during cutting position editing, the setting itself is neither applied nor displayed. In this manner, the present embodiment substantially prevents the operator from setting a full-cut position or rear half-cut position outside the cuttable area Sc using the operation part 118b. With this arrangement, the operator is prevented from mistakenly setting a full-cut position or rear half-cut position in a location that must not be cut.

Further, particularly in the present embodiment, the print image based on the print head 23 of the RFID label T or regular label L to be produced is displayed on the display part 118a of the PC 118. With this arrangement, the positional relationship of the print image of the RFID label T or regular label L, the cuttable area Sc, and the full-cut position / rear half-cut position may be easily adjusted to a desired form according to operator preference and intent, thereby improving operator convenience.

Further, particularly in the present embodiment, the control circuit 110 of the label producing apparatus 1 controls in coordination the roller driving shaft 108, the cutting mechanism 15, and the half-cutting module 35 according to the editing result of the print and cutting position by the PC 118 and the detection result of the identification mark PM by the mark sensor 127. The control circuit 110 recognizes the feeding position of the base tape 110 and the cover film 103 according to the detection result of the mark sensor 127, and reliably operates the roller driving shaft 108, the cutting mechanism 15, and the half-cutting module 35 accordingly.

Note that various modifications may be made according to the present embodiment without departing from the spirit and scope of the present invention, in addition to the above-described embodiment. Description will be made below regarding such modifications.

### (2-1) In a case where a plurality of tag label images are displayed

While the above embodiment 2 has been described in connection with an illustrative scenario in which the image of a single RFID label T (or regular label L) to be produced is displayed on the display part 118a of the PC 118, the present invention is not limited thereto, and the images of a plurality of RFID labels T may by displayed in combination.

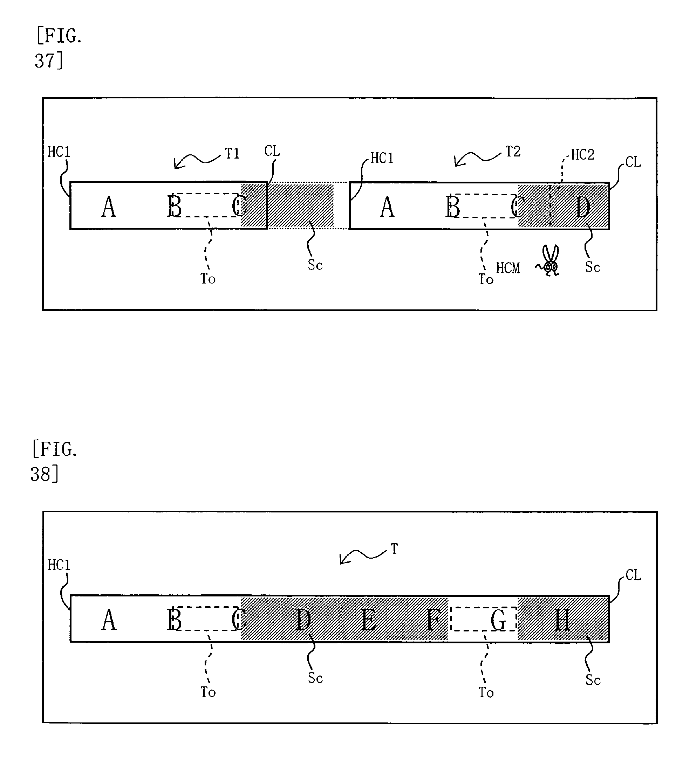

An example of a display executed on the display part 118a of the PC 118 in a case where there are two displayed labels, is shown in FIG 37. As shown in this figure, the images of the two RFID labels T are displayed in combination on the display part 118a, thereby enabling the operator to edit the print content and cutting position of the two tag labels together. In the example shown in FIG 37, the first RFID label T1 has a full-cut position set between the front end and rear end of the cuttable area Sc, and the second RFID label T2 has a full-cut position set at the rear end of the cuttable area Sc and a rear half-cut position set between the front end and rear end of the cuttable area Sc. Further, while two RFID labels T are displayed here with a slight distance therebetween, the labels may be displayed close to each other, and the second RFID label T may be displayed with a margin at the front end side (left side in the figure) of the front half-cut line HC1.

Additionally, in a case where two labels are displayed in this manner, the full-cut position (the cutting line CL) of the first label may be removable. An example of a display of such a case is shown in FIG 38. In the example shown in FIG 38, editing is performed so as to remove the cutting line CL between the first and second RFID labels, thereby displaying an RFID label T having two RFID circuit elements To overall. From this state, a half-cut position may be inserted in a suitable location within the cuttable area Sc. While the number of RFID labels T displayed in the above is two, a greater number of labels may be displayed.

According to the modification described above, in a case where an RFID label T containing a plurality of RFID circuit elements To is to be produced, an image of a tag label of a corresponding length (equivalent to a plurality of pitches) is automatically displayed. As a result, the operator can set the full-cut position or half-cut position without being particularly aware of the break between each label, thereby further improving operator convenience. Further, the full-cut position or half-cut position of a plurality of labels may be set on a single screen.

### (2-2) In a case where the operator is notified when the cutting position is set outside the cuttable area

While in the event the operator enters an operation that changes the position of the rear half-cut line HC2 (or the cutting line CL) to outside the range of the cuttable area Sc when editing the cutting position, the setting itself is neither applied nor displayed in the above embodiment 2, the present invention is not limited thereto. That is, the system may be designed so that such a setting can be set on the screen, but the setting results in an error display and non-transmission of that setting information to the label producing apparatus 1.

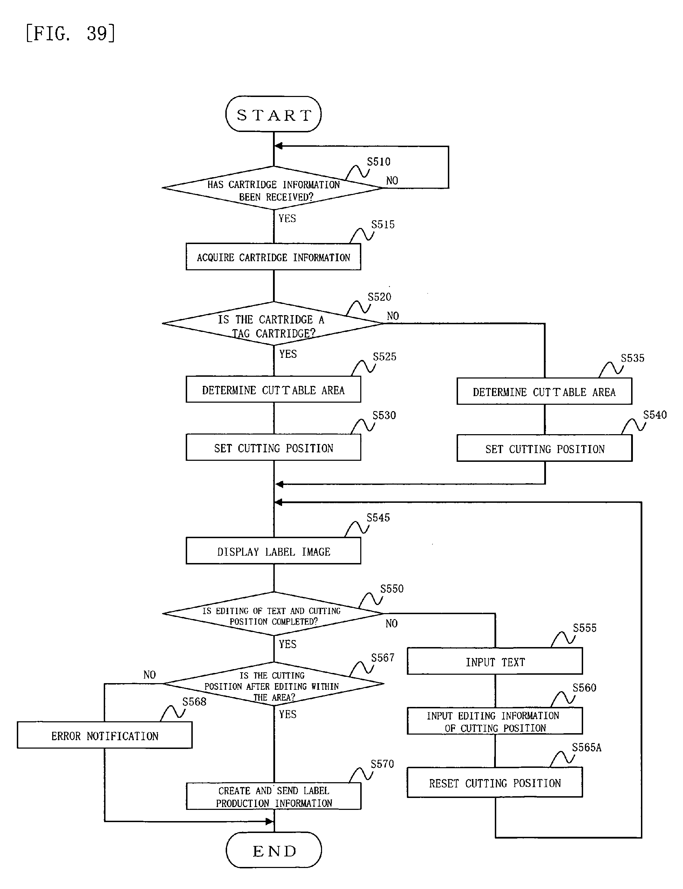

The control content shown in FIG 39 is executed by a control circuit 130A' (not shown) of the PC 118 when an RFID label T is produced in the present modification, and corresponds to the aforementioned FIG 29.

In FIG 39, step S510 to step S560 are the same as those of FIG 29, and descriptions thereof will be omitted.

In step S565A, similar to the above-described step S565 of FIG 29, the cutting position is reset based on the text information inputted in the step S555 and the editing information for the cutting position inputted in the step S560. Furthermore, even in a case where, in the step S560, the operator enters an operation sets the position of the rear half-cut line HC2 (or cutting line CL) to outside the range of the cuttable area Sc, resetting is performed. Then, the flow returns to the previous step S545, and the reset rear half-cut line HC2 (or cutting line CL) is displayed on the display part 118a.

Subsequently, when text input and cutting position editing is completed, the decision is made that the condition of step S550 is satisfied, and the flow proceeds to the next step S567. In step S567, the decision is made as to whether or not the position of the rear half-cut line HC2 (or the cutting line CL) entered by the operator in the step S560 is within the range of the cuttable area Sc. If the position is within the range of the cuttable area Sc, the flow proceeds to step S570 where label production information is created and sent to the label producing apparatus 1. On the other hand, if the position is outside the range of the cuttable area Sc in the step S567, the decision is made that the condition is not satisfied and the flow proceeds to step S568.

In step S568, a display signal is outputted to the display part 118a and a warning (such as "The cutting position is invalid" or "Please reset the cutting position") is displayed, thereby notifying the operator of the error. The flow then ends without transmitting the label production information.

The present invention is not limited to the procedure indicated in the above flow. Steps may added or removed or the order of the steps may be changed without departing from the spirit and scope of the present invention.

The present modification, similar to the above embodiment, makes it possible to prevent the operator from mistakenly setting a full-cut position or rear half-cut position in a location that must not be cut.

### (2-3) Other

The modifications (1-1) to (1-5) described in the aforementioned embodiment 1 may also be applied to embodiment 2 described above.

While the above embodiment 2 has been described in connection with an illustrative scenario in which a rear half-cut position is inserted during RFID label T production and the margin formed on the rear end side from the rear half-cut position is used as a regular label, the margin may be further subjected to half-cutting at a uniform interval to form a plurality of regular label parts of identical length, thereby further improving convenience in terms of margin use. Such a scenario will now be described in detail in embodiment 3.

The following describes embodiment 3 of the present invention with reference to accompanying drawings.

The configurations of the label manufacturing system LS of the present embodiment and the PC 118 and label producing apparatus 1 thereof are the same as those of the above embodiment 1, and detailed descriptions thereof will be omitted.

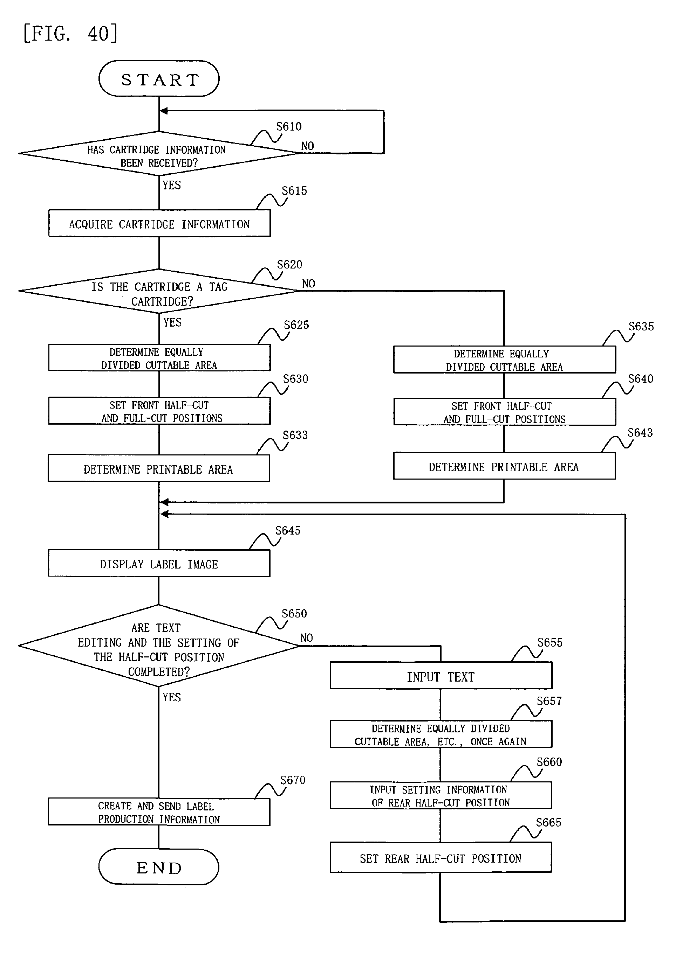

The control content shown in FIG 40 is executed by a control circuit 130B (not shown) of the PC 118 when the RFID label T is produced on the label manufacturing system LS of the present embodiment. Note that the control circuit 130B starts this flow when, for example, the operator enters a suitable operation that instructs the system to start tag label editing.

Step S610 to step S625 are the same as step S510 to step S525 of the aforementioned FIG 29. In these steps, the decision is made as to whether or not the cartridge information detected by the cartridge sensor 81 of the label producing apparatus 1 and acquired by the control circuit 110 has been received via the communication line NW from the (control circuit 110 of the) label producing apparatus 1 and, if so, the cartridge information related to the type of the cartridge 7 loaded to the cartridge holder 6 of the label producing apparatus 1 is acquired based on the received signal. Then, the decision is made as to whether the cartridge 7 loaded to the cartridge holder 6 of the label producing apparatus 1 is a tag cartridge having an RFID circuit element To or a regular cartridge not having an RFID circuit element To based on the acquired cartridge information. If the cartridge 7 is a tag cartridge, the flow proceeds to the next step S625 where, based on the disposed position information of the RFID circuit element To in the acquired cartridge information, the equally divided cuttable area Se, wherein a full-cut position or half-cut position can be set in a plurality of locations at a uniform interval, is determined so that the area does not overlap with that disposed position in the label thickness direction.

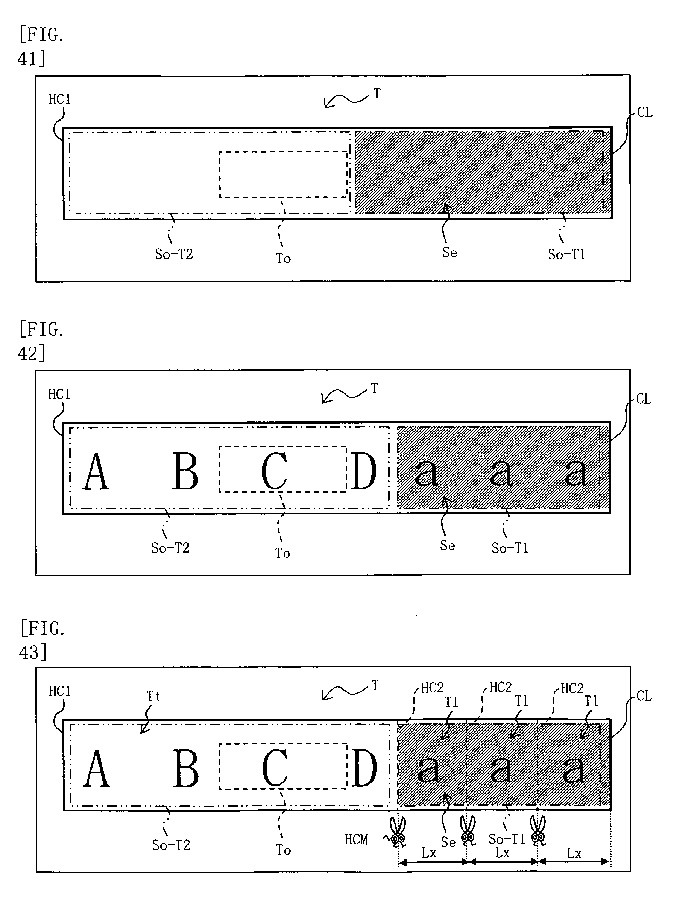

The equally divided cuttable area Se of the present embodiment, similar to the cuttable area Sc of the above embodiment 2, is set as the area from the rear end of the RFID circuit element To (specifically, a position a predetermined margin away from that end) to the maximum full-cut position set based on the disposed interval information of the RFID circuit element To in the acquired cartridge information (refer to FIG 41 described later) but, unlike the cuttable area Sc, reduces in size when the printable area So-T2 (refer to FIG 41 described later) corresponding to the tag label part having the RFID circuit element To of the RFID label T to be produced increases in size according to text entry by the operator. That is, when the printable area So-T2 increases in size due to text input, extending beyond the rear end of the RFID circuit element To, the equally divided cuttable area Se becomes the area from the rear end of that printable area So-T2 (or a position a preset margin away from that rear end) to the maximum full-cut position, thereby reducing in size in accordance with the size increase of the printable area So-T2.

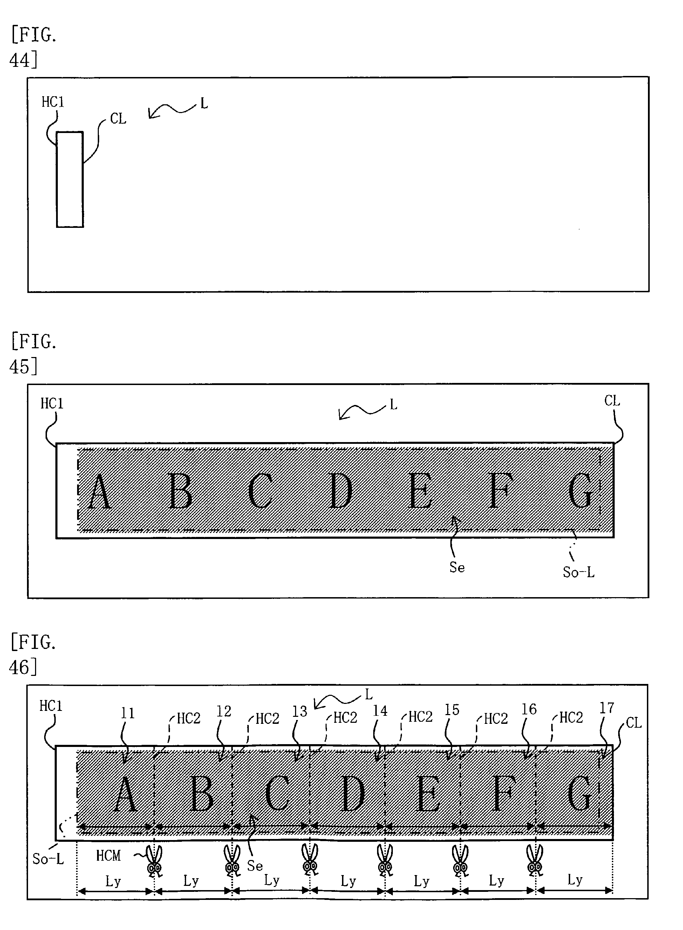

On the other hand, when a regular label L is to be produced, the equally divided cuttable area Se is set within a range from the rear end of the RFID circuit element To (specifically, a position a preset margin away from that rear end) to the full-cut position that moves in accordance with print content as described above, and thus, in a state where text has not been entered, the rear end position of the RFID circuit element To and the minimum full-cut position substantially match and the equally divided cuttable area Se is not displayed (refer to FIG 44 described later). On the other hand, when text is entered, the full-cut position moves in accordance with the size increase of the printable area So-L, thereby increasing the size of the cuttable area Se accordingly (refer to FIG 45 described later).

In the next step S630, the front half-cut position and the full-cut position are set. The front half-cut position is uniquely determined according to the type of the cartridge 7, based on the cartridge information acquired in the step S615. The full-cut position, unlike the first and second embodiment where the position varies within the range from the minimum full-cut position to the maximum full-cut position according to print content, is always set to the maximum full-cut position in the present embodiment. This maximum full-cut position is also uniquely determined according to the type of the cartridge 7, and is located on the rear end side, away from the front end of the label tape 109 with print by a distance equivalent to simply the tag pitch (in other words, the distance between the cutting line CL and the cutting line CL; the length of one RFID label T) in the cartridge information acquired in the step S615.

In the next step S633, the printable area in which printing is performed by the print head 23 is determined. Here, two areas are determined: the printable area So-T1 corresponding to the equally divided cuttable area Se determined in the step S625, and the area other than the equally divided cuttable area Se, i.e., the printable area So-T2 corresponding to the tag label part of the RFID circuit element To of the RFID label T to be produced (refer to FIG 41). The printable area So-T2 increases in size according to the text entered by the operator, and the printable area So-T1, similar to the above equally divided cuttable area Se, reduces in size based on the size increase of the printable area So-T2 resulting from the entered text. Thus, the printable area So-T1 and the equally divided cuttable area Se substantially match.

In the step S620, in a case where the cartridge 7 loaded to the cartridge holder 6 of the label producing apparatus 1 is a regular cartridge, the decision is made that the condition is not satisfied, and the flow proceeds to the next step S635.

In step S635, the equally divided cuttable area Se is determined. As described above, the equally divided cuttable area Se of the present embodiment, unlike the cuttable area Sc of the above embodiment 2, is not set to an undefined length, but rather to within a range from a predetermined front end position (a position at the rear end side, 4mm from the front half-cut position, which is the same as the minimum full-cut position, for example) to a full-cut position that moves according to print content. Thus, when text is not entered, the predetermined front end position and the minimum full-cut position substantially match, and the equally divided cuttable area Se is not displayed (refer to FIG 44 described later). On the other hand, when text is entered, the full-cut position moves accordingly, increasing the size of the equally divided cuttable area Se (refer to FIG 45 described later).

In the next step S640, the front half-cut position and the full-cut position are set. As previously described, the front half-cut position is set to a certain position from the front end of the label tape 109 with print based on the cartridge information acquired in the step S615. While the full-cut position varies within a range from the minimum full-cut position to the maximum full-cut position according to print content, here the initial value is set to the predetermined minimum full-cut position (a position on the rear end side, 4mm from the front half-cut position, for example).

In the next step S643, a printable area So-L, an area where printing is performed by the print head 23 and which corresponds to the divided cuttable area Se determined in the step S635, is determined. The printable area So-L and the equally divided cuttable area Se are designed so they substantially match, and when the equally divided cuttable area Se increases in size due to text entry as described above, the printable area So-L also increases in size.

In the next step S645, a display signal is outputted to the display part 118a so as to display an image of the RFID label T (or regular label L), including the equally divided cuttable area Se set in the step S625 and step S635, the front half-cut position (the corresponding front half-cut line HC1) and the full-cut position (the corresponding cutting line CL) set in the step S630 and step S640, and, in a case where text and rear half-cut position setting information are inputted in step S655 and step S660 described later, the entered text , the reset full-cut position (the corresponding cutting line CL), and the set rear half-cut position (the corresponding rear half-cut line HC2) (refer to FIG 41 to FIG 46, etc., described later).

In the next step S650, the decision is made as to whether or not the input of the text edited by the operator and the rear half-cut position setting information has been completed according to whether or not the operation signal of the label production start instruction has been inputted from the operation part 118b, for example. In a case where input is not completed, the decision is made that the condition is not satisfied, and the flow proceeds to step S655.

In step S655, the text information entered via the operation part 118b by the operator is inputted. At this time, the operator can individually enter text in each of the printable areas So-T1 and So-T2 determined in the step S633 and step S643 (refer to FIG 42 described later). Note that the print content of at least one of these printable areas So-T1 and So-T2 may be automatically generated using print data corresponding to the communication data (write data) of the RFID circuit element To for label production, rather than entered by the operator.

In step S657, the printable area So-T2 is determined once again based on the text information inputted in the printable area So-T2 in the step S655. As described above, the printable area So-T2 is determined once again in a case where the rear end position of the print area S (not shown) of the inputted text extends beyond the minimum full-cut position (the rear end of the disposed position of the RFID circuit element To). Then, the printable area So-T1 and the equally divided cuttable area Se are determined once again according to the re-determined printable area So-T2. As a result, when the printable area So-T2 increases in size due to text input, the printable area So-T1 and the equally divided cuttable area Se reduce in size in accordance with that size increase.

On the other hand, in a case where a regular label L is produced using a regular cartridge, because the minimum value of the full-cut position is set near the tape front end (for example, about 4mm from the front half-cut position) as described above, the full-cut position is reset according to the rear end position of that print area S (not shown) when text is inputted. As a result, when the full-cut position changes in the direction of increasing length due to text input, therefore the equally divided cuttable area Se and the printable area So-L also increase in size accordingly.

In the next step S660, the setting information of the rear half-cut position entered via the operation part 118b by the operator is inputted. This setting information relates to the rear half-cut position to be set in a plurality of locations at a uniform interval within the equally divided cuttable area Se determined in the step S625 or step S635, and indicates, for example, the uniform setting interval of that rear half-cut position, the number of rear half-cut positions to be inserted (or the number of regular label parts within the equally divided cuttable area Se formed by the insertion of the rear half-cut position), or the like. The operator can enter the setting information using the operation part 118b (by entering a number using the keyboard, for example).

In the next step S665, the rear half-cut position is set based on the setting information of the rear half-cut position inputted in the step S660. For example, in a case where a uniform setting interval of the rear half-cut position is inputted in the step S660, the rear half-cut position is set at every inputted interval from the front end side (or the rear end side) within the equally divided cuttable area Se. In a case where the number of rear half-cut positions to be inserted in the equally divided cuttable area Se (or the number of regular label parts within the equally divided cuttable area Se) is inputted in the step S660, for example, the rear half-cut position is set so as to insert the inputted number of rear half-cut positions within the equally divided cuttable area Se (or so as to divide the equally cuttable area Se into the inputted number of regular label parts). Then, the flow returns to the previous step S645.

In a case where text input and the setting of the rear half-cut position are completed in the step S650, the decision is made that the condition is satisfied and the flow proceeds to the next step S670. In this step S670, the label production information, including setting information such as the front and rear half-cut positions and full-cut position set in the above step, print data based on text information entered by the operator, and communication information (write data) of the RFID circuit element To for label production in a case where an RFID label T is to be produced, is created. The created label production information is then sent to the control circuit 110 of the label producing apparatus 1 via the communication line NW With the above, the flow ends.

The present invention is not limited to the procedure indicated in the above flow. Steps may added or removed or the order of the steps may be changed without departing from the spirit and scope of the present invention. For example, the order of the steps within the range of step S625 to step S633, or the range of step S635 to step S643 may be changed.

An example of a display executed on the display part 118a of the PC 118 in the step S645 in a case where the cartridge 7 loaded to the cartridge holder 6 of the label producing apparatus 1 is a tag cartridge, is shown in FIG 41. FIG 41 shows the display prior to text entry by the operator.

In FIG 41, the image of the RFID label T to be produced, including the front half-cut line HC1, the cutting line CL set to the maximum full-cut position, and the equally divided cuttable area Se, is displayed on the display part 118a. As shown in this figure, in the present embodiment the cutting line CL is fixed to the maximum full-cut position and does not move in accordance with text input as in the previously described embodiment. While here the disposed position of the RFID circuit element To and the printable areas So-T 1 and So-T2 are not displayed on the display part 118a, at least one of these may be displayed.

An example of a display executed on the display part 118a of the PC 118 in a case where text (here, letters "aaa" in the printable area So-T1, and letters "ABCD" in the printable area So-T2) is entered by the operator from the state of FIG 41, is shown in FIG 42.

In FIG 42, the image of the RIFD label T to be produced, including the front half-cut line HC1, the cutting line CL, the equally divided cuttable area Se, and the text data (print image) disposed within the printable areas So-1 and So-2, is displayed on the display part 118a. Here, because the rear end position of the print area S (not shown) extends beyond the minimum full-cut position (the rear end of the disposed position of the RFID circuit element To) due to text input, the printable area So-T2 increases in size, and the printable area So-T1 and the equally divided cuttable area Se reduce in size in accordance with that size increase.

An example of a display executed on the display part 118a of the PC 118 in a case where the rear half-cut position is set by the operator from the state of FIG 42, is shown in FIG 43.

FIG 43 illustrates a case where the operator enters a setting that sets the number of rear half-cut positions to be inserted within the equally divided cuttable area Se to three. Accordingly, as shown in the figure, three rear half-cut positions are inserted at a uniform interval of Lx within the equally divided cuttable area Se, and a rear half-cut line HC2 and a half-cutting mark HCM are displayed at these positions. As a result, a single RFID label T comprising a tag label part Tt applicable as an RFID label that comprises an RFID circuit element To and on which label print (the letters "ABCD" in this example) is printed, and three regular label parts T1 applicable as regular labels that are formed using the extra label section equally divided into three sections at the interval Lx and on which label print (the letter "a" in this example) is printed are formed.

While the above has been described in connection with an illustrative scenario in which "aaa" is entered as the text of the printable area So-T1 and the number of entered text characters matches the number of regular label parts T1 to be produced, the present invention is not limited thereto, and the number of text characters does not have to match the number of regular label parts T1. That is, "a" may be set as the text of the printable area So-T1, for example, and the text "a" may be printed on one of the three regular label parts T1 to be produced and not printed on the other two regular label parts T1. Further, while the example described above inserts a rear half-cut line HC2, a cutting line CL may also be inserted.

An example of a display executed on the display part 118a of the PC 118 in the step S645 in a case where the cartridge 7 loaded to the cartridge holder 6 of the label producing apparatus 1 is a regular cartridge, is shown in FIG 44. FIG 44 shows the display prior to text entry by the operator.

In FIG 44, the image of the regular label L to be produced, including the front half-cut line HC1 and the cutting line CL set to the minimum full-cut position, is displayed on the display part 118a. Here, because the predetermined front end position of the equally divided cuttable area Se substantially matches the minimum full-cut position as described above, the equally divided cuttable area Se is not displayed.

An example of a display executed on the display part 118a of the PC 118 in a case where text (here, letters "ABCDEFG") is entered by the operator from the state of FIG 44, is shown in FIG 45.

In FIG 45, the image of the regular label L to be produced, including the front half-cut line HC1, the cutting line CL with the full-cut position reset due to text input, the re-determined equally divided cuttable area Se, and the text data (print image) disposed within the re-determined printable area So-L, is displayed on the display part 118a. At this time, the full-cut position is reset according to the position of the rear end of the print area S (not shown) based on text input, and the cutting line CL is displayed in the new position. As a result, the cutting line CL moves to the rear end side (the right side in the figure) in accordance with text input. Further, the equally divided cuttable area Se increases in size as described above according to the change in the full-cut position, and the printable area So-L also increases in size according to that size increase.

An example of a display executed on the display part 118a of the PC 118 in a case where the rear half-cut position is set by the operator from the state of FIG 45, is shown in FIG 46.

FIG 46 illustrates a case where the operator enters a setting that sets the number of regular label parts within the equally divided cuttable area Se to seven (or inserts a rear half-cut position in six locations within the equally divided cuttable area Se). Accordingly, as shown in the figure, six rear half-cut positions are inserted at a uniform interval of Ly within the equally divided cuttable area Se, and a rear half-cut line HC2 and a half-cutting mark HCM are displayed at these positions. As a result, a single regular label L having seven regular label parts 11 to 17 applicable as regular labels on which label print (each letter "A" to "G" in this example) is respectively printed is formed.

Although not described in the above, in a case where an interval larger than the length of the equally divided cuttable area Se or an excessively high number of regular label parts is entered by the operator when setting the rear half-cut position, the setting itself is neither applied nor displayed (additionally, the operator may be notified of the error as described in the aforementioned FIG 39). Further, while the above has been described in connection with an illustrative scenario in which "ABCDEFG" is inputted as the text of the printable area So-L and the entered number of text characters matches the number of regular label parts 11 to 17 to be produced, the present invention is not limited thereto, and the number of text characters does not have to match the number of regular label parts. Further, while the example shown here inserts a rear half-cut line HC2, a cutting line CL may also be inserted.

The control content executed by the control circuit 110 of the label producing apparatus 1 when an RFID label T is produced using the label manufacturing system LS of the present embodiment is the same as that of the above embodiment 1, and a description thereof will be omitted.

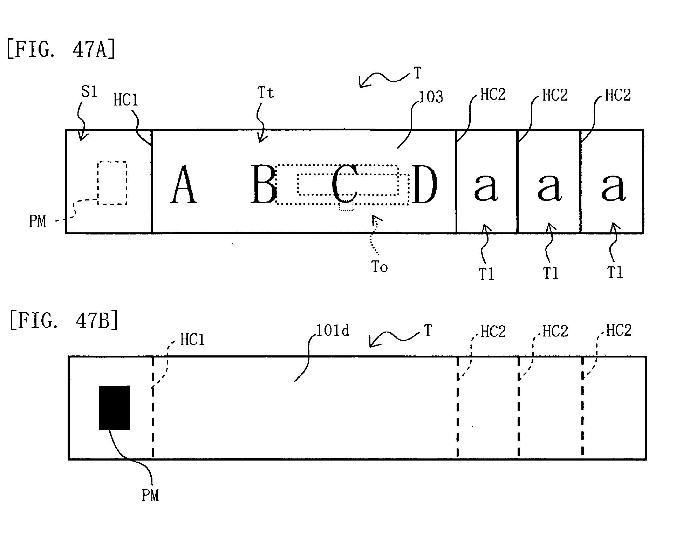

An example of the outer appearance of the RFID label T which includes an RFID circuit element To for label production to which information writing (or reading) has been performed and a label tape 109 with print that has been cut based on such control as described above, is shown in FIG 47. Here, the figure illustrates the label produced when a tag cartridge is loaded to the cartridge holder 6 of the label producing apparatus 1, and the print and rear half-cut position shown in the above-described FIG 43 is set.

In FIG 47, the RFID label T comprises a front end area S 1 positioned on the front end side (left side in the figure) from the front half-cut line HC1, a tag label part Tt applicable as an RFID label that has an RFID circuit element To and on which label print (the letters "ABCD" in this example) is printed, that is positioned between the front half-cut line HC1 and rear half-cut line HC2, and three regular label parts T1 applicable as regular labels on which label print (the letter "a" in this example) is printed, that is positioned on the rear end side (right side in the figure) of the rear half-cut line HC2 of the rear end (right end in the figure) of the tag label part Tt. The front end area S1, the tag label part Tt, and the three regular label parts T1 are separated by the front half-cut line HC 1 and the rear half-cut line HC2, while still retaining the separation sheet 101 d. As a result, the tag label part Tt is applicable as an RFID label when peeled from the separation sheet 101d, and the three regular label parts T1 are applicable as three regular labels when peeled from the separation sheet 101d.

In the above-described embodiment 3, the base tape 101 comprising the RFID circuit element To needs to be cut in order to form the RFID label T. Normally, because a plurality of RFID circuit elements To is often disposed at a predetermined equal pitch on the base tape 101, an extra section beyond that one pitch occurs in a case where the length of the tag label part Tt (the section including the RFID circuit element To) to be produced is short. In some cases, for example, this extra section is divided and cut into small labels at a plurality of cutting positions (or half-cut positions) and used for separate applications. In such a case, for example, the cutting position (or half-cut position) is sometimes preferably set within an area having certain restrictions so as to avoid the RFID circuit element To or perform cutting (or half-cutting) at a position a slight margin away from the position of the RFID circuit element To, etc.

In the PC 118 of the above embodiment 3, the equally divided cuttable area Se in which a plurality of cutting positions or half-cut positions (rear half-cut positions in the above embodiment) are set at a uniform interval on the base tape 101 is determined. A this time, the cartridge information is acquired and the equally divided cuttable area Se is determined according to that cartridge information. As a result, the equally divided cuttable area Se is automatically determined according to the content of the cartridge information (the tape width, the disposed interval of the RFID circuit element To, and the like). That is, an equally divided cuttable area Se for setting a plurality of cutting positions or half-cut positions (rear half-cut positions in the above embodiment) is automatically determined without the operator being particularly aware, thereby improving operator convenience.

Further, particularly in the present embodiment, a plurality of rear half-cut positions of the RFID label T to be produced can be set at a uniform interval using the operation part 118b of the PC 118 and, in the equally divided cuttable area Se determined according to that setting operation, a plurality of rear half-cut positions is set at a uniform interval. That is, according to the content of the cartridge information, the equally divided cuttable area Se is automatically determined, the plurality of rear half-cut positions at a uniform interval therein is automatically set, and that interval value is adjusted according to the setting operation performed by operator. With this arrangement, the equally divided cuttable area Se is automatically determined and the plurality of rear half-cut positions at a uniform interval is set without the operator being particularly aware, thereby improving operator convenience.

Further, particularly in the present embodiment, an image of the equally divided cuttable area Se and an image of the plurality of rear half-cut positions of the RFID label T to be produced are displayed according to the determined equally divided cuttable area Se and the setting result of the rear half-cut position set by the operator using the operation part 118a. As a result, the operator is visually informed of the positional relationship used to determine the equally divided cuttable area Se and the setting arrangement of the plurality of rear half-cut positions within that equally divided cuttable area Se, on the produced RFID label T. This then enables the operator to easily adjust the interval value of the plurality of rear half-cut positions, the number of label parts (or rear half-cut positions) to be formed, etc., according to personal preference and intent.

Further, particularly in the present embodiment, the PC 118 determines the equally divided cuttable area Se according to the disposed interval (tag pitch) information of the RFID circuit element To included in the acquired cartridge information, so that the area falls within the value of that one pitch (that is, the length of one RFID label T). With this arrangement, even in a case where a plurality of base tape (tag tape) types having different disposed pitches of the RFID circuit element To is to be used by replacing the tag cartridge, the PC 118 determines a suitable equally divided cuttable area Se for each base tape type. Further, even in a case where one base tape type is to be used using one cartridge type, the PC 118 determines the equally divided cuttable area Se at a length corresponding to one disposed pitch (in order to produce an RFID label T comprising a single RFID circuit element To). As a result, operator convenience is further improved.

Further, particularly in the present embodiment, the PC 118 determines the equally divided cuttable area Se so as to produce an RFID label T that includes one RFID circuit element To, and displays the image of an RFID label T of a length corresponding to one fixed pitch that includes the equally divided cuttable area Se. With this arrangement, the image of the RFID label T of a length corresponding to one pitch is automatically displayed, thereby enabling the operator to set the full-cut position or rear half-cut position without being particularly aware of the break between each label and thus further improving operator convenience.

Further, particularly in the present embodiment, the printable area So-T1 on the cover film 103 is determined according to the determined equally divided cuttable area Se. Then, the display part 118a displays a print image resulting from the print head 23 in addition to the equally divided cuttable area Se and the plurality of rear half-cut positions (rear half-cut lines HC2) of the RFID label T to be produced, according to the determined equally divided cuttable area Se, the setting result of the rear half-cut position set by the operator using the operation part 118b, and the determined printable area So-T1.

As a result, the positional relationship between the plurality of rear half-cut positions and the print area of the RFID label T to be produced is visually easy-to-understand. This enables the operator to adjust the positional relationship between the rear half-cut positions and the print text sections to a desired form according to personal preference and intent, thereby improving operator convenience.

Further, particularly in the present embodiment, when the operator edits the print data (text) using the operation part 118b of the PC 118, the corresponding image is displayed on the display part 118a. As a result, the operator can easily adjust the positional relationship between the rear half-cut positions and the print sections to a desired form while visually checking the positional relationship between the plurality of half-cut positions and print sections.

Further, particularly in the present embodiment, the printable area So-T1 on the cover film 103 corresponding to the equally divided cuttable area Se is determined when the tag label is produced, and a corresponding RFID label T with print is produced based on the result of text editing by the operator in the printable area So-T1. With this arrangement, the operator is notified of the positional relationship between the plurality of rear half-cut positions and print sections of the RFID label T to be produced in a visually easy-to-understand manner. As a result, the operator can adjust the positional relationship between the rear half-cut positions and the print text sections to a desired form according to personal preference and intent.

Further, particularly in the present embodiment, the print head 23 can print the print data corresponding to the content of the communication data (write data) of the RFID circuit element To in the printable area So-T1. Thus, an RFID label T comprising the print of content corresponding to information transmission/reception content can be formed in the extra section. This makes the content of the communication data stored in the RFID circuit element To or read from the RFID circuit element To visually clear, thereby improving operator convenience.

Note that various modifications may be made according to the present embodiment without departing from the spirit and scope of the present invention, in addition to the above-described embodiment. Description will be made below regarding such modifications.

### (3-1) In a case where overlap of the rear half-cut position and print is automatically avoided

Although not particularly described in the above embodiment, the print content of the printable area So-T1 corresponding to the equally divided cuttable area Se and the set rear half-cut position may overlap, depending on the rear half-cut position setting. In such a case, performing label production as is undesirable since doing so will produce a label with divided print. The present modification is an illustrative scenario of a case where a function configured to automatically avoid overlap of the rear half-cut position and print in such a case is provided.

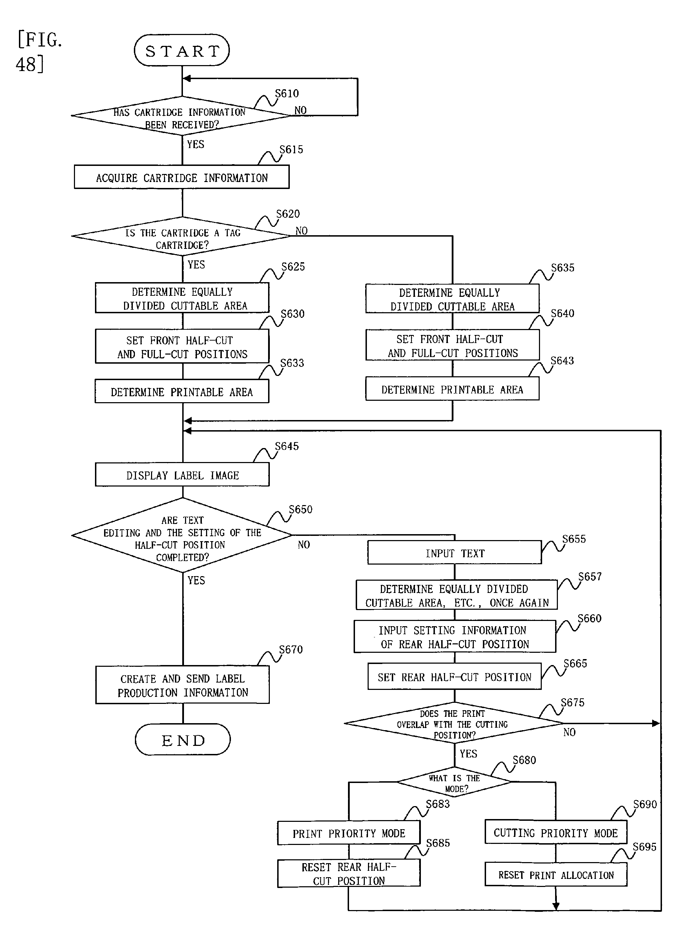

The control content shown in FIG 48 is executed by a control circuit 130B' (not shown) of the PC 118 when an RFID label T is produced in the present modification, and corresponds to the aforementioned FIG 40.

In FIG 48, step S610 to step S665 are the same as those of FIG 40, and descriptions thereof will be omitted.

In the next step S675, a decision is made as to whether or not the print content of the printable area So-T1 section inputted in the step S655 and the rear half-cut position set in the step S665 overlap. When the two do not overlap, the decision is made that the condition is not satisfied, and the flow returns to step S645. On the other hand, if the two do overlap, the decision is made that the condition is satisfied, and the flow proceeds to step S680.

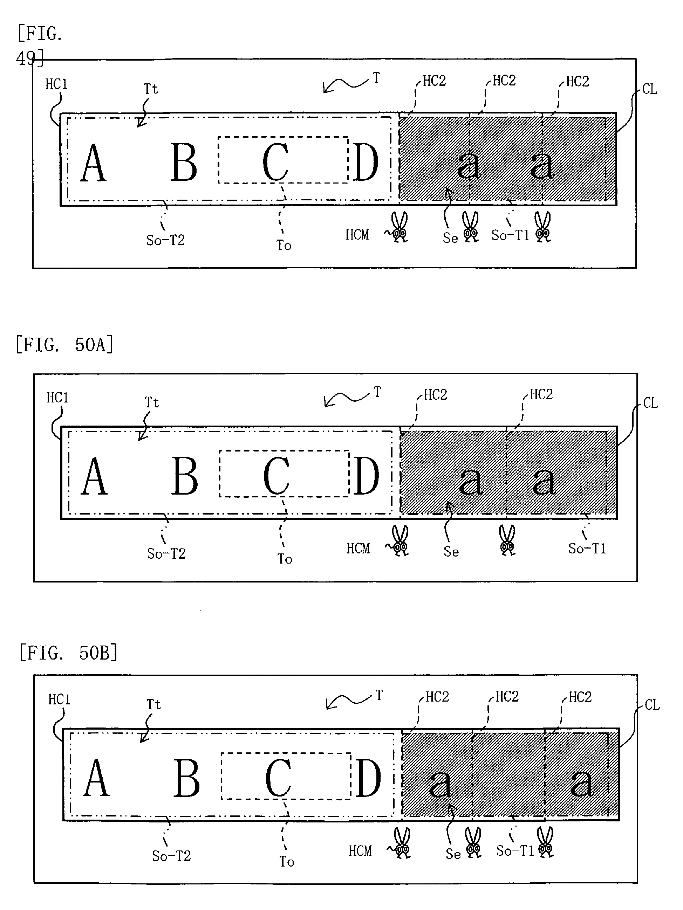

In step S680, the decision is made as to whether the operator has selected and entered print priority mode (cutting/half-cutting allocation mode), which adjusts the rear half-cut position according to print position, or cutting priority mode (print allocation mode), which adjusts the print position according to the rear half-cut position, based on the signal inputted by the operation part 118b. In a case where print priority mode is selected, the mode transitions to print priority mode in step S683 and, in the next step S685, the rear half-cut position is reset according to the print position (refer to FIG 50A described later). The rear half-cut position is reset by, for example, changing the cutting interval so as to avoid the print position, or changing the number of cutting locations. Then, the flow returns to the step S645.

On the other hand, in the step S680, in a case where cutting priority mode is selected, the mode transitions to cutting priority mode in step S690 and, in the next step S695, the print position is adjusted by adjusting the allocation of the print according to the rear half-cut position (refer to FIG 50B described later). Then, the flow returns to step S645. The print position is adjusted by, for example, inserting space in the text so as to avoid the rear half-cut position, changing the text font, or changing the number of return lines (or columns), thereby changing the print form.

The present invention is not limited to the procedure indicated in the above flow. Steps may added or removed or the order of the steps may be changed without departing from the spirit and scope of the present invention.

An example of a display executed on the display part 118a of the PC 118a in a case where the print content and the set rear half-cut positions overlap, is shown in FIG 49. In this example, the print content of the printable area So-T1 section is "aa," and this print content overlaps with two of the three rear half-cut lines HC2 set within the equally divided cuttable area Se.

An example of a display executed on the display part 118a of the PC 118 in a case where print priority mode is set by the operator and the rear half-cut positions are reset according to the print position in step S685, is shown in FIG 50A. Here, the rear half-cut positions are readjusted so that the equally divided cuttable area Se is equally divided into two sections, according to the print content "aa." As a result, the print content and rear half-cut positions do not overlap.

On the other hand, an example of a display executed on the display part 118a of the PC 118 in a case where cutting priority mode is set by the operator, and the print allocation is adjusted according to the rear half-cut positions in step S695, is shown in FIG 50B. Here, print allocation is adjusted so that the text "aa" is separated according to the rear half-cut lines HC2 of the three locations set within the equally divided cuttable area Se and, as a result, the print content and rear half-cut positions do not overlap.

While the above has been described in connection with an illustrative scenario in which an RFID label T having an RFID circuit element To is produced, the same control is performed in a case where a regular label L is produced.

In the above embodiment, in a case where one of the rear half-cut positions overlaps with the print text section, in cutting priority mode the rear half-cut position is made not to overlap with the print text section by allocating the print accordingly. In print priority mode, the rear half-cut position is made not to overlap with the print text section by allocating the rear half-cut position accordingly. As a result, production of a label with divided print is avoided, thereby further improving operator convenience.

Further, in the present modification, the configuration allows the operator to select either print priority mode, which adjusts the rear half-cut position according to the print position, or cutting priority mode, which adjusts the print position according to the rear half-cut position. By enabling selection of one of two modes in this manner, the present modification makes it possible for the operator to use, according to preference and intent, different methods that will prevent the rear half-cut position from overlapping with the print text section, thereby further improving operator convenience.

### (3-2) Variations of the print of the extra section

While the print content on the printable area So-T1 corresponding to the equally divided cuttable area Se is not particularly described in the above embodiment, bar code data, for example, may be printed. With this arrangement, an RFID label T comprising a bar code in the extra section of the label can be formed. Or, the sequence number data when producing RFID labels T using a tag cartridge may be printed. With this arrangement, an RFID label T comprising sequence number data in the extra section can be formed. This data can be used to clearly define the inter-association between labels when a plurality of RFID labels T are continuously produced, or the residual amount of the base tape 101 (including information pertaining to the residual and used number of RFID circuit elements To), thereby further improving operator convenience.

### (3-3) Other

The modifications (1-1) to (1-5) described in the aforementioned embodiment 1 and the modifications (2-1) and (2-2) described in the aforementioned embodiment 2 may also be applied to embodiment 3 described above.

In the embodiments 1 to 3, the setting of the positional relationship between the half-cut line HC1 or the cutting line CL, and the print area S is not particularly described in detail. Nevertheless, the distance between the half-cut line HC1 or the cutting line CL, and the print area S, that is, the distance of the non-print section (margin) may be suitably set so that it is favorable from an aesthetic or other point of view. Description will be made below regarding such an embodiment 4 of the present invention. Components identical to those in embodiments 1 to 3 are denoted using the same reference numerals, and descriptions thereof will be omitted or simplified as appropriate.

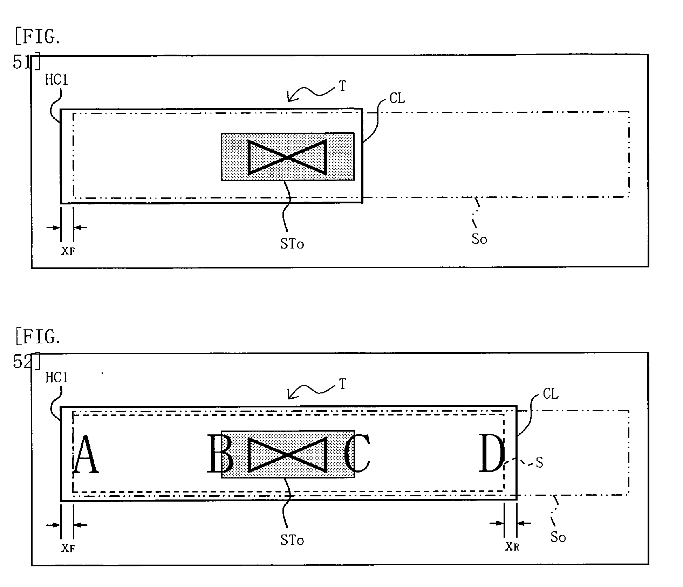

An example of a display executed on the display part 118a of the PC 118 when the above RFID label T is produced on the label manufacturing system LS according to the present embodiment, is respectively shown in FIG 51 to FIG 60.

FIG 51 corresponds to FIG 9 of the embodiment 1, and illustrates a display prior to text entry by the operator when normal print mode is selected. As shown in FIG 51, in the present embodiment as well, the image of the RFID label T to be produced, including the front half-cut line HC1, the cutting line CL set to the minimum full-cut position where distance is minimized, the disposed area STo of the RFID circuit element To, and the printable area So, is displayed on the display part 118a. At this time, in the present embodiment, the distance (front margin distance) XF from the half-cut line HC1, which is the end position on one side of the label main body with print, to the printable area So is set to a predetermined value (a value that should be minimally maintained in the area) corresponding to the cartridge information (the tape attribute information; information indicating that the cartridge is an RFID tag cartridge comprising an RFID circuit element To in this case) acquired based on the detection result of the cartridge sensor 81.

FIG 52 corresponds to FIG 10 of the above embodiment 1, and illustrates an example of a display executed on the display part 118a of the PC 118 in a case where text (here, letters "ABCD") is entered by the operator from the state of FIG 51. As shown in FIG 52, the image of the RIFD label T to be produced, including the front half-cut line HC1, the reset cutting line CL, the disposed area STo of the RFID circuit element To, and the print area S of the text data, is displayed on the display part 118a. Further, the distance (rear margin distance) XR from the cutting line CL, which is the end position on the other side of the label main body with print, to the printable area So is set to a predetermined value (a value that should be minimally maintained in the area) corresponding to the cartridge information acquired based on the detection result of the cartridge sensor 81, as described above.

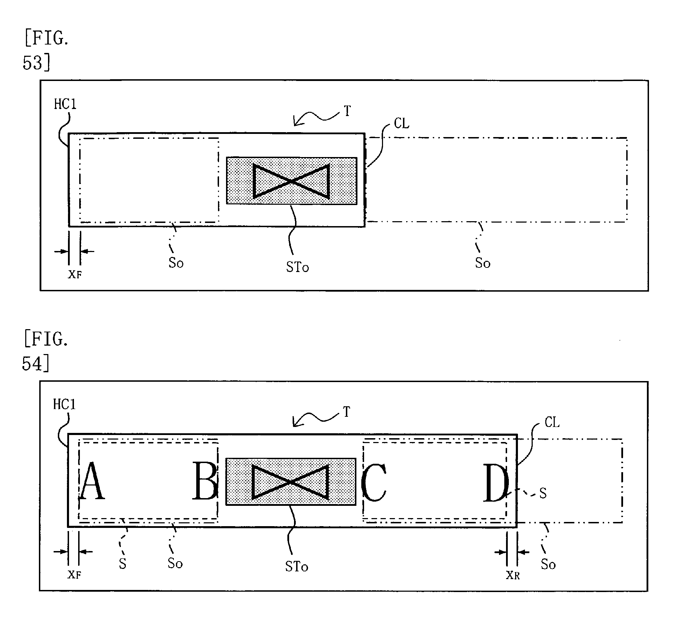

FIG 53 corresponds to FIG 12 of the above embodiment 1, and illustrates a display prior to text entry by the operator when tag avoidance mode is selected. Similar to FIG 12, in this case an image of the RFID label T to be produced, including the front half-cut line HC1, the cutting line CL set to the minimum full-cut position, the disposed area STo of the RFID circuit element To, and the printable area So disposed so that there is no overlap with that disposed area STo of the RFID circuit element, is displayed. At this time, similar to FIG 51, the distance (front margin distance) XF from the half-cut line HC1, which is the end position of one side of the label main body with print, to the printable area So is set to a predetermined value (a value that should be minimally maintained in the area) corresponding to the cartridge information acquired based on the detection result of the cartridge sensor 81. While in this example the value is the same as the front margin distance XF of FIG 51, the value may be different.

FIG 54 corresponds to FIG 13 of the above embodiment 1, and illustrates an example of a display executed on the display part 118a of the PC 118 in a case where text (here, letters "ABCD") is entered by the operator from the state of FIG 53. In FIG 54, similar to FIG 13, the image of the RIFD label T to be produced, including the front half-cut line HC1, the cutting line CL in a reset position, the disposed area STo of the RFID circuit element To, and the print area S of the text data, is displayed on the display part 118a. Then, similar to FIG 10, the distance (rear margin distance) XR from the cutting line CL, which is the end position of the other side of the label main body with print, to the printable area So is set to a predetermined value (a value that should be minimally maintained in the area) corresponding to the cartridge information. While in this example the value is the same as the rear margin distance XR of FIG 52, the value may be different.

Furthermore, while the front margin XF and the rear margin XR in FIG 51 to FIG 54 are substantially equal in this example, the present invention is not limited thereto, and one may be larger than the other.

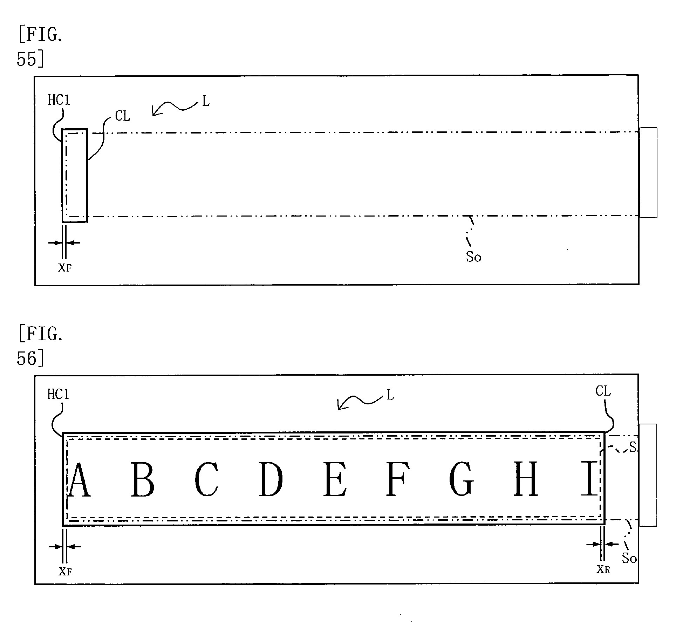

An example of a display executed on the display part 118a of the PC 118 when the above-described regular label L is produced on the label manufacturing system LS according to the present embodiment, is respectively shown in FIG 55 and FIG 56.

FIG 55 corresponds to FIG 14 of the embodiment 1, and illustrates a display prior to text entry by the operator when the regular cartridge is loaded to the cartridge holder 6. As shown in FIG. 55, the image of the regular label L to be produced, including the front half-cut line HC1, the cutting line CL set to the minimum full-cut position which minimizes distance, and the printable area So, is displayed on the display part 118a. At this time, similar to the case of the RFID label T, the distance (front margin distance) XF from the half-cut line, which is the end position on one side of the label main body with print, to the printable area So is set to a predetermined value (a value that should be minimally maintained in the area) corresponding to the cartridge information (the tape attribute information; information indicating that the cartridge is a regular cartridge not comprising an RFID circuit element To in this case) acquired based on the detection result of the cartridge sensor 81. In this example, the predetermined value is lower than that in the case of the RFID cartridge shown in FIG 51 to FIG 53.

FIG 56 corresponds to FIG 15 of the above embodiment 1, and illustrates an example of a display executed on the display part 118a of the PC 118 in a case where text (here, letters "ABCDEFGHI") is entered by the operator from the state of FIG 55. As shown in FIG 56, the image of the regular label L to be produced, including the half-cut line HC1, the cutting line CL in a reset position, and the print area S that includes the text data (print image), is displayed. The distance (rear margin distance) XR from the cutting line CL, which is the end position of the other side of the label main body with print, to the printable area So is set to a predetermined value (a value that should be minimally maintained in the area) corresponding to the cartridge information. In this example, this value is lower than that in the case of the RFID cartridge shown in FIG 10 and FIG 13.

Furthermore, while the front margin XF and the rear margin XR in FIG 55 and FIG 56 are substantially equal in this example, the present invention is not limited thereto, and one may be larger than the other.

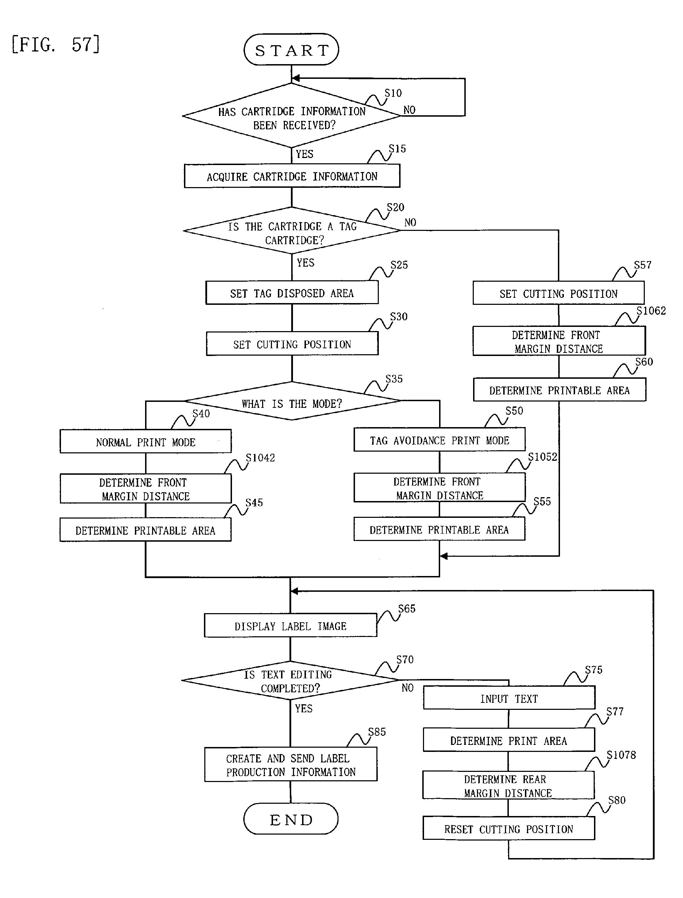

The control content shown in FIG 57 (corresponds to FIG 8) is executed by the control circuit 130 (not shown) of the PC 118.

In FIG 57, first, compared to FIG 8, this flow is first newly provided with step S1042 between steps S40 and step S45, step S1052 between steps S50 and step S55, and step S1062 between steps S57 and step S60.

In step S1042 corresponding to normal print mode, the front margin distance XF shown in FIG 51 is set (to a value that should be minimally maintained in the area; about 4mm, for example) according to the cartridge information (indicating that an RFID cartridge is loaded) acquired based on the detection signal of the cartridge sensor 81 in the step S15; hereinafter the same). In the subsequent step S45, the printable area So is determined so as to interpose the set front margin distance XF from the front half-cut position.

Similarly, in step S1052 corresponding to the tag avoidance print mode, the front margin distance XF shown in FIG 53 is set (to about 4mm, for example) according to the cartridge information (indicating that an RFID cartridge is loaded) acquired in the step S 15. In the subsequent step S55, the printable area So is determined so as to interpose the set front margin distance XF from the front half-cut position.

On the other hand, in step S1062 corresponding to when a regular cartridge is loaded, the front margin distance XF shown in FIG 55 is set (to about 1mm, for example) according to the cartridge information (indicating that a regular cartridge is loaded) acquired based on the detection signal of the cartridge sensor 81 in the step S 15. In the subsequent step S60, the printable area So is determined so as to interpose the set front margin distance XF from the front half-cut position.

In the flow shown in FIG 57, compared to FIG 8 described above, step S1078 is newly provided between step S77 and step S80. In this step S1078, the rear margin XR shown in FIG 52, FIG 54, or FIG 56 is set (to about 4mm for an RFID cartridge or about 1mm for a regular cartridge, for example) according to the cartridge information (whether an RFID cartridge or a regular cartridge is loaded) acquired based on the detection signal of the cartridge sensor 81 in the step S 15. Then, in the next step S80, the position of the cutting line (full-cut position) is determined so as to interpose the set rear margin distance XR from the print area S determined in the step S77.

All other steps are the same as those of FIG 8, and descriptions thereof will be omitted. The present invention is not limited to the above procedure. Steps may be added or removed or the order of the steps may be changed without departing from the spirit and scope of the present invention.

In embodiment 4 of the present invention configured as described above, the front margin distance XF and the rear margin distance XR, which are the dimensions of the non-print sections (where the color of the tape material is to remain as is, for example) of the area around the print area S of the label main body with print of the RFID label T and regular label L. As a result, the minimum value of the non-print sections where printing is not performed is automatically maintained according to tape width, the non-existence or existence and disposed interval of an RFID circuit element, and the like, without the operator being particularly aware, thereby improving the aesthetic quality of the label. As a result, operator convenience is improved.

Further, particularly in the present embodiment, the minimum values of the front and rear margin distance XF and XR change according to whether an RFID cartridge is loaded to the cartridge holder 6 so as to produce an RFID label T comprising an RFID circuit element To, or whether a regular cartridge is loaded to produce a regular label L. Particularly, in this example, the margin distance during RFID label T production is larger than during regular label L production. As a result, damage to the RFID circuit element To caused by the half-cutting operation of the half-cutting module 35 or the full-cutting operation of the cutting mechanism 15 is more reliably prevented.

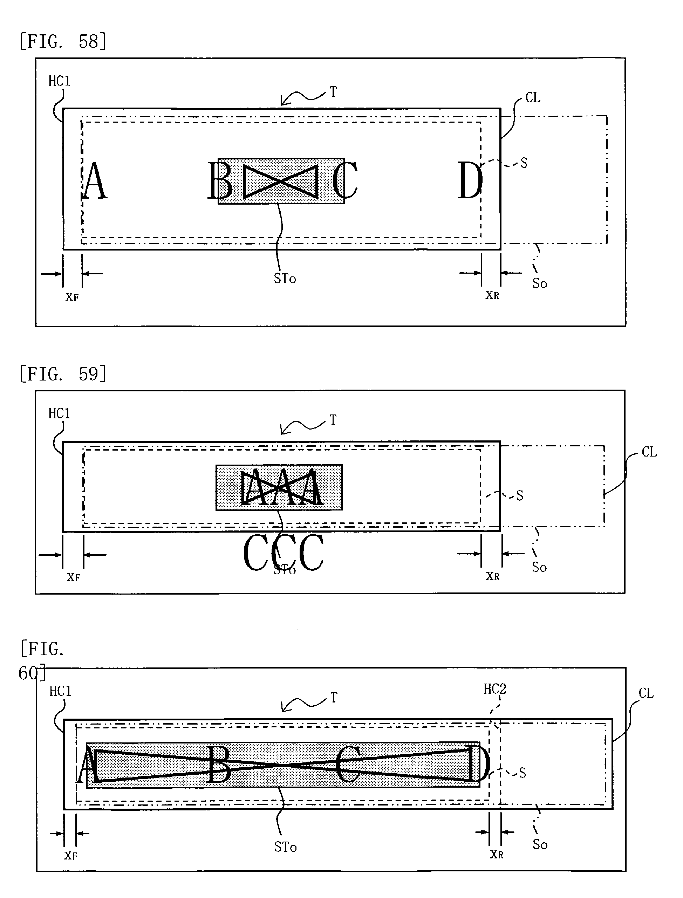

Furthermore, in the above, in step S1042, step S1052, and step S1062, the front margin distance XF and the rear margin distance XR are uniquely determined according to whether the cartridge is an RFID cartridge or a regular cartridge (in the case of an RFID cartridge, also according to whether the mode is normal print mode or tag avoidance print mode), based on the cartridge information acquired in step S 15. As described above, these uniquely determined values are values that should be minimally maintained (the minimum values) in these areas and, as minimum values, may be corrected (reset) in an increasing direction by adding different elements (also refer to the modification shown in FIG 59 described later).

Note that various modifications may be made according to the present embodiment without departing from the spirit and scope of the present invention, in addition to this embodiment 4. Description will be made below regarding such modifications.

### (4-1) In a case where the minimum margin distance value is determined according to tape width

A modification in which the margin distance is determined according to tape width, and corresponds to the above-described FIG 52, is shown in FIG 58.

FIG 58 illustrates an example of a case where an RFID cartridge having a wider tape width than the tape width in the case shown in FIG 52 is loaded (a case where this information is acquired as tape attribute information in step S15 via the cartridge sensor 81). In this example, because the tape width is wider than the tape width in the case of FIG 52, the minimum value which should be maintained as the front margin distance XF and the rear margin distance XR is slightly greater than that in the case of FIG 52. Although not shown, the front and rear margin distances XF and XR may be smaller in size than those in the case of FIG 52 if the tape width is smaller in size than the tape width in the case of FIG 52. Additionally, the front and rear margin distances may vary according to tape width (the margin distance may remain the same up to a predetermined tape width and increase when that value is exceeded, or increase up to a predetermined tape width and remain constant when that value is exceeded, etc.).

Furthermore, it is also possible to first determine the minimum value of the front/rear margin distance according to whether the cartridge is an RFID cartridge or a regular cartridge as described above, and then subsequently correct or reset the minimum value in an increasing direction (while observing that minimum value) using a different element such as the tape width (or tape attribute information or other data). Or, conversely, the minimum value of the front/rear margin distance may be determined based on tape width only, and then subsequently corrected or reset in an increasing direction according to a different element such as whether the cartridge is an RFID cartridge or regular cartridge (or tape attribute information or other data) .

FIG 59 illustrates an example of the resetting described above, and corresponds to the above FIG 52. This example illustrates a modification in which the margin distance is reset according to the print form.

FIG 59 shows a case where, in this example, the number of letters in the print area S is greater than that in the case shown in the above FIG 52, resulting in a decrease in character spacing. That is, first, as described in the above embodiment, information that the cartridge is an RFID cartridge [or that the tape width is a predetermined tape width as in the embodiment (4-1) described above] is acquired via the cartridge sensor 81 and, as a result, the front and rear margin distances XF and XR are each determined to be the minimum value that should be maintained. Then, subsequently, the front margin distance XF and the rear margin distance XR are reset to values somewhat greater than the minimum value, according to the text character form described above.

In the above modification, the minimum value of the front and rear margin distances XF and XR increases as the tape width increases. With this arrangement, in the label main body with print of the labels T and L to be produced, the visual balance of the print area S and the non-print sections is further improved, thereby further improving aesthetic appearance.

### (4-2) In a case where the rear half-cut line HC2 is established

FIG 60 illustrates a modification where the rear half-cut line HC2 is established, and corresponds to FIG 11 of the above embodiment 1.

In FIG 60, in this example, the rear margin distance XR is set between the print area S and the rear half-cut line HC2 (as the distance that should be minimally maintained in the area). That is, in this case, in step S1078 of FIG 57, the corresponding rear margin distance XR is set according to the cartridge information (whether an RFID cartridge or regular cartridge is loaded) acquired based on the detection signal of the cartridge sensor 81 in the step S15. Then, in the next step S80, the position of the rear half-cut line HC2 (rear half-cut position) is determined so as to interpose the set rear margin distance XR from the print area S determined in the step S77.

This modification also provides similar advantages to those of embodiment 4. Further, as shown in the figure, in a case where the RFID circuit element disposed position STo and the position of the rear half-cut line HC2 are close to each other, the minimum value of the rear margin distance is maintained, thereby more effectively and reliably preventing damage to the RFID circuit element To from the half-cutting module 35.

### (4-3) Other

While the above has been described in connection with an illustrative scenario in which the tape width and existence or non-existence of the RFID circuit element To are used as tape attribute information for determining the front and rear margin distances XF and XR, the present invention is not limited thereto. That is, the disposed interval of the RFID circuit element To, various physical properties such as tape thickness, color, and material, etc. (either on the base tape 101 side or the cover film 103 side) may be included.

In the present embodiment as well, as described in modification (1-3) of the above embodiment 1, the label producing apparatus 1 may be provided with the editing function of the PC 118 described above (a so-called stand-alone type). Further, the present embodiment may be applied to a configuration where the tapes are not bonded to each other, as in modification (1-4) of the above embodiment 1. In these cases as well, similar to the above, the effect of ensuring the aesthetic quality of the label without the operator being particularly aware is achieved.

Further, similar to the above, the loop antenna LC2 for information acquisition may be provided on the front surface or top surface of the apparatus main body 2, and information may be read from the RFID circuit element To for information acquisition positioned on the outside of the apparatus main body 2 (the housing 200) on the front surface or top surface of the apparatus main body 2. Furthermore, rather than providing the loop antenna LC 1 for label production and the loop antenna LC2 for information acquisition separately, the design may be constructed so that the two are provided as a common loop antenna. Further, the present embodiment can also be applied to a case where an RFID label T is created by reading RFID tag information from a read-only RFID circuit element To for label production in which predetermined RFID tag information is stored in advance in a non-erasable manner, and printing print corresponding to the RFID tag information thus read. In this case as well, the same effect as that above is achieved.

In the above embodiments 1 to 4, the identification mark PM in principle is provided on the tape at a constant pitch and, based on that PM, feeding control, printing control, cutting control, and the like are performed and the length of a single label is set to a standard length. In this case, after printing, a certain amount of feeding continues to achieve the standard label length. Nevertheless, depending on matters of convenience during label production and the preference of the operator, the present invention is not limited thereto, and various needs in relation to feeding behavior after printing completion may be met. For example, cases where the label length after printing is preferably adjusted according to operator preference (cut manually), or cases where the label is automatically cut due to the acceptability of a fixed label length exist. Embodiment 5 of the present invention wherein the operator can select and set the feeding behavior after printing according to such needs will now be described. Components identical to those in embodiments 1 to 4 are denoted using the same reference numerals, and descriptions thereof will be omitted or simplified as appropriate.

In the present embodiment, two modes of feeding behavior after printing have been prepared: a first mode in which the tape is fed to a specific position (in this example, the position where the movable blade 41 of the cutting mechanism 15 or the half-cutter 34 of the half-cutting module 35 is positioned opposite the full-cut position or half-cut position; described in detail later) after printing completion and then feeding stops, and a second mode in which feeding stops after printing completion. Then, based on the detection result by the cartridge sensor 81, the mode is set to (switched to; described later) the first mode in a case where an RFID label T is to be produced using an RFID cartridge (an RFID circuit element To is disposed at a fixed pitch in the tag tape; for this reason, the print area S of the cover film 3 is substantially divided accordingly) In this case, the RFID label T produced in this first mode in the present embodiment is the same as that described using FIG 20 and FIG 21 in the above embodiment 1 (and may be produced by the aforementioned tag avoidance mode).

That is, the RFID label T has a five-layer structure comprising the cover film 103, the adhesive layer 101 a, the base film 101 b, the adhesive layer 101 c, and the separation sheet 101d.

On the cover film 103, the adhesive layer 101a, the base film 101b, and the adhesive layer 101 c are formed the front half-cut line HC 1 and the rear half-cut line HC2 so that the RFID label T is partially cut in the thickness direction.

The label print R (the letters "ABCD" in the above example) corresponding to the stored information, etc., of the RFID circuit element To for label production is printed in the print area S between the half-cut lines HC1 and HC2 of the cover film 103. Each of the two sides in the tape longitudinal direction from the print area S, with the half-cut lines HC1 and HC2 therebetween, is formed as the front end area S1 and the rear end area S2, respectively.

The identification mark PM is provided on the front surface of the separation sheet 101d, at a predetermined position (in front of the front end of the loop antenna 152 on the forward side of the feeding direction in this example) corresponding to the RFID circuit element To for label production.

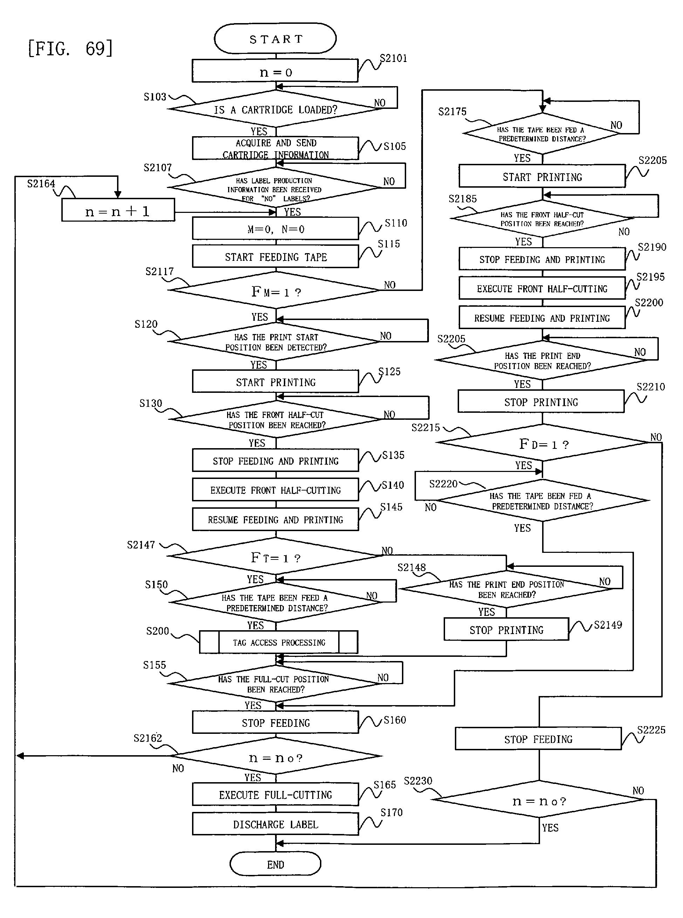

During label production, as previously described, feeding control, printing control, cutting control, and the like are performed using the identification mark PM (refer to the flow of FIG 69 described later). As a result, the area corresponding to the RFID circuit element To becomes the print area S, the half-cut lines HC1 and HC2 are formed adjacent to both sides of the print area S in the label longitudinal direction, and an RFID label T of a fixed length (corresponding to the disposed pitch of the RFID circuit element To) is formed by the cutting line CL.

On the other hand, in a case where a regular label L is produced using a regular cartridge, first, similar to the above, the mode is set to (switched to; described later) the first mode if the tape within the cartridge comprises a print area divided at a predetermined fixed pitch (for example, a pre-cut tape wherein an encircling cutting line for cutting out the area to be affixed as the label with print to the target object is formed at a fixed pitch in a plurality of locations). In cases other than the above, the first mode or second mode may be selected according to operator intent.

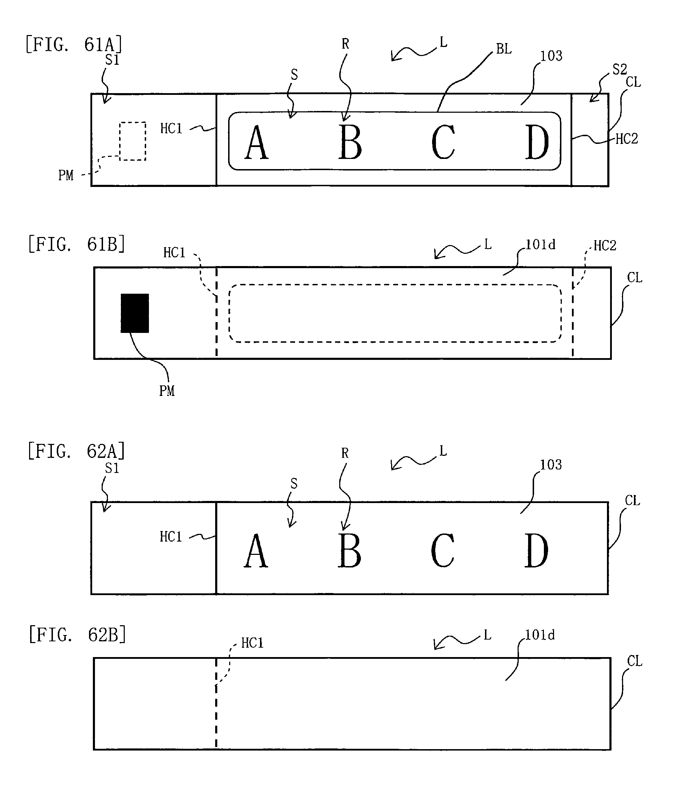

An example of the outer appearance of a regular label L that includes the encircling cutting line and was produced in the first mode using a regular cartridge (pre-cut cartridge) comprising the pre-cut tape, are shown in FIG 61A and FIG 61B. FIG 61A and FIG 61B respectively correspond to the above-described FIG 20A and FIG 20B.

In FIG 61A and FIG 61B, the regular label L, similar to the RFID label T, has a five-layer structure comprising the cover film 103, the adhesive layer 101a, the base film 101b, the adhesive layer 101c, and the separation sheet 101d.

On the cover film 103, the adhesive layer 101a, the base film 101b, and the adhesive layer 101c are formed the front half-cut line HC 1 and the rear half-cut line HC2 so that the regular label L is partially cut in the thickness direction.

The encircling cutting line BL is formed in the area between the half-cut lines HC1 and HC2 of the cover film 103. The encircling line BL, similar to the half-cut lines HC1 and HC2, is formed on the cover film 103, the adhesive layer 101a, the base film 101b, and the adhesive layer 101c (not on the separation sheet 101d). The print area S is disposed within the encircling cutting line BL. In this example, similar to the above, the label print R comprising the four letters "ABCD" is printed in the print area S. Similar to the above, each of the two sides in the tape longitudinal direction from the print area S, with the half-cut lines HC1 and HC2 therebetween, is formed as the front end area S 1 and the rear end area S2, respectively.

The identification mark PM is provided on the front surface of the separation sheet 101d, at a predetermined position (in front of the front end of the encircling cutting line BL in this example) corresponding to the encircling cutting line BL.

The encircling cutting line BL is formed in advance in the state of the pre-cut tape prior to label production. Then, during label production, similar to the above, feeding control, printing control, and cutting control are performed using the identification mark PM (refer to the flow of FIG 69 described later). As a result, the area inside the encircling cutting line BL becomes the print area S, the half-cut lines HC1 and HC2 are formed adjacent to both sides of the encircling cutting line BL in the label longitudinal direction, and a regular label L of a fixed length is formed by the cutting line CL.

An example of the outer appearance of the regular label L produced in first mode (selected according to operator intent) using a regular cartridge comprising a tape without the above-described encircling cutting line, is shown in FIG 62A and FIG 62B. FIG 62A and FIG 62B respectively correspond to the above-described FIG 61A and FIG 61B.

In the regular label L shown in FIG 62A and FIG 62B, the encircling cutting line BL and the rear half-cut line HC2 are not formed. That is, the area between the half-cut line HC1 and the cutting line CL of the cover film 103 makes up the print area S. One side in the tape longitudinal direction from the print area S, with the half-cut lines HC1 and HC2 therebetween, is the front end area S 1 (there is no rear end area S2).

The identification mark PM is not provided on the separation sheet 101d. During label production, feeding control, cutting control, printing control, and the like are performed as described above using the position of the cutting line CL at the end of production of the previous label (the full-cut position; or, a position fed a predetermined margin from that position) as reference, rather than the identification mark PM as described above (refer to the flow of FIG 69 described later). As a result, the half-cut line HC1 is formed adjacent to one side of the print area S in the label longitudinal direction, and a regular label L of a fixed length is formed by the cutting line CL.

The points other than those described above are the same as those of the regular label L shown in FIG 61A and FIG 61B.

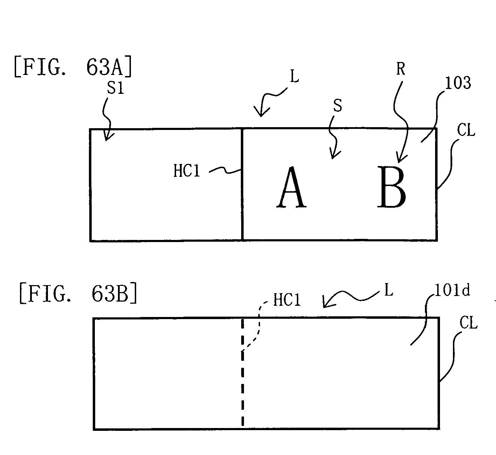

An example of the outer appearance of the regular label L produced in second mode (selected according to operator intent) using a regular cartridge comprising a tape without the above-described encircling cutting line, is shown in FIG 63A and FIG 63B. FIG 63A and FIG 63B respectively correspond to the above-described FIG 62A and FIG 62B.

In the regular label L shown in FIG 63A and FIG 63B, the label length to the cutting line CL is not fixed, but varies according to the print form (for example, the number of letters in the print text, the font, etc.) of the print area S (in this example, the relatively short label print R of two letters "AB" is printed in the print area S, resulting in a label length shorter than that of the regular label L of FIG 62). Similar to the above, during label production, feeding control, cutting control, printing control, and the like are performed using the position of the cutting line CL at the end of production of the previous label (the full-cut position; or, a position fed a predetermined margin from that position) as reference, rather than the identification mark PM as described above (refer to the flow of FIG 69 described later). At this time, the cutting line CL is formed adjacent to the other side in the label longitudinal direction according to the print form of the print area S as described above so as to form a regular label L of a variable length setting. Note that the position of the cutting line CL at this time may be set according to operator preference by, for example, using a suitable button (including the cutter driving key 90 or the power key 14, etc.) on the label producing apparatus 1 or entering a suitable operation on the PC 118.

The points other than those described above are the same as those of the regular label L shown in FIG 62A and FIG 62B.

The label producing apparatus 1 of the present embodiment comprises a function configured to continuously produce in batch form a plurality of RFID labels T (or a plurality of regular labels L) in coordination with the first mode and second mode setting (for details, refer to the flow of FIG 69 described later).

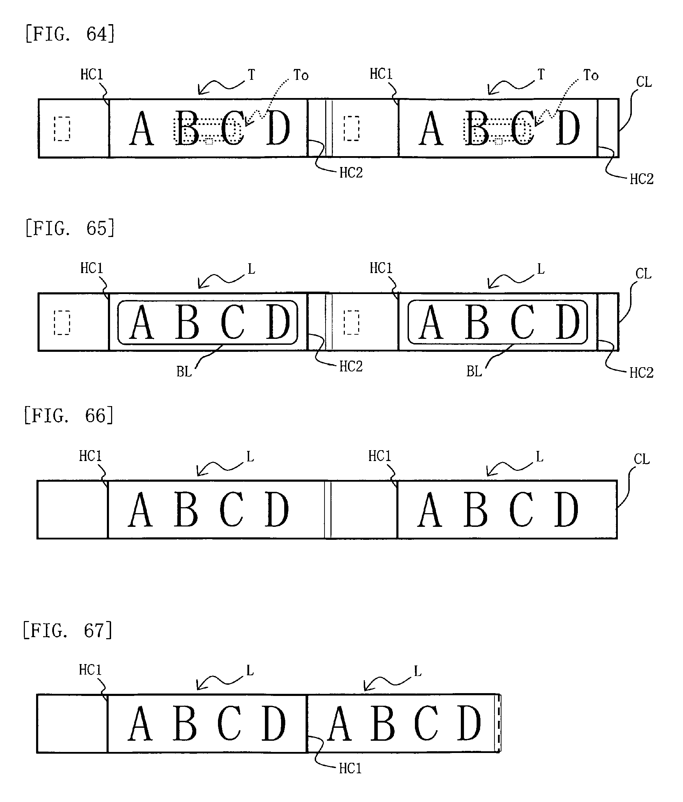

An example of the outer appearance in a case where a plurality (two in this example) of the RFID labels T described above using FIG 20 is produced in batch form, is shown in FIG 64. In this case, after the first (left side in the figure) RFID label T is produced, the RFID label T is transported (after printing is completed in the first mode) to a position for forming the cutting line CL (if production is normal single label production), but the cutting line CL is not formed (refer to the flow of FIG 69 described later; note that the half-cut line may be formed in place of the cutting line CL). Subsequently, the second (right side in the figure) RFID label T is produced in the same manner as the first label, thereby forming, with the formation of the cutting line CL at the end part, an RFID label main body having two labels therein. The length of this RFID label main body is about simply twice the length of the RFID label T produced during normal single label production (substantially equal to the disposed pitch of the RFID circuit element To).

An example of the outer appearance in a case where a plurality (two in this example) of the regular labels L with an encircling cutting line BL described above using FIG 61 is produced in batch form, is shown in FIG 65. In this case, similar to the above, after the first (left side in the figure) regular label L is produced, the regular label L is transported (after printing is completed in the first mode) to a position for forming the cutting line CL (if production is normal single label production), but the cutting line CL is not formed (refer to the flow of FIG 69 described later; note that the half-cut line may be formed in place of the cutting line CL). Subsequently, the second (right side in the figure) regular label L is produced in the same manner as the first label, thereby forming, with the formation of the cutting line CL at the end part, a regular label main body having two labels therein. The length of this regular label main body is about simply twice the length of the regular label L produced during normal single label production (substantially equal to the disposed pitch of the encircling cutting line BL).

An example of the outer appearance in a case where a plurality (two in this example) of the regular labels L without the encircling cutting line described above using FIG 62 is produced in batch form, is shown in FIG 66. In this case, similar to the above, after the first (left side in the figure) regular label L is produced, the regular label L is transported (after printing is completed in the first mode) to a position for forming the cutting line CL (if production is normal single label production), but the cutting line CL is not formed (refer to the flow of FIG 69 described later; note that the half-cut line may be formed in place of the cutting line CL). Subsequently, the second (right side in the figure) regular label L is produced in the same manner as the first label, thereby forming, with the formation of the cutting line CL at the end part, a regular label main body having two labels therein. The length of this regular label main body is simply about twice the length of the regular label L produced during normal single label production (a length set to a predetermined fixed value).

An example of the outer appearance of a case where a plurality (two in this example) of the regular labels L described above using FIG 63 is produced in batch form, is shown in FIG 67. In this case, after the first (left side in the figure) regular label L is produced, the regular label L is not transported (after printing is completed in the first mode) to the position for forming the cutting line CL after printing is completed as described above (transport stops after printing is completed in the second mode; refer to the flow of FIG 69 described later). Subsequently, the second (right side in the figure) regular label L is produced in the same manner as the first label L, but the half-cut line HC1 is formed at the label front end (downstream in the feeding direction; left side in the figure) after the regular label L, similar to the first label L, has been transported a predetermined distance, thereby forming a border line between the first label L and the second label L. In the present embodiment, formation of the cutting line CL on the end part of the very last label L produced (in this example, the second regular label L on the right side in the figure) is basically not performed in second mode. For this reason, the regular label body formed having two labels therein as described above remains connected to the tape discharged from the cartridge (a so-called chain print function). The length of this regular label body, unlike the above, is shorter by a distance equivalent to the front end area S 1 of the second regular label L (given that the length of the print area S section of each label L is the same as that in the above-described FIG 65 and FIG 66).

In this case, at least the rear end of the second regular label L is positioned on the inside of the housing 200 from the label discharging exit 11 of the label producing apparatus 1. For example, the first regular label L is discharged to the outside from the label discharging exit 11 while still in the connected state described above. As a result, the operator can affix the first regular label L to the target object by peeling off the four layers (the cover film 103, the adhesive layer 101 a, the base film 101b, and the adhesive layer 101 c) other than the separation sheet 101d of the five layer structure between the two half-cut lines HC1 and HC2 from the separation sheet 101d. The operator may also cut the first regular label L using a suitable scissors, etc.

The second label L is discharged to the outside from the discharging exit 11 when the next (the third) label L is produced, thereby enabling the operator to affix the second label L to the target object by peeling off the second label L in the same manner as described above.

After the second label L is produced, the second label L may be cut at the end part, discharged, and transported in the same manner as the first mode by performing a manual operation using a suitable button (including the cutter driving key 90, the power key 14, etc.) on the label producing apparatus 1 or by entering a suitable operation on the PC 118. The position of the cutting line CL at that time may also be set according to operator preference using the above-described manual operation (the same holds true for a case where only a single regular label L is produced in second mode).

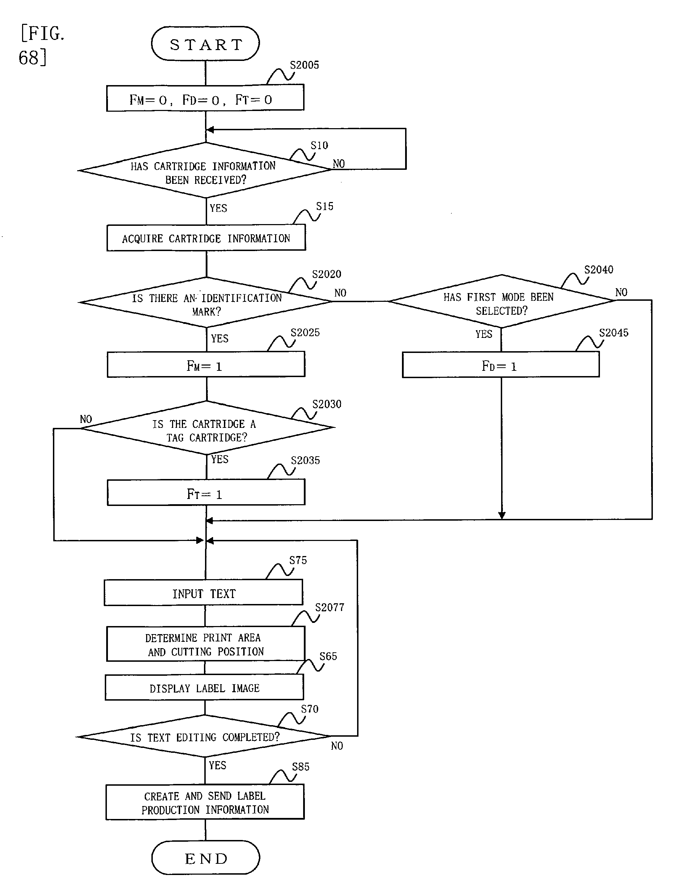

The control content shown in FIG 68 is executed by the control circuit 130 (not shown) of the PC 118 when an RFID label T and regular label L are produced on the label producing apparatus 1 of the present embodiment. This figure corresponds to the above-described FIG 8. Note that the same steps are denoted by the same reference numerals, and descriptions thereof will be suitably omitted or simplified. The control circuit 130 starts this flow when, for example, the operator enters a suitable operation that instructs the system to start label editing.

First, in step S2005, a marked cartridge flag FM configured to indicate whether or not the cartridge is a marked cartridge on which the identification mark PM is provided on the base tape 101 (or the cover film 103), a mode selection flag FD configured to indicate whether the operator has selected first mode, and a tag cartridge flag FT configured to indicate whether the cartridge is a tag cartridge comprising an RFID circuit element To are each initialized to zero.

Subsequently, in the step S10, similar to the above, the decision is made as to whether the cartridge information acquired by the control circuit 110 detected by the cartridge sensor 81 of the label producing apparatus 1 has been received via the communication line NW If the information has been received, the decision is made that the condition is satisfied, and the flow proceeds to the next step S 15.

In step S 15, similar to the above, the information of the cartridge loaded to the cartridge holder 6 of the label producing apparatus 1 is acquired based on the signal received in the step S10. The cartridge information, as described above, includes information indicating whether or not the cartridge is a tag cartridge having an RFID circuit element To and, if so, information such as the disposed interval of the RFID circuit element To (equivalent to the disposed interval of the identification mark PM), and the tape width of the base tape 101 (cover film 103). In a case where the cartridge is a regular cartridge not having an RFID circuit element To, the information includes the tape width of the base tape 101 (cover film 103) similar to the above as well as whether or not the cartridge is a marked cartridge having the above-described identification mark (in this example, having the encircling cutting line BL) and, if so, the disposed interval of the encircling cutting line (equivalent to the disposed interval of the identification mark PM).

In the next step S2020, the decision is made as to whether or not the cartridge 7 is a cartridge comprising an identification mark on the tape (i.e., a tag cartridge or a regular cartridge comprising an encircling cutting line BL) based on the cartridge information acquired in the step S 15. In the case where the cartridge comprises an identification mark, the decision is made that the condition is satisfied, and the flow proceeds to step S2025.

In step S2025, the marked cartridge flag FM configured to indicate that the cartridge is a marked cartridge having an identification mark PM is set to 1, and the flow proceeds to step S2030.

In step S2030, the decision is made as to whether the cartridge 7 is a tag cartridge having an RFID circuit element To in the base tape 101 based on the cartridge information acquired in the step S15. If the cartridge is not a tag cartridge (i.e., if the cartridge is a pre-cut cartridge), the decision is made that the condition is not satisfied, and the flow proceeds to step S75 described later. In a case where the cartridge is a tag cartridge, the decision is made in step S2030 that the condition is satisfied, the flow proceeds to step S2035.

In step S2035, the tag cartridge flag FT configured to indicate that the cartridge is a tag cartridge is set to 1, and the flow proceeds to step S75 described later.

On the other hand, in the step S2020, in a case where the cartridge 7 is not a cartridge comprising an identification mark on the tape (i.e., the cartridge is a regular tag cartridge without an encircling cutting line BL or identification mark PM), the decision is made that the condition is not satisfied, and the flow proceeds to step S2040.

In step S2040, the decision is made as to whether the operator selected first mode via the operation part 118b of the PC 118 (in a case where the cartridge is a regular tag cartridge without an encircling cutting line BL or identification mark PM described above, enabling the operator to select either first mode or second mode). If the operator selected first mode, the decision is made in step S2040 that the condition is satisfied, the mode selection flag FD is set to 1 in step S2045, and the flow proceeds to step S75 described later. On the other hand, if the operator selected second mode, the decision is made in step S2040 that the condition is not satisfied, and the flow directly proceeds to step S75.

In step S75, similar to the above, the text information entered via the operation part 118b by the operator is inputted.

Subsequently, in step S2077, the print area S corresponding to the text information inputted in the step S75 is determined. Additionally, the position of the front half-cut line HC 1 (front half-cut position), the position of the rear half-cut line HC2 (rear half-cut position), and the position of the cutting line CL (full-cut position) are determined. While a detailed description is omitted, the print area and these cutting positions may be determined using any of the means described in the above embodiments 1 to 4.

In step S65, similar to each of the above embodiments, a display signal is outputted to the display part 118a so as to display an image of the RFID label T (or regular label L) to be produced.

In step S70, similar to the above, the decision is made as to whether or not text editing by the operator has been completed, according to whether or not the operation signal of the label production start instruction has been inputted from the operation part 118b, for example. In a case where text entry has not been completed, the decision is made that the condition is not satisfied, and the flow returns to step S75. In step S70, in a case where text entry is completed, the decision is made that the condition is satisfied and the flow proceeds to the next step S85.

In step S85, similar to the above, label production information, including the various setting information set in the above step, print data based on the text information entered by the operator, communication information (write data) of the RFID circuit element To in a case where an RFID label T is to be produced, etc., as well as the values of the above three flags FM, FD, and FT, is created. The created label production information is then sent to the control circuit 110 of the label producing apparatus 1 via the communication line NW. Furthermore, while a detailed description is omitted, in a case where the label producing apparatus 1 is capable of continually producing a plurality of labels in batch form, the settings may be set in connection with NO (where NO is an integer equivalent to 1 or higher) RFID labels T or a plurality of regular labels L using the aforementioned procedure. In step S85, the label production information for NO labels is sent to the control circuit 110 (refer to step S2107 of FIG 69 described later). With the above, the flow ends.

The present invention is not limited to the procedure indicated in the above flow. Steps may added or removed or the order of the steps may be changed without departing from the spirit and scope of the present invention.

The control content shown in FIG 69 is executed by the control circuit 110 of the label producing apparatus 1 of the present embodiment, based on an editing operation performed via the PC 118. This figure corresponds to the above-described FIG 16. Note that the same steps are denoted by the same reference numerals, and descriptions thereof will be suitably omitted or simplified. As described above, this flow corresponds to the continual production of a plurality of labels in batch form. Note that the control circuit 110 starts the flow when, for example, the operator enters a suitable operation that instructs the system to start tag label editing on the PC 118, and that instruction signal is inputted from the PC 118.

First, in step S2101, the variable n for counting the number of labels to be produced during the continual batch production is reset to zero.

Next, in step S103, similar to the above, the decision is made as to whether or not the cartridge 7 is loaded to the cartridge holder 6, based on a detection signal from the cartridge sensor 81. In a case where the cartridge 7 is loaded, the decision is made that the condition is satisfied, and the flow proceeds to the next step S105.

In step S105, similar to the above, the cartridge information acquired based on the detection signal from the cartridge sensor 81 is sent to the PC 118 via the communication line NW.

In the next step S2107, the decision is made as to whether or not the production information for NO (NO: an integer equivalent to 1 or higher) labels has been received from the PC 118 via the communication line NW. This label production information includes, as described above, setting information such as the front and rear half-cut positions and full-cut position, print data based on text information entered by the operator, communication data (write data) of the RFID circuit element To for label production, and the three flags FM, FD, and FT. This step is repeated until the information has been received and, once the information is received, the decision is made that the condition is satisfied and the flow proceeds to the next step S110.

Next, in step S110, similar to the above, the variables M and N are initialized to zero.

Subsequently, the flow proceeds to step S115 where, similar to the above, the feeding roller 27 and the ribbon take-up roller 106 are rotationally driven so as to rotationally drive the driving roller 51. With this arrangement, the base tape 101 and the cover film 103 are affixed to each other so as to form a single tape, and the resultant label tape 109 with print is formed and transported.

Subsequently, in step S2117, the decision is made as to whether or not the marked cartridge flag FM equals 1. As described above using FIG 68, in a case where the cartridge 7 loaded to the cartridge holder 6 is the RFID cartridge or the pre-cut cartridge, the decision is made that the condition is satisfied since FM = 1, and the flow proceeds to step S120. On the other hand, in a case where the cartridge is a different cartridge, the decision is made that the condition is not satisfied since FM = 0, and the flow proceeds to step S2175 described later.

In step S120, similar to the above, the decision is made as to whether the identifier PM has been detected (whether or not the cover film 103 has reached the print start position), based on the detection signal of the mark detection sensor. If the identifier PM is detected, the decision is made that the condition is satisfied, and the flow proceeds to the next step S125.

In step S125, similar to the above, power is supplied to the print head 23 so as to start the printing of the label print R, such as the letters, symbols, or barcode corresponding to the print data in the label production information received in the step S2107, in the printable area S of the cover film 103.

Subsequently, in step S130, similar to the above, the decision is made as to whether or not the label tape 109 with print has been transported to the front half-cut position. If the front half-cut position has been reached, the condition is satisfied and the flow proceeds to the next step S135.

In step S135, similar to the above, the transport of the label tape 109 with print is stopped in a state where the half-cutter 34 is positioned in front of the front half-cut position, and the printing of the label print R is stopped (paused).

Subsequently, in step S140, similar to the above, the half-cutter 34 is rotated so as to perform the front half-cutting for forming the front half-cut line HC1.

Then, the flow proceeds to step S 145 where, similar to the above, the transport of the label tape 109 with print begins once again and the printing of the label print R resumes.

Subsequently, in step S2147, the decision is made as to whether or not the tag cartridge flag FT equals 1. As described above using FIG 68, in a case where the cartridge 7 loaded to the cartridge holder 6 is the RFID cartridge, the decision is made that the condition is satisfied since FT = 1, and the flow proceeds to step S150. On the other hand, in a case where the cartridge is the pre-cut cartridge, the decision is made that the condition is not satisfied since FT = 0, and the flow proceeds to step S2148 described later.

In step S 150, similar to the above, the decision is made as to whether or not the transported label tape 109 with print has been transported a predetermined distance. If the label tape 109 with print has been transported a predetermined distance, the condition is satisfied and the flow proceeds to the next step S200 where tag access processing similar to that described above is performed (a detailed description will be omitted).

After step S200 ends, the flow proceeds to step S155 where, similar to the above, the decision is made as to whether or not the label tape 109 with print has been transported to the full-cut position. If the label tape 109 with print has reached the full-cut position, the condition is satisfied and the flow proceeds to the next step S160.

In step S160, similar to the above, the transport of the label tape 109 with print is stopped in a state where the movable blade 41 of the cutting mechanism 15 is in front of the full-cut position.

Subsequently, in step S2162, the decision is made as to whether or not the variable n of the label production count is equal to the instructed label production count NO received in the step S2107. If label production of the same number of labels as the instructed count is completed, the decision is made that the condition is satisfied since n = NO, and the flow proceeds to step S165. If all labels have not been produced, the decision is made that the condition is not satisfied since n < NO (described later) and the flow proceeds to step S2164 where n is incremented by 1. The flow then returns to the step S 110 where the same procedure is repeated.

Note that step S160 and step S162 may be reversed so that, in a case where the decision is made in step S2162 that the condition is not satisfied, the flow proceeds to step S2164 and subsequent steps, without passing through step S160.

In step S165, similar to the above, the cover film 103, the adhesive layer 101 a, the base film 101b, the adhesive film 101c, and the separation sheet 101d of the label tape 109 with print are all cut (separated), and the full-cutting process for forming the cutting line is performed. The separation performed by the cutting mechanism 15 results in the formation of a label-shaped RFID label T with print or regular label L cut away from the label tape 109 with print.

Subsequently, the flow proceeds to step S 170 where, similar to the above, transport by the driving roller 51 resumes so as to discharge the RFID label T or regular label L to outside the apparatus from the label discharging exit 11, and the flow ends.

On the other hand, in a case where the decision is made in step S2117 that the condition is not satisfied, in step S2175, after tape transport resumes, the decision is made as to whether or not the tape has been transported a predetermined distance. This distance is, for example, preset as a fixed value in order to establish a small print-receiving area without label print R at the front end of the label. The decision at this time as well, similar to the above, may be made by detecting, for example, the transported distance after tape transport begins in the step S115, using a predetermined known method (by counting, for example, the number of pulses outputted by the feeding motor driving circuit 121 configured to drive the feeding motor 119, which is a pulse motor).

Subsequently, in step S2180, similar to the step S125, a control signal is outputted to the print-head driving circuit 120 via the input/output interface 113 so as to supply power to the print head 23 and start the printing of the label print R such as letters, symbols, barcodes, or the like, corresponding to the print data in the label production information received in step S2107 in the above-described printable area S of the cover film 103.

Next, in step S2185 corresponding to the step S130, similar to the above, the decision is made as to whether or not the label tape 109 with print has been transported to the front half-cut position. If the label tape 109 with print has been transported, the flow proceeds to step S2190 corresponding to step S135 where, similar to the above, the transport of the label tape 109 with print is stopped in a state where the half-cutter 34 is positioned in front of the front half-cut position, and the printing of the label print R is stopped (paused).

Then, in step 2195 corresponding to step S140, similar to the above, the half-cutter 34 is rotated so as to perform the front half-cutting for forming the front half-cut line HC1.

Subsequently, in step S2200 corresponding to step S145, similar to the above, the transport of the label tape 109 with print begins once again and the printing of the label print R resumes.

Then, in step S2205, similar to step S250 of the above-described FIG 17, the decision is made as to whether the label tape 109 with print has been transported to the above-described print end position (included in the label production information received in step S2107). The decision at this time as well, similar to the above, may be made by detecting, for example, the transported distance after transport begins in the step S 115, using a predetermined known method. Until the label tape 109 with print reaches the print end position, the decision is made that the condition is not satisfied and this step is repeated. Once the print end position has been reached, the decision is made that the condition is satisfied, and the flow proceeds to the next step S2210.

In step S2210, similar to step S260 of the above-described FIG 17, the power supply to the print head 23 is stopped, thereby stopping the printing of the label print R. As a result, the printing of the label print R in the print area S is completed.

Subsequently, in step 52215, the decision is made as to whether or not the mode selection flag FD equals 1. As described above using FIG 68, in a case where a cartridge other than the RFID cartridge or the pre-cut cartridge described above is loaded to the cartridge holder 6, the operator can select either first mode or second mode. In a case where the operator selects first mode, the decision is made that the condition is satisfied since FD = 1, and the flow proceeds to step S2220. In a case where the operator selects second mode, the decision is made that the condition is not satisfied since FD = 0, and the flow proceeds to step S2225.

In step S2220, the decision is made as to whether or not the label tape 109 with print has been transported the predetermined distance after printing had ended in step S2210. In order to set the label length to a predetermined fixed length corresponding to the selection of first mode (a mode in which the label length is set to a fixed length) by the operator, this distance is preset as the distance corresponding to the fixed length after tape transport begins in step S115. The decision at this time as well, similar to the above, may be made by detecting, for example, the transported distance after tape transport begins in the step S 115, using a predetermined known method (by counting, for example, the number of pulses outputted by the feeding motor driving circuit 121 configured to drive the feeding motor 119, which is a pulse motor).

If the label tape 109 with print has been transported the above-described predetermined distance, the decision is made in step S2220 that the condition is satisfied, the flow proceeds to the step S160, and the same procedure is performed.

On the other hand, in a case where second mode has been selected by the operator in the step S2215 and the decision is made that the condition is not satisfied, in step S2225, similar to the step S160, the rotation of the feeding roller 27, the ribbon take-up roller 106, and the driving roller 51 is stopped so as to stop the transport of the label tape 109 with print.

Subsequently, the flow proceeds to step S2230 where, similar to the step S2162, the decision is made as to whether or not the variable n of the label production count is equal to the instructed label production count NO received in the step S2107. If label production of the same number of labels as the instructed count is completed, the decision is made that the condition is satisfied since n = NO, and the flow ends. If all labels have not been produced, the decision is made that the condition is not satisfied since n < NO and the flow proceeds to the step S2164 where n is incremented by 1. The flow then returns to step S110 and the same procedure is repeated.

On the other hand, in the step S2147, in a case where the cartridge 7 loaded to the cartridge holder 6 is a pre-cut cartridge and the decision is made that the condition is not satisfied, in step S2148, similar to the step S2205, the decision is made as to whether or not the label tape 109 with print has been transported to the print end position (included in the label production information received in step S2107). When the label tape 109 with print reaches the print end position, the condition is satisfied and the flow proceeds to the next step S2149.

In step S2149, similar to the step S2210, the power supply to the print head 23 is stopped, thereby stopping the printing of the label print R. As a result, the printing of the label print R in the print area S is completed. Subsequently, the flow proceeds to step S155, and the same procedure is repeated.

The present invention is not limited to the procedure indicated in the above flow. Steps may added or removed or the order of the steps may be changed without departing from the spirit and scope of the present invention.

In embodiment 5 configured as described above, the PC 118 sets the transport behavior of the tape after printing is completed in the label producing apparatus 1 based on the cartridge information acquired by the cartridge sensor 81. As a result, when various cartridges having different RFID circuit element To and encircling cutting line BL statuses, disposed intervals, tape widths, etc., are installed to the cartridge holder 6, the transport behavior during label production is switched according to the selection operation of the operator (or automatically), in accordance with that cartridge type. With this arrangement, the label length can be made to flexibly correspond to the various needs related to transport behavior after printing is completed, such as a preference for automatic cutting when a fixed length is acceptable, or a desire to adjust the label length (perform cutting manually) after printing, based on convenience and operator preference during production. As a result, operator convenience is further improved.

Further, particularly in the present embodiment, in a case where a cartridge in which the print area S is substantially divided at a constant pitch (a tag cartridge or a pre-cut cartridge) is installed, the mode is set to first mode (step S2025 of FIG 68). As a result, the tape is transported to a specific position corresponding to that constant pitch (in this example, the position where the cutting line L is opposite the movable blade 41 of the cutting mechanism 15), transport is then stopped (refer to step S160 of FIG 29), and subsequent cutting is performed (step S165) so as to quickly and efficiently form an RFID label T or a regular label L with an encircling cutting line BL of a length corresponding to the constant pitch. At this time, cutting is performed automatically by the cutting mechanism 15 in step S165 so as to eliminate the need for the operator to perform cutting by using a tool such as a scissors or by manually operating the cutting mechanism 15, thereby reducing the labor burden of the operator. Furthermore, during RFID label T production, the transport stop position (full-cut position) in the step S160 is set to a position that does not overlap in the label thickness direction with the RFID circuit element To, thereby also achieving the effect of reliably preventing the operator from mistakenly cutting or damaging the RFID circuit element To by the above manual operation, etc. During regular label L production using a pre-cut cartridge as well, the design similarly reliably prevents the operator from mistakenly cutting the encircling cutting line BL.

Further, in a case where a different cartridge in which the print area S is divided at a constant pitch is installed, transport does not necessarily need to be stopped at a specific position (since the advantage is minimal) as in first mode described above since there is no division. This enables selection of either first mode configured to stop transport after the label tape 109 with print has been transported to a specific position, or second mode configured to stop transport immediately after printing without any such further feeding, using the PC 118 (refer to step S2040 of FIG 68), thereby increasing the operation flexibility of the operator and improving convenience. In a case where second mode is selected, as previously described above using FIG 67, it is also possible, for example, to discharge the front end side of a plurality of regular labels L from the label discharging exit 11 in a connected state.

Further, particularly in the present embodiment, when a tag cartridge or pre-cut cartridge is loaded, in the label producing apparatus 1 the identification mark PM can be detected by the sensor 127 (refer to step S120, etc.), the tape feeding position can be recognized according to the detection result, and the corresponding feeding control, printing control, and cutting control can be performed in coordination, thereby achieving reliable operation. It is also possible to use a plurality of cartridges having different relationships with regard to the disposed position of the RFID circuit element To (or encircling cutting line BL) and the position of the identification mark PM. In this case as well, the sensor 127 reliably identifies the identification mark PM so that the feeding position is accurately recognized and the various control processes are reliably executed in coordination.

Note that various modifications may be made according to the present embodiment without departing from the spirit and scope of the present invention, in addition to embodiment 5. Description will be made below regarding such modifications.

### (5-1) In a case where the rear half-cut line HC2 is omitted in the RFID label T

Using FIG 20, FIG 64, etc., the present embodiment has been described based on an illustrative scenario in which the RFID label T comprising an RFID circuit element To forms a rear half-cut line HC2 in addition to the front half-cut line HC1. Nevertheless, the present invention is not limited thereto, and the rear half-cut line HC2 may be omitted, depending on the print form of the print area S, for example (in a case where there are many printed letters, etc.).

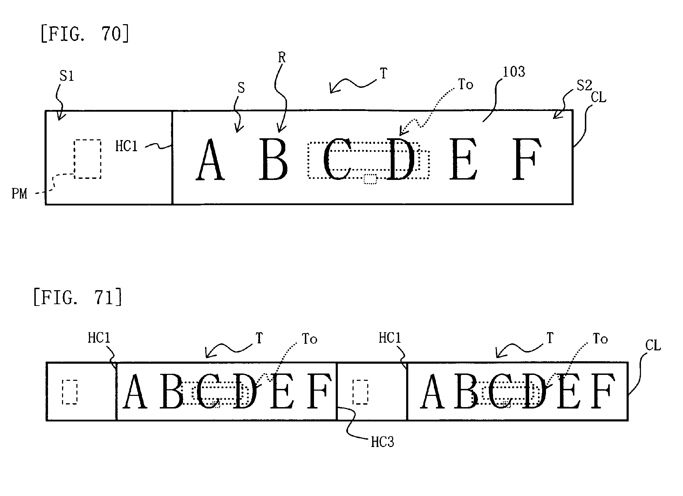

An example of the outer appearance of an RFID label T of the present modification is shown in FIG 70 (corresponds to the above-described FIG 20A).

The outer appearance in a case where a plurality (two in this example) of such RFID labels T is continually produced in batch form, and corresponds to the above-described FIG 65, is shown in FIG 71. Furthermore, in this example, as shown in the figure, a half-cut line HC3 is provided between the two RFID labels T and T (in the location where the cutting line CL is formed during normal single RFID label T production).

### (5-2) Other

In the present embodiment as well, as described in modification (1-3) of the above embodiment 1, the label producing apparatus 1 may be provided with the editing function of the PC 118 described above (a so-called stand-alone type). Further, the present embodiment may be applied to a configuration where the tapes are not bonded to each other, as in modification (1-4) of the above embodiment 1. In these cases as well, the various feeding behavior related needs of the operator after printing are flexibly supported, thereby achieving the effect of improving operator convenience.

Further, similar to the above, the loop antenna LC2 for information acquisition may be provided on the front surface or top surface of the apparatus main body 2, and information may be read from the RFID circuit element To for information acquisition positioned on the outside of the apparatus main body 2 (the housing 200) on the front surface or top surface of the apparatus main body 2. Furthermore, rather than providing the loop antenna LC 1 for label production and the loop antenna LC2 for information acquisition separately, the design may be constructed so that the two are provided as a common loop antenna. Further, the present embodiment can also be applied to a case where an RFID label T is created by reading RFID tag information from a read-only RFID circuit element To for label production in which predetermined RFID tag information is stored in advance in a non-erasable manner, and printing print corresponding to the RFID tag information thus read. In this case as well, the same effect as that above is achieved.

In the above embodiments 1 to 5, information reading based on the loop antenna LC2 for information acquisition provided in the label producing apparatus 1 was not particularly described in detail. Through use of an information acquisition function (reader function) from outside the apparatus, the information stored in the IC circuit part can be acquired via wireless communication from the RFID label T or other RFID tag (hereinafter simply referred to as "RFID tag"; these RFID tags comprise the above-described RFID circuit element To for information acquisition) produced using the label producing apparatus 1, for example. At this time, the command signal for each operation device within the label producing apparatus 1, such as the print head 23, the feeding roller 27, the loop antenna LC for label production, the cutting mechanism 15, and the half-cutting module 35, may be stored in that RFID tag. Then, the RFID tag is read so as to acquire the command signal, thereby enabling operation of the corresponding operation device based on that command signal. Description will be made below regarding such an embodiment 6 of the present invention.

The present embodiment applies a command execution function that is based on the reading of the RFID tag to the inspection (maintenance inspection after product purchase, inspection prior to product shipment, etc.) of the label producing apparatus 1. Further, as a feature of the present embodiment, the content of the command signal stored in the RFID tag (inspection RFID tag) at the time the various operation devices are to be given operation instructions is substantially (at least partially) standardized to the command signal inputted via the input/output interface 113 from the PC 118 and the command signal from the operation devices (the power key 14, the cutter driving key 90, etc., in this example) of the label producing apparatus 1. That is, in the label producing apparatus 1 of the present embodiment, the above inspection processing may be executed from the RFID tag, from the PC 118, and from the operation device.

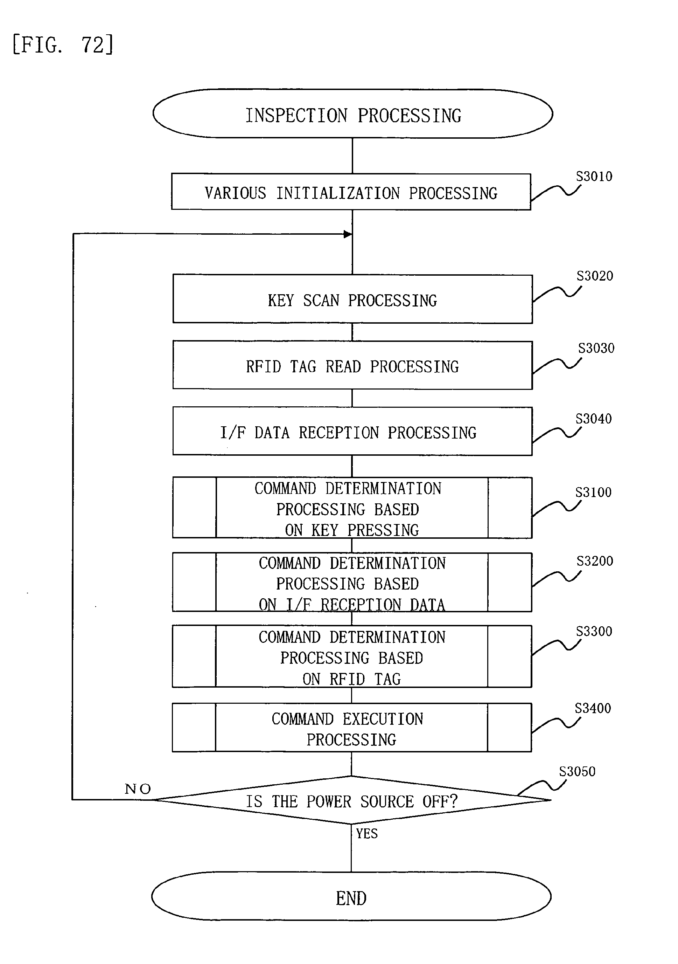

The control procedure of the inspection processing shown in FIG 72 is executed by the control circuit 110 provided in the label producing apparatus 1 of the present embodiment, at the time the inspection is executed.

In FIG 72, first in step S3010, the count value of the keypress counter and other various data described later are initialized.

Next, the flow proceeds to step S3020 where an operation signal of the operation devices (the power key 14 and the cutter driving key 90 in this example, as described above) of the label producing apparatus 1 is inputted, and key scan processing configured to detect which operation device was operated is performed.

Then, in step S3030, information acquisition processing (tag read processing) from the RFID circuit element T for information acquisition of the RFID tag (where the inspection command signal is stored in advance; details described later) of an external device is performed using the loop antenna LC2 for information acquisition.

Specifically, first a switching control signal is outputted to the switching circuit 86 via the input/output interface 113 so as to connect the common antenna device 240 and the loop antenna LC2 for information acquisition. Then, a control signal is outputted to the transmission circuit 306 via the input/output interface 113, and an interrogation wave subjected to predetermined modulation is sent as an inquiry signal for acquiring the command signal stored in the RFID circuit element To for information acquisition provided in the RFID tag to the RFID circuit element To for information acquisition to be read via the loop antenna LC2 for information acquisition. Subsequently, a reply signal (including the command signal) sent from the RFID circuit element To for information acquisition in response to the inquiry signal is received via the loop antenna LC2 for information acquisition, and incorporated and acquired via the reception circuit 307 and the input/output interface 113.

Subsequently, in step S3040, an operation signal from the PC 118 is inputted (received) via the input/output interface 113.

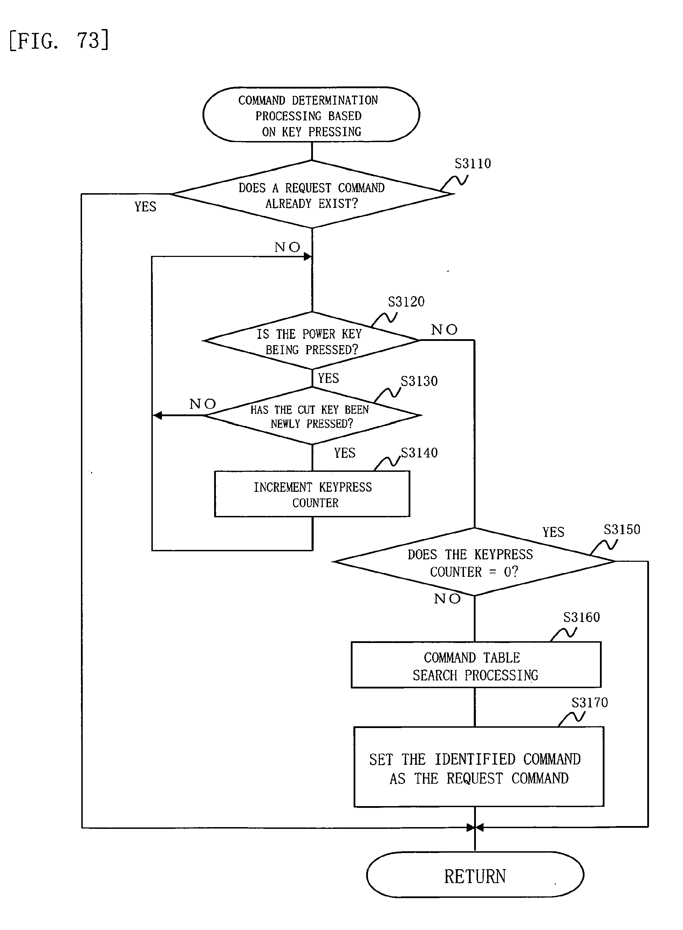

Then, in step S3100, command determination processing based on key pressing corresponding to the scan result of the key scan processing of the step S3020 is executed (for details, refer to FIG 73 described later).

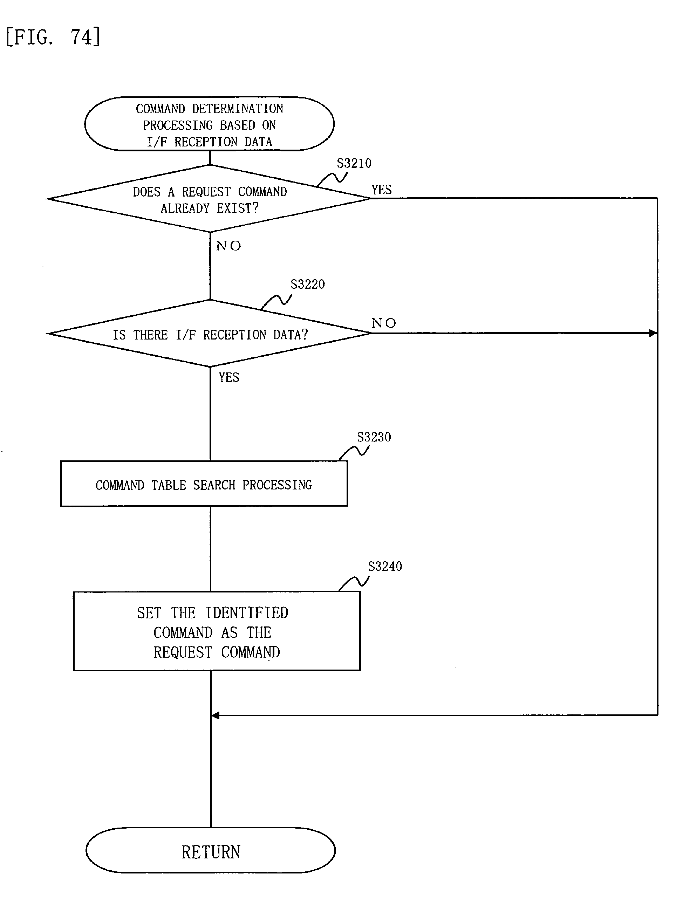

Next, in step S3200, command determination processing based on I/F reception data corresponding to the interface data reception processing result of the step S3040 is executed (for details, refer to FIG 74 described later).

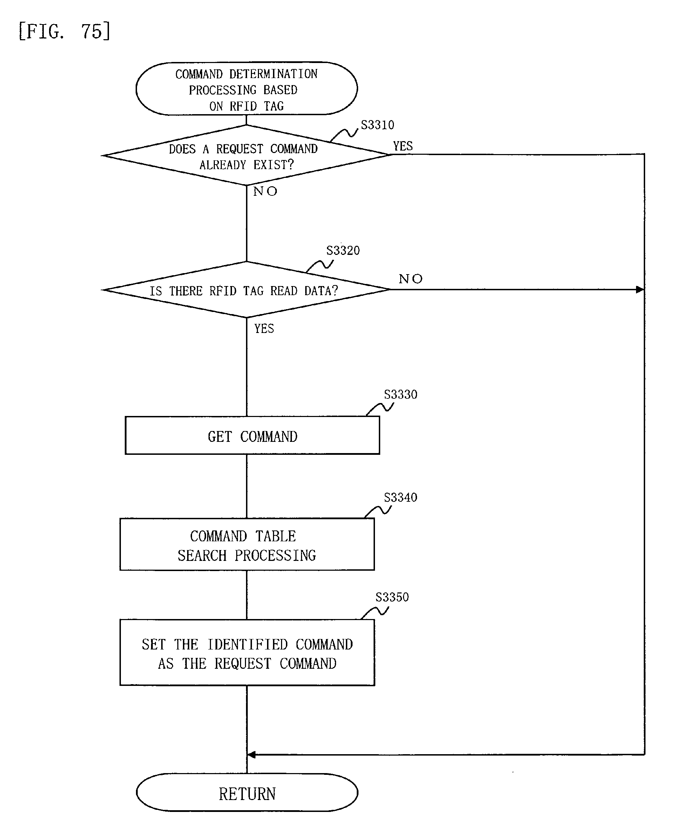

Subsequently, in step S3300, command determination processing based on the RFID tag corresponding to the tag read processing result of the step S3030 is executed (for details, refer to FIG 75 described later).

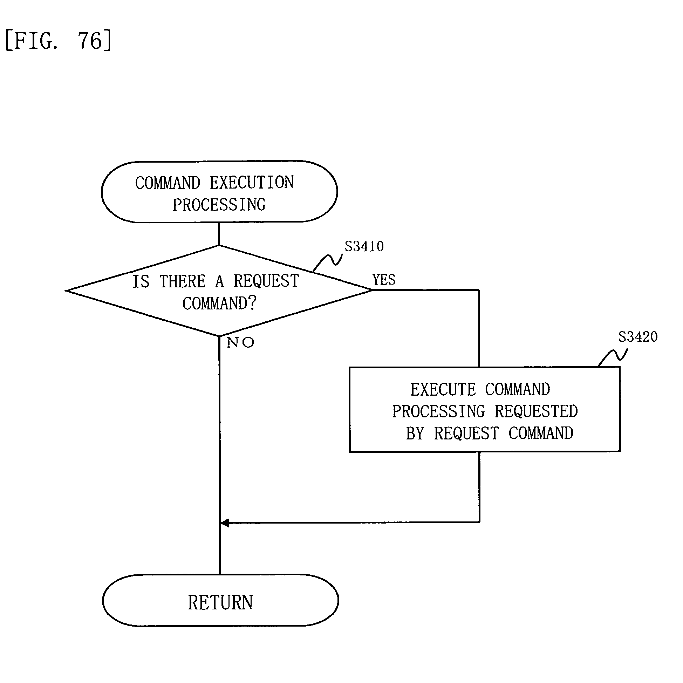

Then, in step S3400, based on the processing result of the step S3100, step S3200, and step S3300, the processing corresponding to the content of the command signal determined by one of these steps is executed; for details, refer to FIG 76).

Subsequently, in step S3050, the decision is made as to whether or not the apparatus power source of the label producing apparatus 1 is OFF and, if so, the condition is satisfied, and the flow ends. If the apparatus power source remains ON, the condition is not satisfied, the flow returns to step S3020, and the same procedure is repeated.

A detailed procedure of the step S3100 of FIG 1 is shown in FIG 73.

In FIG 73, first in step S3110, the decision is made as to whether or not the request command has already been determined in other processing (in the command determination processing based on interface reception data in step S3200, or the command determination processing based on the RFID tag in step S3300). If the request command has been determined in other processing, the decision is made that the condition is satisfied, and the flow ends. If the request command has not been determined in other processing, the decision is made that the condition is not satisfied, and the flow proceeds to the next step S3120.

In step S3120, the decision is made as to whether or not the power key 14 of the label producing apparatus 1 is being pressed, based on the result of the scan processing of the step S3020. If the power key 14 is being pressed, the decision is made that the condition is satisfied, and the flow proceeds to step S3130.

In step S3130, the decision is made as to whether or not the cutter driving key 90 of the label producing apparatus 1 has been newly pressed. If the cutter driving key 90 has not been newly pressed, the decision is made that the condition is not satisfied, the flow returns to step S3120, and the same procedure is repeated. If the cutter driving key 90 has been newly pressed, the decision is made that the condition is satisfied, the flow proceeds to step S3140 where the count value of the keypress counter (provided in the control circuit 110, for example) is incremented by one, the flow returns to step S3120, and the same procedure is repeated.

On the other hand, in step S3120, in a case where the power key 14 of the label producing apparatus 1 has not been pressed, the decision is made that the condition is not satisfied, and the flow proceeds to step S3150. In step S3150, the decision is made as to whether or not the count value of the keypress counter is zero. In a case where the count value is zero, the decision is made that the condition is satisfied, and the routine ends. In a case where the count value is not zero, the decision is made that the condition is not satisfied, and the flow proceeds to step S3160.

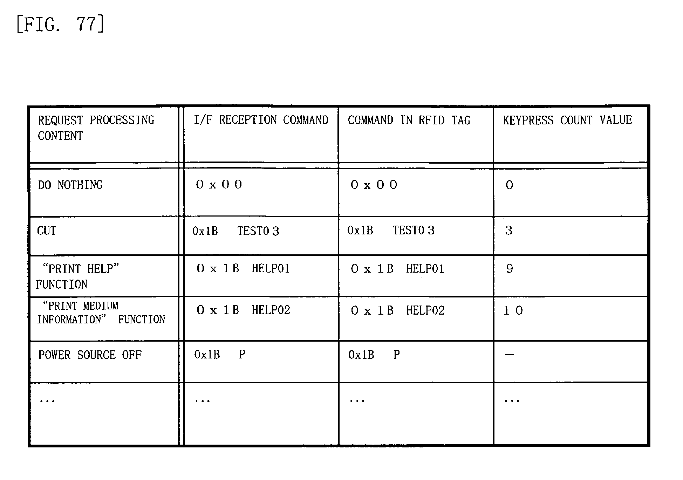

In step S3160, a command table search is performed based on the keypress count value (equivalent to the third command signal for providing instructions to at least one operation device) determined in the step S3150 and, in step S3170, the corresponding request command is determined. At this time, the count value and the request command type are stored within the control circuit 110, for example, in advance in a predetermined form of correlation (such as a table, for example; refer to FIG 77 described later). In step S3170, the command of the content corresponding to the keypress count value determined in the step S3150 is determined based on the search result of the step S3160. Once the request command is determined, the routine ends.

A detailed procedure of the step S3200 of FIG 1 is shown in FIG 74.

In FIG 74, first in step S3210, the decision is made as to whether or not the request command has already been determined in other processing (in the command determination processing based on key pressing in step S3200, or the command determination processing based on the RFID tag in step S3300). If the request command has been determined in other processing, the decision is made that the condition is satisfied, and the flow ends. If the request command has not been determined in other processing, the decision is made that the condition is not satisfied, and the flow proceeds to the next step S3220.

In step S3220, the decision is made as to whether or not an operation signal for executing inspection processing has been inputted (received) from the PC 118 in the input/output interface 113, based on the data reception result of the step S3040. If an operation for executing inspection processing has not been performed, the decision is made that the condition is not satisfied, and the routine ends. If an operation for executing inspection processing has been performed, the decision is made that the condition is satisfied, and the flow proceeds to step S3230.

In step S3230, a command table search is conducted based on the command signal inputted in the step S3220 and, in step S3240, the corresponding request command is determined. That is, similar to the above, the command signal and request command type from the PC 118 are stored within the control circuit 110, for example, in advance in a predetermined form of correlation (such as a table similar to that described above, for example; refer to FIG 77 described later). In step S3240, the command of the content corresponding to the command signal identified in the step S3220 is determined based on the search result of the step S3230. Once the request command is determined, the routine ends.

A detailed procedure of the step S3300 of FIG 1 is shown in FIG 75.

In FIG 75, first in step S3310, the decision is made as to whether or not the request command has already been determined in other processing (in the command determination processing based on key pressing in step S3200, or the command determination processing based on interface reception data in step S3200). If the request command has been determined in other processing, the decision is made that the condition is satisfied, and the flow ends. If the request command has not been determined in other processing, the decision is made that the condition is not satisfied, and the flow proceeds to the next step S3320.

In step S3320, the decision is made as to whether or not information (read data) has been read from the RFID tag to be read, based on the reading result of the RFID tag in the step S3030. If the information has not been read, the decision is made that the condition is not satisfied, and the routine ends. If the information has been read, the decision is made that the condition is satisfied, and the flow proceeds to step S3330.

In step S3330, the command signal (for executing inspection processing) is extracted and acquired from within the information read in the step S3320.

Subsequently, the flow proceeds to step S3340 where a command table search is conducted based on the command signal acquired in the step S3330 and, in step S3350, the corresponding request command is determined. That is, similar to the above, the command signal and request command type from the RFID tag are stored within the control circuit 110, for example, in advance in a predetermined form of correlation (such as a table similar to that described above, for example; refer to FIG 77 described later). In step S3350, the command of the content corresponding to the command signal acquired in the step S3330 is determined based on the search result of the step S3340. Once the request command is determined, the routine ends.

A detailed procedure of the step S3400 of FIG 1 is shown in FIG 76.

In FIG 76, first in step S3410, the decision is made as to whether or not the request command has been determined in the command determination processing based on key pressing in the step S3100, the command determination processing based on interface reception data in step S3200, or the command determination processing based on the RFID tag in step S3300. If the request command has not been determined, the decision is made that the condition is not satisfied, and the flow ends. In a case where the request command has been determined in one of the processes, the decision is made that the condition is satisfied, and the flow proceeds to step S3420.

In step S3420, a control signal (or driving signal) corresponding to the request command is outputted to the target operation device (or driving device) of the determined request command, and the routine ends.

An example of the above-described command table is shown in FIG 77.

In FIG 77, a "Cut" function configured to cut the label tape 109 with print (or automatically feed a predetermined distance and then cut the label tape 109 with print), a "Print HELP" function configured to print the function description information of the label producing apparatus 1, and a "Print medium information" function configured to print the tape attribute information of the base tape 101 and the cover film 103, etc., are provided as the content of the command processing requested for inspection processing execution in this example. To each of the functions in the figure is assigned in corresponding columns a command signal "(interface reception command") inputted from the PC 118 via the interface 113, a command signal ("command with RFID tag") read from the RFID tag (inspection RFID tag Tm in this example), and a count value of the keypress counter ("keypress count value") (i.e., the functions are standardized as substantially equivalent command signals providing instructions for the identical operation).

For example, the "Cut" function is assigned the command signal "0x1B TEST03" inputted from the PC 118 via the interface 113, the command signal "0x1B TEST03" read from the RFID tag, and the count value "3" of the keypress counter. As a result, in a case where the command signal "0x1B TEST03" is inputted from the PC 118 via the interface 113, or in a case where the command signal "0x1B TEST03" is read from the RFID circuit element To of the detection RFID tag Tm, or in a case where the count value of the keypress counter is "3," the final request command is (commonly) set to "Cut" (refer to step S3170, step S3240, and step S3350).

Similarly, in a case where the command signal "0x1B HELP01" is inputted from the PC 118 via the interface 113, or in a case where the command signal "0x1B HELP01" is read from the RFID circuit element To of the detection RFID tag Tm, or in a case where the count value of the keypress counter is "9", the request command is (commonly) set to "Print HELP" (refer to step S3170, step S3240, and step S3350).

Similarly, in a case where the command signal "0x1B HELP02" is inputted from the PC 118 via the interface 113, or in a case where the command signal "0x1B HELP02" is read from the RFID circuit element To of the detection RFID tag Tm, or in a case where the count value of the keypress counter is "10", the request command is (commonly) set to "Print medium information" (refer to step S3170, step S3240, and step S3350).

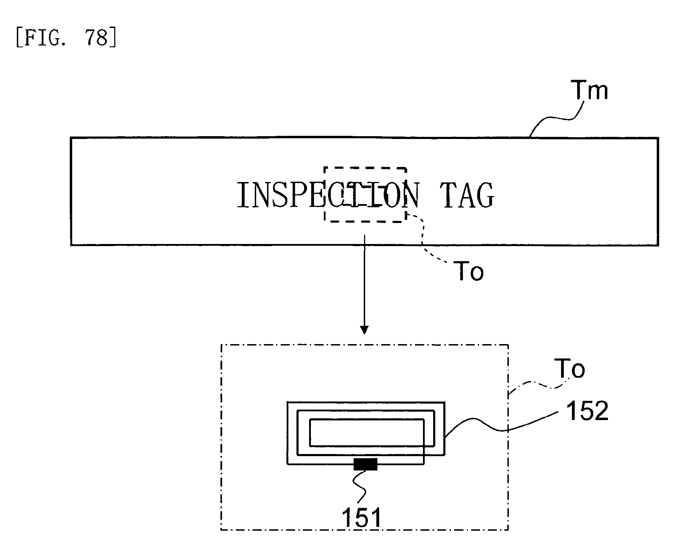

An outer appearance diagram illustrating an example of an RFID tag comprising the RFID circuit element To for information acquisition, is shown in FIG 78.

In FIG 78, the detection RFID tag Tm comprises the above-described RFID circuit element To for information acquisition. This RFID circuit element To, similar to the above, comprises the IC circuit part 151 and the antenna 152. The detection RFID tag Tm can be configured by providing the RFID circuit element To via a suitable protecting member in a card-shaped board, for example, but may be created as an RFID label T according to the label producing apparatus 1 of the above-described embodiment 6.

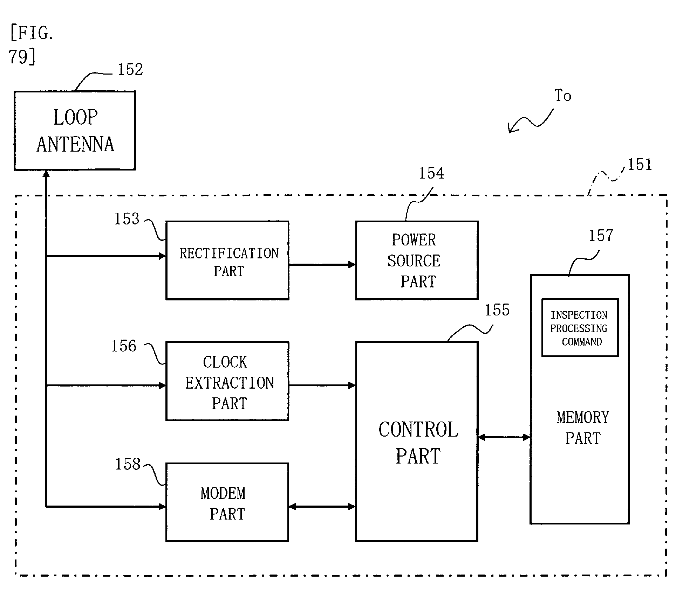

A functional configuration of the RFID circuit element To of the inspection RFID tag Tm, is shown in FIG 79 (corresponds to the aforementioned FIG 7). Note that the parts identical to those in FIG 7 are denoted using the same reference numerals, and descriptions thereof will be suitably omitted.

As shown in FIG 79, the IC circuit part 151 of the RFID circuit element To of the inspection RFID tag Tm comprises, similar to the above, the rectification part 152, the power source part 154, the control part 155, the clock extraction part 156, the modem part 158, and the memory part 157. The memory part 157 stores in advance and maintains the previously described command signals for inspection processing.

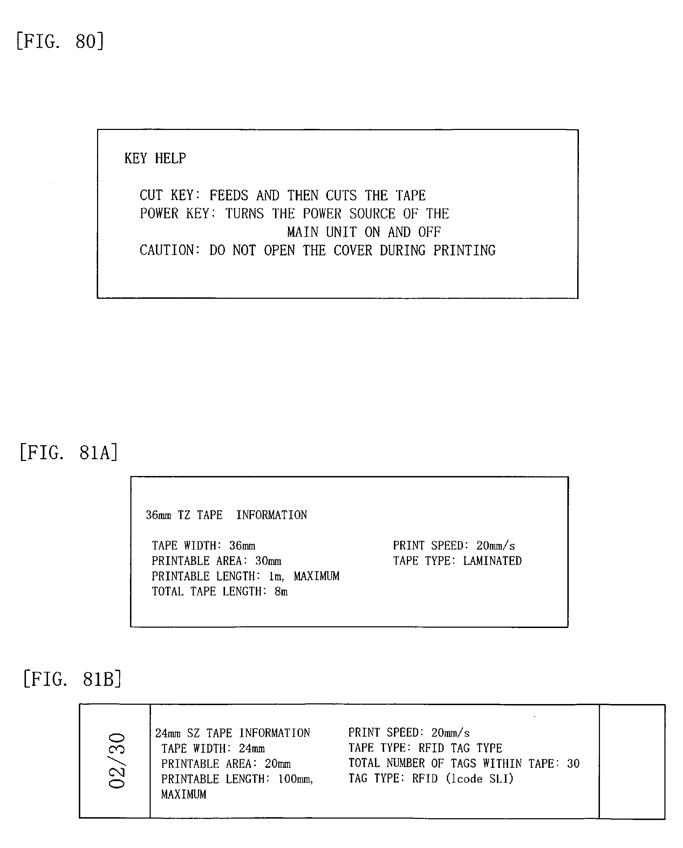

An example of the processing actually executed in the label producing apparatus 1 according to inspection processing execution, is shown in FIG 80. Further, FIG 80 illustrates a printing example of a printed item (the regular label L or the RFID label T, for example) when the "Print HELP" command shown in FIG 77 is executed. As shown in FIG 80, guidance information (function description information) for the operator that pertains to key operations is printed in this example. This function description information is set and stored in advance in the control circuit 110, and this stored print data is printed. With the patterned print data stored in advance, "Print HELP" is simply executed.

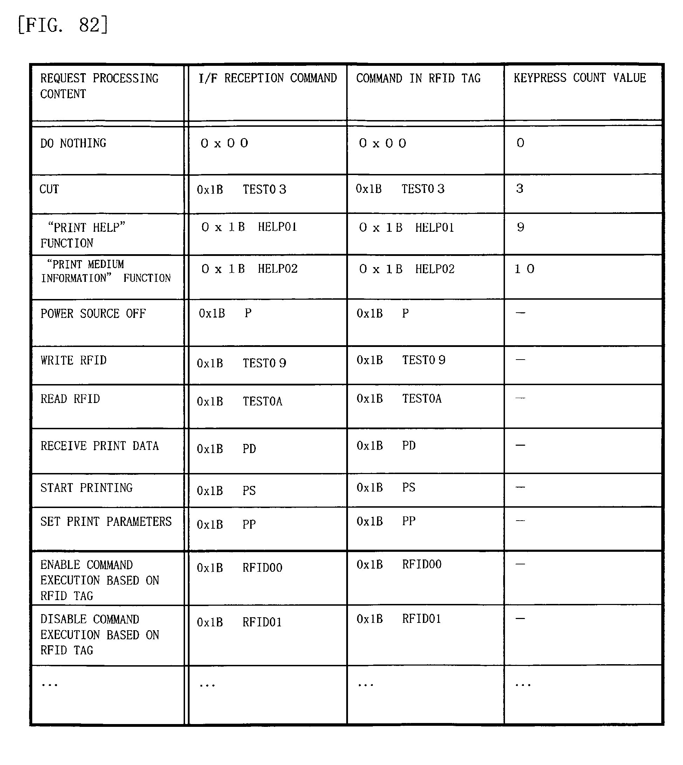

Other examples of processing actually executed in the label producing apparatus 1 according to inspection processing execution, is shown in FIG 81A and FIG 81B. Further, FIGS. 81A and 82A illustrate printing examples of printed items (the regular label L or the RFID label T, for example) when the "Print medium information" command shown in FIG 77 is executed. In the example shown in FIG 81A, tape attribute information such as the tape type [the bonding type (laminated type) for regular labels not comprising an RFID circuit element To], tape width (36mm), corresponding printing speed (20mm), and print area length (30mm) is printed (in this example, an ordinary L on which that information is printed is formed on the tape). In the example shown in FIG 81B as well, tape attribute information such as the tape type (RFID label tape comprising an RFID circuit element To), tape width (24mm), corresponding printing speed (20mm), and print area length (20mm) is similarly printed (in this example, an RFID label T on which that information is printed is formed on the tape). Note that the disposed pitch of the base tape 101 of the RFID circuit element To may also be printed.

Furthermore, during execution of the above "Print medium information," the present invention is not limited to print corresponding to tape attribute information as described above, but may print the print corresponding to the cartridge type detected by the cartridge sensor 81.

In embodiment 6 configured as described above, the various operations for inspection processing (the print HELP, print medium information, cut processing, etc., in the above example) are performed on the corresponding devices (the print head 23, the cutting mechanism 15, etc., in the above example) at the time of inspection of the label producing apparatus 1 (including various inspections and testing such as maintenance and pre-shipment inspections). At this time, the command for performing such an operation is either inputted via the input/output interface from the PC 118 via wired communication (or based on operation of the key 14, 19, etc., of the label producing apparatus 1) or via wireless communication using the detection RFID tag Tm.

That is, the command signal for instructing the operation device to perform an operation may be inputted not only in wired form from the PC 118 (or based on operation of the keys 14, 90, etc., of the label producing apparatus 1) but also in wireless form based on the detection RFID tag Tm. In the case of wireless form, compared to a case where a command signal is generated from a complex operation using the PC 118 (or the keys 14, 90, etc.), the simple operation of reading the RFID tag Tm is sufficient. That is, the operator does not need to perform a complex operation using the keys, buttons, and switches of the PC 118 in order to generate a command signal, thereby reducing operation labor.

Further, particularly in the present embodiment, when the command signals are respectively inputted in a plurality of command inputting forms (in this example, operation of the PC 118 via the input/output interface 113, reading from the RFID tag TM, and operation of the keys 14 and 90), these command signals (at least in part) are given as identical common command signals that provide the same operation instructions to the same operation devices (refer to "I/F RECEPTION COMMAND" and "COMMAND IN RFID TAG" of FIG 77). With this arrangement, compared to the use of separate commands, the number of types of command signals handled for the purpose of control in the control circuit 110 decreases. In this case, the correlation table shown in FIG 77 is provided so as to replace those instructions among the "I/F RECEPTION COMMAND, "COMMAND IN RFID TAG" and "KEYPRESS COUNT VALUE" which differ in signal form but provide the same operation instructions to the same operation device with a single common corresponding command (for example, "0x1B TEST03" and count value "3" → "Cut" command). That is, even if the command signal forms and formats differ, the commands can be established as common commands having substantially the same function by replacing the commands using the correlation table.

Note that various modifications may be made according to the present embodiment without departing from the spirit and scope of the present invention, in addition to embodiment 6. Description will be made below regarding such modifications.

### (6-1) Examples of other common commands

While the above described an illustrative scenario in which "Cut" "Print HELP" and "Print medium information" were used as examples of request commands standardized for inspection processing execution using the correlation table of FIG 77, the present invention is not limited thereto. As shown in FIG 82, commands related to the loop antenna LC 1 for label production, such as "Write RFID" and "Read RFID," and commands related to the print head 23 such as "Receive print data," "Start printing," and "Set print parameters," may be replaced and standardized as described above. As shown in the figure, the disabling and enabling of reading information from the RFID tag Tm via the loop antenna LC2 for information acquisition ("Enable" "Disable") may be prepared as commands as well. These various commands may be suitably used during the above-described inspection of the label producing apparatus 1 (maintenance inspection after product purchase, inspection prior to product shipment, etc.) as well as applied to the various operation control processes performed during label production that were described using FIG 16, etc., in each of the above embodiments.

### (6-2) Other

The present embodiment may also be applied to a configuration where the tapes are not bonded to each other, as in modification (1-4) of the above embodiment 1. In these cases as well, similar to the above, the effect of reducing the operation labor burden of the operator is achieved.

Furthermore, similar to the above, rather than providing the loop antenna LC 1 for label production and the loop antenna LC2 for information acquisition separately, the design may be constructed so that the two are provided as a common loop antenna. Further, the present embodiment can also be applied to a case where an RFID label T is created by reading RFID tag information from a read-only RFID circuit element To for label production in which predetermined RFID tag information is stored in advance in a non-erasable manner, and printing print corresponding to the RFID tag information thus read. In this case as well, the same effect as that above is achieved.

Additionally, other than those previously described, approaches according to the respective embodiments and exemplary modifications may be utilized in combination as appropriate.

Note that various modifications which are not described in particular can be made according to the present invention without departing from the spirit and scope of the present invention.

## Claims

1. A tag label editing apparatus for producing a tag label (T) by cutting at a predetermined cutting position (CL) or partially cutting at a predetermined half-cutting position (HC2) a tag tape (101; 101'; 101") in the thickness direction wherein an RFID circuit element (To) comprising an IC circuit part (151) that stores information and a tag antenna (152) that transmits and receives information is disposed, comprising:
tape attribute information acquisition means (5515; S615) that acquires the tape attribute information of said tag tape (101; 101'; 101") provided in an RFID circuit element cartridge (7; 7'; 7") installed using a cartridge holder (6); and
cutting/half-cutting area determining means (S525; S625) that determines a cuttable/half-cuttable area (Sc; Se) of said tag tape (101; 101'; 101") wherein at least one cutting position (CL) or at least one half-cutting position (HC2) can be set, based on said tape attribute information acquired by said tape attribute information acquisition means (S515; 5615).

2. The tag label editing apparatus (118) according to claim 1,
wherein said cutting/half cutting area determining means (S525) determines said cuttable/half-cuttable area (Sc) of said tag tape (101; 101'; 101") wherein a plurality of said cutting positions (CL) or a plurality of said half-cutting positions (HC2) can be set.

3. The tag label editing apparatus (118) according to claim 1 or 2,
wherein said cutting/half-cutting area determining means (S525) determines said cuttable/half-cuttable area (Sc) according to the value of a predetermined fixed pitch of said RFID circuit element (To) disposed at said fixed pitch in said tag tape (101; 101'; 101").

4. The tag label editing apparatus (118) according to one of claims 1 to 3,
wherein said cutting/half-cutting area determining means (S525) determines said cuttable/half-cuttable area (Sc) so that there is no overlap in the label thickness direction with the disposed position of said RFID circuit element (To).

5. The tag label editing apparatus (118) according to one of claims 1 to 4,
wherein said tag label editing apparatus (118) further comprises first display means (118a) that displays an image of said cuttable/half-cuttable area (Sc) of said tag label (T) to be produced, according to the determination result of said cutting/half-cutting area determining means (S525).

6. The tag label editing apparatus (118) according to one of claims 1 to 5,
wherein said cutting/half-cutting area determining means (S525) determines said cuttable/half-cuttable area (Sc) so as to produce a tag label (T) that includes the number "n" of said RFID circuit elements (To), where "n" is an integer equal to or larger than 1; and
said first display means (118a) displays an image of said tag tape (101; 101'; 101") having a length corresponding to said "n" times said fixed pitch, including said cuttable/half-cuttable area (Sc).

7. The tag label editing apparatus (118) according to one of claims 1 to 6,
wherein said cutting/half-cutting area determining means (S525) determines said cuttable/half-cuttable area (Sc) so as to produce a tag label (T) that includes a plurality of said RFID circuit elements (To); and
said first display means (118a) displays an image of said tag tape (101; 101'; 101 ") having a length corresponding to a plurality of times said fixed pitch, including said cuttable/half-cuttable area (Sc).

8. The tag label editing apparatus (118) according to any one of claims 5 to 7,
wherein said tag label editing apparatus (118) further comprises:
first cutting position/half-cutting position operation means (118b) for setting said cutting position (CL) of cutting means (15) or said half-cutting position (HC2) of said half-cutting means (35) in said tag label (T) to be produced; and
first cutting position/half-cutting position setting means (S565) that sets said cutting position (CL) or half-cutting position (HC2) in said cuttable/half-cuttable area (Sc) determined by said cutting/half-cutting area determining means (S525), according to the setting operation of said first cutting position/half-cutting position operation means (118b); wherein:
said first display means (118a) displays a cutting position image or a half-cutting position image corresponding to the setting result of said first cutting position/half-cutting position setting means (S565).

9. The tag label editing apparatus (118) according to claim 8,
wherein said first cutting position/half-cutting position setting means (S565) substantially prohibits the setting of said cutting position (CL) or half-cutting position (HC2) outside said cuttable/half-cuttable area (Sc) by said first cutting position/half-cutting position operation means (118b).

10. The tag label editing apparatus (118) according to any one of claims 1 to 9,
wherein said tag label editing apparatus (118) further comprises first print area determining means (S45, S55) that determines the printable area of printing means (23) on said tag tape (101'; 101") or a print-receiving tape (103) bonded to said tag tape (101).

11. The tag label editing apparatus (118) according to claim 10,
wherein said first display means (118a) displays a print image of said printing means (23) of said tag label (T) to be produced, according to the determination result of said first print area determining means (S45, S55).

12. The tag label editing apparatus (118) according to one of claims 1 to 11,
wherein said cutting/half-cutting area determining means (S625) determines said cuttable/half-cuttable area (Se) wherein a plurality of said cutting positions (CL) or a plurality of said half-cutting positions (HC2) is set at a uniform interval, based on said tape attribute information acquired by said tape attribute information acquiring means (S615).

13. The tag label editing apparatus (118) according to claim 12,
wherein said tag label editing apparatus (118) further comprises:
second cutting position/half-cutting position operation means (118b) for setting said plurality of cutting positions (CL) or said plurality of half-cutting positions (HC2) at said uniform interval in said tag label (T) to be produced; and
second cutting position/half-cutting position setting means (S665) that sets said plurality of cutting positions (CL) or said plurality of half-cutting positions (HC2) at said uniform interval in said cuttable/half-cuttable area (Se) determined by said cutting/half cutting area determining means (S625), according to the setting operation of said second cutting position/half-cutting position operation means (118b).

14. The tag label editing apparatus (118) according to claim 13,
wherein said tag label editing apparatus (118) further comprises second display means (118a) that displays an image of said cuttable/half-cuttable area (Se) and said plurality of cutting positions (CL) or said plurality of half-cutting positions (HC2) in said tag label (T) to be produced, according to the determination result of said cutting/half cutting area determining means (S625) and the setting result of said second cutting position/half-cutting position setting means (S665).

15. A tag label producing apparatus (1) for producing said tag label (T) based on the editing result of the tag label editing apparatus according to claim 1, comprising:
said cartridge holder (6) that enables installation and removal of said RFID circuit element cartridge (7; 7'; 7");
feeding means (108) for feeding said tag tape (101; 101'; 101") supplied from said RFID circuit element cartridge (7; 7'; 7");
communication means (LC1) for transmitting and receiving information via wireless communication to and from said RFID circuit element (To);
a cutter (15) that cuts said tag tape (101; 101'; 101") at said predetermined cutting position (CL) or half-cutting means (35) that partially cuts said tag tape (101; 101'; 101") in the thickness direction at said predetermined half-cutting position (HC2);
cartridge detecting means (81) that detects the type of said cartridge (7; 7'; 7") loaded to said cartridge holder (6); and
coordinated control means that controls in coordination at least said feeding means (108) and said cutter (15) or said half-cutting means (35), according to the editing result of said tag label (T).

16. The tag label producing apparatus (1) according to claim 15,
wherein said cartridge holder (6) enables installation and removal of said RFID circuit element cartridge (7; 7'; 7") wherein a mark (PM) to be detected corresponding to the disposed position of said RFID circuit element (To) disposed in said tag tape (101; 101'; 101") is provided on said tag tape (101'; 101") or said print-receiving tape (103) bonded to said tag tape (101);
said tag label producing apparatus (1) further comprises mark detecting means (127) that detects said mark (PM) to be detected is provided; and
said coordinated control means controls in coordination at least said feeding means (108) and said cutter (15) or said half-cutting means (35), according to the editing result of said tag label (T) and the detection result of said mark detecting means (127).

17. The tag label producing apparatus (1) according to claim 15 or 16,
wherein said tag label producing apparatus (1) further comprises at least one of first display means (118a) that displays an image of said cuttable/half-cuttable area (Sc) of said tag label (T) to be produced, and said cutting/half-cutting area determining means (S525).

18. The tag label producing apparatus (1) according to any one of claims 15 to 17,
wherein said coordinated control means controls in coordination at least said feeding means (108) and said cutter (15) or said half-cutting means (35) according to the editing result of said tag label (T) to be produced by using first cutting position/half-cutting position setting means (S565) that sets a cutting position (CL) or a half-cutting position (HC2) in said cuttable/half-cuttable area (Sc) determined by said cutting/half-cutting area determining means (S525), according to the setting operation of first cutting position/half-cutting position operation means (118b) for setting said cutting position (CL) of said cutter (15) or said half-cutting position (HC2) of said half-cutting means (35) in said tag label (T).

19. The tag label producing apparatus (1) according to claim 18,
wherein said coordinated control means substantially prohibits a cutting operation of said cutter (15) or a half-cutting operation of said half-cutting means (35) at said cutting position (CL) in a case where said cutting position (CL) or said half-cutting position (HC2) has been set outside said cuttable/half-cuttable area (Sc) by said first cutting position/half cutting position operation means (118b).

20. The tag label producing apparatus (1) according to claim 18 or 19,
wherein said tag label producing apparatus (1) further comprises at least one of said first cutting position/half-cutting position operation means (118b) and said first cutting position/half-cutting position setting means (S565).
